# FASCICULE DE BREVET EUROPEEN

(11) **EP 3 210 346 B1**
(45) Date de publication et mention de la délivrance du brevet: **12.12.2018**
(21) Numéro de dépôt: 15781098.7
(22) Date de dépôt: 15.10.2015
(51) Int. Cl.: H04L 12/741, H04L 12/707, H04L 29/06

(54) **PROCÉDÉ DE CRÉATION D'UN SOUS FLUX DE PAQUETS DE DONNÉES**
VERFAHREN ZUR ERZEUGUNG EINES TEILSTROMS VON DATENPAKETEN
METHOD OF CREATING A SUBSTREAM OF DATA PACKETS

(30) Priorité: 20.10.2014 FR 1460060
(43) Date de publication de la demande: 30.08.2017
(73) Titulaire: Sagemcom Broadband SAS, 92500 Rueil-Malmaison (FR)
(72) Inventeur: ROCQUELAY, Antonie, F-92500 Rueil Malmaison (FR); LALAM, Massinissa, F-92500 Rueil Malmaison (FR); VANKIEKEN, Nicolas, F-92500 Rueil Malmaison (FR)
(74) Mandataire: Cabinet Le Guen Maillet
(86) Numéro de dépôt international: PCT/EP2015/073862
(87) Numéro de publication internationale: WO 2016/062606

(56) Documents cités:
- WO-A1-2011/153415
- WO-A1-2013/061115

## Description

La présente invention concerne un procédé et un dispositif de création d'un sous flux de paquets de données complémentaire en complément d'un sous flux de paquets de données existant dans une connexion réseau utilisant un protocole de transport adapté à un mode de communication multi-lien.

Ces dernières décennies ont vu un accroissement rapide d'applications sur réseaux de communication, d'abord sur des réseaux filaires, puis, plus récemment, sur des réseaux sans-fils. Très rapidement, des besoins de fiabilisation des communications se sont fait sentir. Au début des années quatre-vingt, un protocole de transmission fut proposé pour assurer une fiabilisation des transmissions. Ce protocole, appelé TCP (RFC-793, Protocole de contrôle de transport : « Transport Control Protocol » en terminologie anglo-saxonne) propose plusieurs mécanismes de fiabilisation. Parmi ces mécanismes de fiabilisation, on trouve un mécanisme de contrôle de congestion permettant d'assurer un partage équitable de bande passante entre différentes applications utilisant un même réseau de communication et un mécanisme de contrôle d'erreur assurant un transport fiable de chaque donnée transmise. Les données étant transmises sous la forme d'une suite ordonnée de paquets, une réception désordonnée des paquets transmis est identifiée comme une erreur de transmission par le mécanisme de contrôle d'erreur, chaque erreur de transmission provoquant une réaction du mécanisme de contrôle de congestion se traduisant en général par une réduction d'un débit de transmission des données. Le protocole TCP s'est largement répandu sur les réseaux, au point que ce protocole est maintenant considéré comme essentiel pour assurer une stabilité globale des réseaux de communication.

Le protocole TCP fut défini en considérant des applications existantes à l'époque de sa création. Le protocole TCP n'a donc pas pris en compte une apparition récente d'applications de communication sur des appareils mobiles, ni qu'un même appareil puisse communiquer simultanément sur plusieurs liens de communication comme des liens filaires (Ethernet, IEEE1394) et/ou des liens sans fils (Wi-Fi, 3G, 4G, Bluetooth) selon un mode de communication multi-lien (« multi-path » en terminologie anglo-saxonne), chaque lien étant associé à une adresse IP (RFC 791 : Protocole Internet : « Internet Protocol » en terminologie anglo-saxonne) qui lui est propre. Les mécanismes de fiabilisation du protocole TCP ne sont pas adaptés au mode de communication multi-lien, car ce mode de communication sur plusieurs liens peut provoquer des réceptions désordonnées de paquets qui seraient faussement interprétées comme des erreurs de transmission par les mécanismes de fiabilisation de TCP.

Récemment, un nouveau protocole permettant à des appareils de communication de bénéficier d'un mode de communication multi-lien a été défini. Ce protocole, appelé MPTCP (RFC-6824, TCP multi-liens : « Multi-path TCP » en terminologie anglo-saxonne), peut être vu comme une évolution du protocole TCP. Le protocole MPTCP a été défini en prenant en compte deux exigences majeures : compatibilité avec les applications et compatibilité vis-à-vis du réseau.

La compatibilité des applications implique que des applications fonctionnant avec le protocole TCP doivent pouvoir fonctionner sans modification avec le protocole MPTCP.

La compatibilité vis-à-vis du réseau implique que le protocole MPTCP doit pouvoir fonctionner sur n'importe quel lien réseau sur lequel fonctionne TCP. Beaucoup de liens réseau comprennent des Composants Réseaux Intermédiaires (CRI) (« middleboxes » en terminologie anglo-saxonne) tels que des traducteurs d'adresses réseaux (NAT : «Network Address Translater » en terminologie anglo-saxonne), des pare-feux (« firewall » en terminologie anglo-saxonne), des proxys, des passerelles internet (« Gateway » en terminologie anglo-saxonne), etc. Les CRI peuvent être positionnés dans un réseau local de type LAN (« Local Area Network » en terminologie anglo-saxonne) ou dans un réseau étendu de type WAN (« Wide Area Network » en terminologie anglo-saxonne). A la différence des routeurs, lorsqu'un trafic TCP transite par un CRI, le CRI est capable de reconnaître le trafic TCP. Cette connaissance permet au CRI d'appliquer des traitements particuliers aux trafics TCP, tels que des mécanismes de traitement ou de transfert accélérés mis en oeuvre en général par des accélérateurs matériels. Le protocole MPTCP doit pouvoir bénéficier des mêmes mécanismes de traitement ou de transfert accélérés que le protocole TCP.

Le protocole MPTCP est soumis à certaines limitations. Par exemple, une caractéristique du protocole MPTCP est qu'il nécessite qu'une première unité réseau, que nous appelons « source » par la suite, et une deuxième unité réseau, que nous appelons« récepteur » par la suite, la source et le récepteur étant associés à une même connexion, supportent tous les deux le protocole MPTCP. Une telle restriction pourrait limiter l'usage du protocole MPTCP, par exemple lorsqu'une source mettant en oeuvre le protocole MPTCP souhaite communiquer avec un récepteur ne connaissant pas le protocole MPTCP, mais, par exemple, uniquement le protocole TCP.

Par ailleurs, le protocole MPTCP est particulièrement adapté lorsque le réseau reliant une source et un récepteur est constitué d'une pluralité de liens parallèles de bout en bout. Le protocole MPTCP est moins efficace lorsqu'une portion du réseau reliant la source et le récepteur est constituée d'un lien unique.

Diverses solutions ont été proposées pour contourner les restrictions précédentes. Par exemple lorsqu'au moins une portion du réseau reliant une source et un récepteur compatibles avec le protocole MPTCP est constituée d'un lien unique, une première solution consiste à encapsuler des sous flux TCP d'une connexion MPTCP, que nous appelons « sous flux MPTCP » par la suite, dans un flux unique sur la portion du réseau constituée du lien unique. Le flux unique est alors géré par un protocole de transport mono-lien, tel que TCP, les sous flux MPTCP encapsulés dans le flux unique étant considérés comme des données du flux unique. Cette première solution est en général considérée comme coûteuse en termes calculatoires, mais aussi en termes d'utilisation mémoire. En effet, elle nécessite d'une part d'encapsuler chaque paquet de chaque sous flux MPTCP, et d'autre part, de stocker chaque paquet de tous les sous flux MPTCP encapsulés tant qu'un mécanisme de contrôle d'erreur du protocole d'encapsulation n'a pas vérifié que lesdits paquets ont bien été reçus. De plus, une perte d'un paquet dans le flux unique entraîne en général une réaction globale d'un mécanisme de contrôle de congestion du protocole d'encapsulation et donc une baisse de débit dans tous les sous flux MPTCP encapsulés, alors que la perte de paquet pouvait n'affecter qu'un sous flux MPTCP parmi les sous flux MPTCP encapsulés. Par ailleurs, cette solution nécessite l'introduction dans le réseau d'au moins une unité réseau apte à réaliser des encapsulations. On peut ajouter que lors d'une encapsulation, les unités réseau aptes à réaliser des encapsulations ne mettent pas en oeuvre des mécanismes de traitement et de transfert accélérés comme les CRI classiques.

Une seconde solution permet de contourner l'incompatibilité d'une source ou d'un récepteur avec le protocole MPTCP. Cette seconde solution consiste à insérer dans un réseau une unité réseau intermédiaire, tel qu'un CRI, capable d'assurer un relais entre une connexion multi-lien telle que par exemple une connexion MPTCP et au moins une connexion mono-lien telle que par exemple une connexion TCP ou UDP. Les CRI capables d'assurer un relais entre une connexion MPTCP et au moins une connexion TCP sont connues sous l'appellation « relais TCP/MPTCP ». Un relais TCP/MPTCP est apte à mettre en correspondance un flux TCP d'une connexion TCP, que nous appelons par la suite simplement « flux TCP », avec un sous flux MPTCP. Un relais TCP/MPTCP permet ainsi à une source (resp. un récepteur) mettant en oeuvre le protocole MPTCP (que nous appellerons « source (resp. récepteur) MPTCP » par la suite) de communiquer avec un récepteur (resp. une source) mettant en oeuvre le protocole TCP (que nous appellerons « récepteur (resp. source) TCP » par la suite). Lorsqu'un relais TCP/MPTCP reçoit un paquet d'un sous flux MPTCP (que nous appellerons « paquet MPTCP » par la suite) en provenance d'une source MPTCP, le relais extrait les données contenues dans le paquet MPTCP, les insère dans un paquet d'un flux TCP (que nous appellerons « paquet TCP » par la suite), et transmet le paquet TCP en direction du récepteur TCP dans le flux TCP. Lorsqu'un relais TCP/MPTCP reçois un paquet TCP en provenance d'une source TCP, le relais extrait les données contenues dans le paquet TCP, insère ces données dans le paquet MPTCP et transmet le paquet MPTCP en direction du récepteur MPTCP dans un sous flux MPTCP Un exemple de l'art antérieur se trouve dans WO2013/061115.

L'inconvénient majeur de cette solution est de nécessiter d'installer des relais TCP/MPTCP dans les réseaux. De plus, ces relais ne mettent pas en oeuvre des accélérations de traitement et de transfert comme les CRI classiques.

Une mise en oeuvre du protocole MPTCP comporte trois phases principales:
- une phase d'établissement d'une connexion,
- une phase de transfert de paquets de données dans le cadre de la connexion établie, et,
- une phase de relâchement de la connexion.

L'établissement d'une connexion MPTCP commence par une procédure dite de poignée de mains en trois étapes (« Three way handshake » en terminologie anglo-saxonne) comportant les étapes suivantes mises en oeuvre séquentiellement:
- un envoi d'un paquet de synchronisation de la source, appelé « paquet SYN », par une source en direction d'un récepteur,
- un envoi d'un paquet de synchronisation du récepteur appelé « paquet SYN/ACK », par le récepteur en direction de la source, ce paquet assurant aussi l'acquittement du paquet de synchronisation de la source, i.e. le paquet SYN, et,
- un envoi d'un paquet d'acquittement du paquet de synchronisation de la destination (i.e. le paquet SYN/ACK), appelé « paquet ACK », par la source en direction du récepteur.

La connexion est établie lorsque le récepteur reçoit le paquet ACK. Chaque paquet transmis dans le cadre d'une connexion MPTCP est transmis dans un sous flux MPTCP. Un sous flux MPTCP est identifié par un quintuplet par sens de connexion défini lors de la phase d'établissement de connexion. Dans le sens source vers récepteur (resp. récepteur vers source), ce quintuplet comprend une adresse IP source et une adresse IP récepteur, un numéro de port source, un numéro de port récepteur et un identifiant de l'adresse IP de récepteur (resp. un identifiant de l'adresse de la source). Par la suite, par simplification, nous considérons qu'un sous flux MPTCP est identifié par un sextuplet comprenant l'adresse IP source, l'adresse IP récepteur, le numéro de port source, le numéro de port récepteur, l'identifiant de l'adresse IP de récepteur et l'identifiant de l'adresse IP de source. On notera que l'identifiant de l'adresse IP de la source et l'identifiant de l'adresse IP du récepteur permettent à la source et au récepteur de retrouver les valeurs d'adresses IP de source et de récepteur en cas de présence de traducteurs d'adresses réseaux NAT dans le réseau.

La phase de transfert de paquets de données utilise les adresses IP et les numéros de port définis lors de la phase d'établissement de la connexion. Cette phase bénéficie pleinement des mécanismes d'accélération dans les CRI.

Lors de la phase de relâchement d'une connexion, la connexion est relâchée soit de manière abrupte par échange d'un paquet de type « reset », appelé paquet « RST », soit de manière plus régulière, par échange d'un paquet de type « FIN », appelé par la suite « paquet FIN », entre la source et le récepteur.

Alors qu'une connexion selon le protocole TCP ne peut être associée qu'à un flux de données, une connexion selon le protocole MPTCP peut comporter une pluralité de sous flux MPTCP. Une application de transfert de données utilisant une connexion MPTCP peut alors à tout moment utiliser l'un quelconque des sous flux MPTCP.

L'établissement d'une connexion MPTCP comportant plusieurs sous flux MPTCP se fait en plusieurs étapes comprenant une création d'un sous flux initial, puis une création d'au moins un sous flux additionnel.

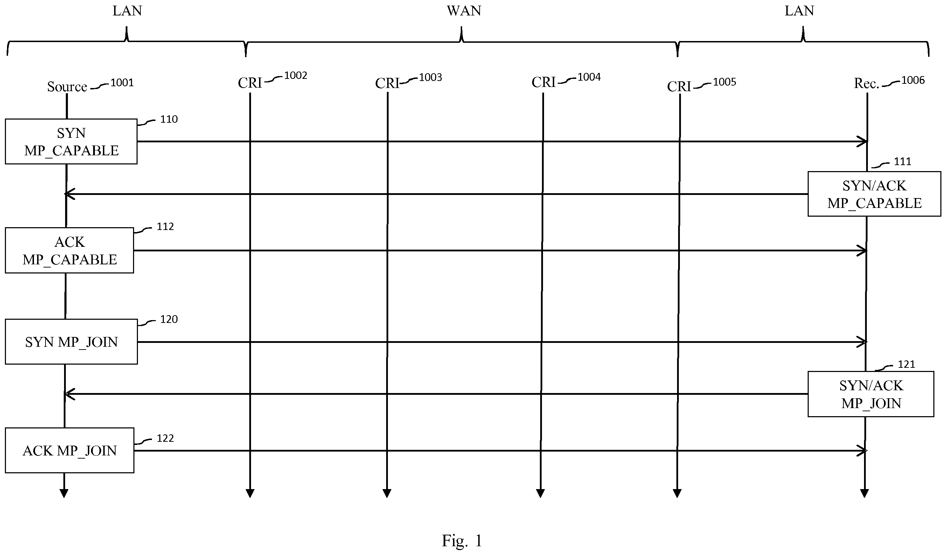

La **Fig. 1** représente schématiquement un exemple de mise en oeuvre du protocole MPTCP lors de la création d'une connexion MPTCP comportant un sous flux MPTCP initial et un sous flux MPTCP additionnel. Cette mise en oeuvre se fait dans un réseau comportant quatre CRI 1002 à 1005, une première unité réseau 1001 et une seconde unité réseau 1006 compatibles avec le protocole MPTCP. Les unités réseau 1001 et 1006 peuvent jouer alternativement un rôle de source ou de récepteur. Par la suite nous nous focalisons sur le cas où l'unité réseau 1001 joue un rôle de source et ou l'unité réseau joue un rôle de récepteur. Tous les procédés décrits par la suite sont toutefois inversibles et adaptés au cas où l'unité réseau 1001 joue le rôle d'une source et l'unité réseau 1006 joue le rôle d'une source. Nous appelons alors l'unité réseau 1001, source 1001, et l'unité réseau 1006, source 1006. La source 1001 est située dans un LAN, dit « LAN source », comprenant la source 1001 et le CRI 1002. Le récepteur 1006 est situé dans un LAN, dit « LAN récepteur » comprenant le récepteur 1006 et le CRI 1005. Les deux LAN sont connectés à un WAN comprenant les CRI 1003 et 1004. Le sous flux MPTCP initial est créé lors d'une phase d'établissement d'une connexion MPTCP. Une création du sous flux MPTCP initial met en oeuvre une procédure de poignée de mains en trois étapes 110, 111 et 112 dans lesquelles les paquets SYN, SYN/ACK et ACK comportent un entête de type MP_CAPABLE. Du point de vue du protocole MPTCP, l'entête MP_CAPABLE doit impérativement se trouver dans les paquets SYN, SYN/ACK et ACK lors de la création du sous flux MPTCP initial. Toutefois, un récepteur TCP qui recevrait un paquet contenant l'entête MP_CAPABLE, ne saurait pas interpréter l'entête MP_CAPABLE et ignorerait cet entête. Un échange de paquets contenant l'entête MP_CAPABLE permet d'une part de s'assurer que la source et le récepteur peuvent mettre en oeuvre le protocole MPTCP et d'autre part de créer le sous flux initial.

Le sous flux additionnel est créé à la suite de la création du sous flux initial en mettant en oeuvre une procédure de poignée de mains en trois étapes 120, 121 et 122 dans lesquelles les paquets SYN, SYN/ACK et ACK comportent un entête de type MP_JOIN. Du point de vue du protocole MPTCP, l'entête MP_JOIN doit impérativement se trouver dans les paquets SYN, SYN/ACK et ACK lors de la création du sous flux additionnel. Toutefois, un récepteur TCP qui recevrait un paquet contenant l'entête MP_JOIN, ne saurait pas interpréter l'entête MP_JOIN et ignorerait cet entête.

L'exemple de mise en oeuvre de la Fig. 1 décrit la création d'un seul sous flux MPTCP additionnel. D'autres sous flux MPTCP additionnels peuvent être créés, en fonction d'un nombre d'adresses IP disponible sur la source et sur le récepteur.

La création de sous flux MPTCP additionnels peut être dynamique en fonction d'une disponibilité de liens de transmission utilisables pour la connexion MPTCP.

Chaque sous flux MPTCP est associé à un sextuplet qui lui est propre.

Les mécanismes de contrôle d'erreur et de congestion de TCP ont été adaptés afin de prendre en compte les spécificités du contexte multi-liens.

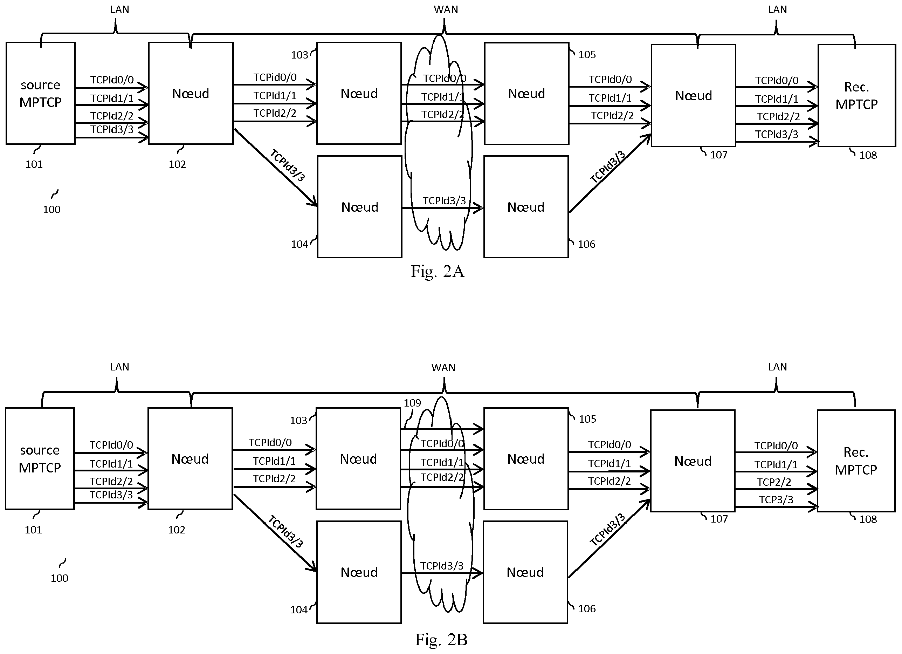

Comme nous l'avons vu plus haut, le protocole MPTCP est adapté à la gestion dynamique de l'ouverture de nouveaux liens de communication ou la fermeture de liens de communication existants. Toutefois, il est nécessaire que ces liens soient de bout en bout, c'est à dire de la source au récepteur. La **Fig. 2A** représente schématiquement un exemple de réseau de communication 100 dans lequel des communications entre une source 101 et un récepteur 108 sont gérées par le protocole MPTCP. Le réseau de communication 100 comporte six noeuds de type CRI numérotés 102 à 107, une source 101 compatible avec le protocole MPTCP et un récepteur 108 compatible avec le protocole MPTCP. La source 101 et le noeud 102 appartiennent à un premier LAN, dit LAN source. Le récepteur 108 et le noeud 107 appartiennent à un second LAN, dit LAN récepteur. Les noeuds 103 à 106 appartiennent à un WAN. La source 101 est capable de communiquer sur quatre liens différents avec le récepteur 108 en utilisant une connexion MPTCP. Un sous flux MPTCP initial, noté TCPId0/0, utilise un premier lien et trois sous flux MPTCP additionnels, notés TCPId1/1, TCPId2/2 et TCPId3/3, utilisent les trois liens restants. Dans la notation TCPIdi/j, le suffixe i/j indique que le sous flux MPTCP utilise un identifiant d'adresse (« Address Identifier (address ID)» en terminologie anglo-saxonne) de source *i* et un identifiant d'adresse de récepteur *j*.

Les protocoles de transport adaptés à un mode de communication multi-lien, tel que par exemple le protocole MPTCP, ne savent pas gérer une ouverture de nouveaux liens de communication intermédiaires dans un réseau, un lien de communication intermédiaire étant défini comme un lien entre un CRI et un récepteur ou entre deux CRI.

La **Fig. 2B** reprend le réseau de communication 100 décrit en relation avec la Fig. 2A et illustre certaines limitations du protocole MPTCP tel qu'actuellement défini. Dans la Fig. 2B, un nouveau lien intermédiaire 109 de type WAN s'ouvre en cours de connexion MPTCP. Le protocole MPTCP ne permet pas de détecter une ouverture d'un lien intermédiaire en cours de connexion MPTCP et *a fortiori* d'utiliser ce nouveau lien. Par conséquent, l'ouverture du lien intermédiaire 109 qui pourrait potentiellement permettre à la source 101 de communiquer avec le récepteur 108 avec un débit plus élevé, n'a en réalité aucun effet bénéfique.

Le problème résolu par la présente invention consiste à permettre à une application mettant en oeuvre une connexion utilisant un protocole de transport adapté à un mode de communication multi-lien d'utiliser un ou plusieurs liens intermédiaires apparus en cours de connexion.

A cet effet, selon un premier aspect, la présente invention concerne un procédé de création d'un sous flux de paquets de données complémentaire en complément d'un sous flux de paquets de données existant dans une connexion réseau, dite connexion réseau multi-lien, utilisant un protocole de transport adapté à un mode de communication multi-lien, la connexion réseau multi-lien étant mise en oeuvre dans un réseau de communication comprenant une pluralité d'unités réseau, une première unité réseau de la dite pluralité utilisant un ensemble de connexion comprenant ladite connexion réseau multi-lien pour communiquer avec une seconde unité réseau de ladite pluralité via une troisième unité réseau de ladite pluralité, dite composant réseau intermédiaire. Suite à une ouverture d'un lien de communication intermédiaire à partir du composant réseau intermédiaire et en direction de la deuxième unité réseau, ledit composant réseau intermédiaire met en oeuvre les étapes suivantes: obtenir un paquet ayant pour destinataire la première ou la deuxième unité réseau et compatible avec ledit protocole de transport ; créer un entête d'un premier type, l'entête du premier type étant représentatif d'une demande de création dudit sous flux de paquets de données complémentaire, le sous flux de paquets de données complémentaire étant destiné à utiliser le lien de communication intermédiaire dans une phase de transfert de paquets de données suivant la création du sous flux de paquets de données complémentaire ; insérer ledit entête de premier type dans ledit paquet ; transmettre ledit paquet en direction dudit destinataire de sorte à provoquer le lancement, par la première ou la deuxième unité réseau, d'une procédure de création dudit sous flux de paquets de données complémentaire dans le cadre de ladite connexion réseau multi-lien.

Selon un mode de réalisation, pour chaque sous flux créé dans le cadre de ladite connexion réseau multi-lien, le composant réseau intermédiaire applique une procédure de traitement accéléré à chaque paquet transmis lors de phases de transfert de paquets de données utilisant au moins un desdits sous flux créé, et en ce que le composant réseau intermédiaire interrompt la procédure de traitement accéléré pour au moins un des sous flux créé afin de permettre d'obtenir ledit paquet dans lequel l'entête de premier type est à insérer et de transmettre ledit paquet dans lequel l'entête de premier type a été inséré.

Selon un mode de réalisation, la procédure de création du sous flux de paquets de données complémentaire comprend une procédure de poignée de mains en trois étapes mise en oeuvre entre deux unités réseau de ladite pluralité comprenant : une première étape de création et de transmission d'un premier paquet de synchronisation en direction de la deuxième unité réseau via le composant réseau intermédiaire ; une seconde étape de création et de transmission d'un second paquet de synchronisation en direction de la première unité réseau et via le composant réseau intermédiaire, le second paquet de synchronisation étant apte à accuser réception du premier paquet de synchronisation ; une troisième étape de création et de transmission d'un paquet d'accusé de réception en direction de la deuxième unité réseau via le composant réseau intermédiaire ; au moins un paquet échangé lors de la procédure de poignée de mains en trois étapes comprend un entête d'un deuxième type comprenant des informations provoquant l'utilisation dudit lien de communication intermédiaire lors de la phase de transfert de paquets de données.

Selon un mode de réalisation, l'entête de deuxième type du premier paquet de synchronisation est créé et inséré par la première unité réseau dans ledit premier paquet de synchronisation.

Selon un mode de réalisation, l'entête du deuxième type du premier paquet de synchronisation est créé et inséré par le composant réseau intermédiaire dans ledit premier paquet de synchronisation.

Selon un mode de réalisation, l'entête du deuxième type du second paquet de synchronisation est supprimé dudit second paquet de synchronisation par le composant réseau intermédiaire avant d'être transmis à la première unité réseau.

Selon un mode de réalisation, l'entête du deuxième type du paquet d'accusé de réception est créé et inséré dans le paquet d'accusé de réception par le composant réseau intermédiaire.

Selon un mode de réalisation, lors de la création de l'entête du premier type, le composant réseau intermédiaire détermine un numéro de séquence aléatoire et insère ledit numéro de séquence aléatoire dans l'entête du premier type, ledit numéro de séquence aléatoire étant utilisé par le composant réseau intermédiaire pour identifier des paquets échangés entre la source et le récepteur via le composant réseau intermédiaire dans le cadre de la procédure de poignée de mains en trois étapes.

Selon un mode de réalisation, lors de la création du premier paquet de synchronisation, la valeur de numéro de séquence aléatoire déterminée par le composant réseau intermédiaire est copiée dans un premier champ de l'entête de second type, de sorte que, lorsque le composant réseau intermédiaire reçoit ultérieurement un premier paquet de synchronisation comprenant un premier champ dont la valeur est égale à la valeur dudit numéro de séquence aléatoire, le composant réseau intermédiaire détermine que ledit premier paquet de synchronisation se rapporte à la procédure de création du sous flux de paquets de données complémentaire et en déduit que le premier paquet de synchronisation doit être transmis en utilisant le lien de communication intermédiaire.

Selon un mode de réalisation, lors de la création du premier paquet de synchronisation, un identifiant de sous flux défini par la première unité réseau est attribué au sous flux complémentaire et est inséré dans un deuxième champ de l'entête de second type et en ce que, lors de la réception, par le composant réseau intermédiaire, du premier paquet de synchronisation comprenant le premier champ dont la valeur est égale à la valeur dudit numéro de séquence aléatoire, le composant réseau intermédiaire associe l'identifiant de sous flux, défini par la première unité réseau, inséré dans le deuxième champ de l'entête de second type au lien intermédiaire de sorte que chaque paquet transmis par la première unité réseau lors de la phase de transfert de paquets de données utilise le lien de communication intermédiaire.

Selon un mode de réalisation, lors de la création du premier paquet de synchronisation, le sous flux intermédiaire est associé à une adresse de la première unité réseau, l'adresse ayant été utilisée par le sous flux de paquets de données existant, et un identifiant de l'adresse de la première unité réseau est inséré dans un troisième champ de l'entête de second type, et en ce que, lors de la réception du premier paquet de synchronisation par le composant réseau intermédiaire, le composant réseau intermédiaire associe l'identifiant de l'adresse de la première unité réseau à l'identifiant de sous flux.

Selon un mode de réalisation, lors de la création de l'entête du premier type, le composant réseau intermédiaire détermine un premier numéro de port dans un premier ensemble de numéros de port associé à un lien de communication appartenant à un chemin de transmission utilisé pour transmettre ledit paquet dans lequel est inséré l'entête de premier type et insère une information représentative du premier numéro de port dans l'entête du premier type, l'information représentative dudit premier numéro de port étant utilisée par le composant réseau intermédiaire pour identifier des paquets échangés entre la source et le récepteur via le composant réseau intermédiaire dans le cadre de la procédure de poignée de mains en trois étapes.

Selon un mode de réalisation, ledit destinataire est la première unité réseau ou la deuxième unité réseau et en ce que, lorsque le destinataire est la seconde unité réseau, la seconde unité réseau met en oeuvre les étapes suivantes : créer un entête d'un troisième type, l'entête du troisième type comprenant une information représentative du premier numéro de port ; obtenir un paquet destiné à la première unité réseau ; insérer ledit entête de troisième type dans ledit paquet obtenu ; et, transmettre ledit paquet en direction de la première unité réseau de sorte que la première unité réseau communique avec le composant réseau intermédiaire en utilisant un port de destination correspondant au premier numéro de port.

Selon un mode de réalisation, le premier paquet de synchronisation est envoyé à destination d'un port du composant réseau intermédiaire correspondant au premier numéro de port, une réception du premier paquet de synchronisation sur ledit port du composant réseau intermédiaire correspondant au premier numéro de port permettant au composant réseau intermédiaire de déterminer que ledit premier paquet de synchronisation se rapporte à la procédure de création du sous flux de paquets de données complémentaire et en déduit que le premier paquet de synchronisation doit être transmis en utilisant le lien de communication intermédiaire.

Selon un mode de réalisation, lors de la création de l'entête de second type inséré dans le premier paquet de synchronisation, le composant réseau intermédiaire insère dans ledit entête de second type une information représentative d'un premier ensemble de numéros de port local dépendant du premier numéro de port, chaque unité réseau de ladite pluralité, par laquelle transite le premier paquet de synchronisation, définit un deuxième ensemble de numéros de port local, compris dans l'ensemble de numéros de port représenté par l'information représentative d'un ensemble de numéros de port local reçue dans ledit entête de second type, et remplace ladite information représentative d'un ensemble de numéros de port local contenue dans ledit entête de second type par une information représentative du deuxième ensemble de numéros de port local.

Selon un mode de réalisation, le paquet d'accusé de réception est envoyé à destination d'un port du composant réseau intermédiaire correspondant au premier numéro de port, une réception du paquet d'accusé de réception sur ledit port du composant réseau intermédiaire correspondant au premier numéro de port permettant au composant réseau intermédiaire de déterminer que ledit paquet d'accusé de réception se rapporte à la procédure de création du sous flux de paquets de données complémentaire et en déduit que le paquet d'accusé de réception doit être transmis en utilisant le lien de communication intermédiaire.

Selon un mode de réalisation, pour fermer le sous flux complémentaire, le composant réseau intermédiaire effectue les étapes suivantes: obtenir un paquet ayant pour destinataire la première ou la deuxième unité réseau et compatible avec le protocole de transmission ; créer un entête d'un quatrième type, l'entête de quatrième type étant représentatif d'une demande de fermeture du sous flux de données complémentaire ; insérer ledit entête de quatrième type dans ledit paquet ; transmettre ledit paquet en direction du destinataire de sorte à provoquer le lancement par la première ou la seconde unité réseau d'une procédure de fermeture du sous flux de données complémentaire.

Selon un mode de réalisation, lors de la création de l'entête de quatrième type, une pluralité d'informations est insérée dans l'entête de quatrième type, la pluralité d'informations comprenant un identifiant d'une adresse associé au sous flux de paquets de données complémentaire, un identifiant de sous flux associé au sous flux de données complémentaire, une valeur indiquant quelle unité réseau doit lancer la procédure de fermeture du sous flux de paquets de données complémentaire, cette pluralité d'informations étant utilisée de sorte à fermer le sous flux complémentaire du côté de la première et de la deuxième unité réseau.

Selon un mode de réalisation, lors de la création de l'entête de quatrième type, une pluralité d'informations est insérée dans l'entête de quatrième type, la pluralité d'informations comprenant un identifiant d'une adresse associé au sous flux de paquets de données complémentaire, une information représentative du premier numéro de port et une valeur indiquant quelle unité réseau doit lancer la procédure de fermeture du sous flux de paquets de données complémentaire, cette pluralité d'informations étant utilisée de sorte à fermer le sous flux complémentaire du côté de la première et de la deuxième unité réseau.

Selon un mode de réalisation, l'ensemble de connexions comprend une connexion mono-lien, et en ce que le composant réseau intermédiaire relaie un sous flux d'une connexion multi-lien dans un flux d'une connexion mono-lien ou encapsule un sous flux d'une connexion multi-lien dans un flux d'une connexion mono-lien, la première et la troisième étape de la procédure de poignée de mains en trois étapes et/ou la seconde étape de la procédure de poignée de mains en trois étapes étant mises en oeuvre par le composant réseau intermédiaire.

Selon un deuxième aspect de la présente invention, la présente invention concerne un dispositif
de type composant réseau intermédiaire apte à créer un sous flux de paquets de données complémentaire en complément d'un sous flux de paquets de données existant dans une connexion réseau, dite connexion réseau multi-lien, utilisant un protocole de transport adapté à un mode de communication multi-lien, la connexion réseau multi-lien étant mise en oeuvre dans un réseau de communication comprenant une pluralité d'unités réseau, une première unité réseau de la dite pluralité utilisant un ensemble de connexions comprenant ladite connexion réseau multi-lien pour communiquer avec une seconde unité réseau de ladite pluralité via ledit dispositif. Ledit dispositif comprend les moyens suivants mis en oeuvre suite à une ouverture d'un lien de communication intermédiaire à partir dudit dispositif et en direction de la deuxième unité réseau: des moyens pour obtenir un paquet ayant pour destinataire la première ou la deuxième unité réseau et compatible avec ledit protocole de transport ; des moyens pour créer un entête d'un premier type, l'entête du premier type étant représentatif d'une demande de création dudit sous flux de paquets de données complémentaire, le sous flux de paquets de données complémentaire étant destiné à utiliser le lien de communication intermédiaire dans une phase de transfert de paquets de données suivant la création du sous flux de paquets de données complémentaire ; des moyens pour insérer ledit entête de premier type dans ledit paquet ; des moyens pour transmettre ledit paquet en direction du destinataire du paquet de sorte à provoquer le lancement, par la première ou la deuxième unité réseau, d'une procédure de création dudit sous flux de paquets de données complémentaire dans le cadre de ladite connexion réseau multi-lien.

Selon un troisième aspect de la présente invention, la présente invention concerne un système de communication comprenant au moins un dispositif de type composant réseau intermédiaire selon le deuxième aspect et une pluralité d'unités réseau comprenant une première et une deuxième unités réseau aptes à communiquer en utilisant un ensemble de connexions comprenant une connexion, dite connexion réseau multi-lien, utilisant un protocole de transport adapté à un mode de communication multi-lien, la première unité réseau comprenant les moyens suivants, mis en oeuvre suite à une ouverture d'un lien de communication intermédiaire à partir dudit dispositif de type composant réseau intermédiaire et en direction de la deuxième unité réseau : des moyens pour créer et transmettre un premier paquet de synchronisation en direction de la deuxième unité réseau via ledit dispositif de type composant réseau intermédiaire ; des moyens pour créer et transmettre un paquet d'accusé de réception en direction de la deuxième unité réseau via ledit dispositif de type composant réseau intermédiaire en réponse à un deuxième paquet de synchronisation provenant de la deuxième unité réseau ; la deuxième unité réseau comprenant les moyens suivants, mis en oeuvre suite à l'ouverture dudit lien de communication intermédiaire : des moyens pour créer et transmettre un second paquet de synchronisation en direction de la première unité réseau et via ledit dispositif de type composant réseau intermédiaire, le second paquet de synchronisation étant apte à accuser réception du premier paquet de synchronisation ; au moins un paquet comprenant un entête d'un deuxième type comprend des informations provoquant une utilisation dudit lien de communication intermédiaire lors d'une phase de transfert de paquets de données dans le cadre du sous flux de paquets de données complémentaire.

Selon un quatrième aspect de la présente invention, l'invention concerne un produit programme d'ordinateur, comportant des instructions pour mettre en oeuvre, par un dispositif, le procédé selon le premier aspect par un processeur du dispositif.

Selon un cinquième aspect de la présente invention, la présente invention concerne des moyens de stockage, stockant un programme d'ordinateur comportant des instructions pour mettre en oeuvre, par un dispositif, le procédé selon le premier aspect lorsque ledit programme est exécuté par un processeur du dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un exemple de mise en oeuvre du protocole MPTCP lors d'une création d'une connexion MPTCP comportant un sous flux initial et un sous flux additionnel,
La Fig. 2A représente schématiquement un réseau de communication dans lequel des communications entre une source et un destinataire sont gérées par le protocole MPTCP,
La Fig. 2B illustre certaines limitations du protocole MPTCP tel qu'actuellement défini,
La Fig. 3 représente schématiquement un dispositif apte à mettre en oeuvre la présente invention dans une source, un récepteur ou un Composant Réseau Intermédiaire (CRI),
La Fig. 4 illustre schématiquement un exemple de mise en oeuvre d'un procédé selon l'invention de création de sous flux MPTCP dans un réseau, les sous flux MPTCP comprenant un sous flux MPTCP initial et un sous flux MPTCP additionnel,
La Fig. 5 représente schématiquement un exemple de mise en oeuvre d'un procédé selon l'invention de création d'un sous flux MPTCP complémentaire, suite à une ouverture d'un nouveau lien dans un réseau, puis d'un procédé selon l'invention de suppression dudit sous flux MPTCP complémentaire,
La Fig. 6A représente schématiquement une procédure mise en oeuvre dans le cadre de l'invention lorsqu'un CRI de type traducteur d'adresse (NAT) empêche une création d'un sous flux MPTCP complémentaire,
La Fig. 6B représente schématiquement un exemple de mise en oeuvre d'une procédure de suppression d'un ensemble de sous flux MPTCP liés à une même adresse IP d'un récepteur,
La Fig. 7A représente schématiquement un exemple de mise en oeuvre d'un procédé selon l'invention de création d'un sous flux MPTCP initial dans un réseau dans lequel une source apte à mettre en oeuvre l'invention communique avec un récepteur TCP,
La Fig. 7B représente schématiquement un exemple de mise en oeuvre d'un procédé selon l'invention de création d'un sous flux MPTCP additionnel dans un réseau dans lequel une source apte à mettre en oeuvre l'invention communique avec un récepteur TCP,
La Fig. 8 représente schématiquement un exemple de mise en oeuvre d'un procédé selon l'invention de création d'un sous flux MPTCP complémentaire, suite à une ouverture d'un nouveau lien dans un réseau dans lequel une source apte à mettre en oeuvre l'invention communique avec un récepteur TCP, puis d'un procédé selon l'invention de suppression dudit sous flux MPTCP complémentaire,
La Fig. 9 représente schématiquement un exemple de mise en oeuvre d'un procédé selon l'invention de création d'un sous flux MPTCP initial dans un réseau dans lequel une source apte à mettre en oeuvre le protocole MPTCP, mais inapte à mettre en oeuvre l'invention, communique avec un récepteur TCP par l'intermédiaire d'au moins un CRI mettant en oeuvre l'invention,
La Fig. 10 représente schématiquement un exemple de mise en oeuvre d'un procédé selon l'invention de création d'un sous flux MPTCP complémentaire suite à une ouverture d'un nouveau lien intermédiaire dans un réseau dans lequel une source apte à mettre en oeuvre le protocole MPTCP, mais inapte à mettre en oeuvre l'invention, communique avec un récepteur TCP par l'intermédiaire d'au moins un CRI mettant en oeuvre l'invention,
La Fig. 11 représente schématiquement un exemple de mise en oeuvre d'un procédé de suppression du sous flux MPTCP complémentaire, le procédé étant initié par un CRI, dans un réseau dans lequel une source apte à mettre en oeuvre le protocole MPTCP, mais inapte à mettre en oeuvre l'invention, communique avec un récepteur TCP par l'intermédiaire d'au moins un CRI mettant en oeuvre l'invention,
La Fig. 12A représente schématiquement un exemple de mise en oeuvre d'un procédé selon l'invention de création d'un sous flux MPTCP initial dans un réseau dans lequel une source TCP communique avec un récepteur TCP par l'intermédiaire de CRI mettant en oeuvre l'invention, deux des CRI mettant en oeuvre l'invention étant des relais TCP/MPTCP,
La Fig. 12B représente schématiquement un exemple de mise en oeuvre d'un procédé selon l'invention de création d'un sous flux MPTCP additionnel dans un réseau dans lequel une source TCP communique avec un récepteur TCP par l'intermédiaire de CRI mettant en oeuvre l'invention, deux des CRI mettant en oeuvre l'invention étant des relais TCP/MPTCP,
La Fig. 13 représente schématiquement un exemple de mise en oeuvre d'un procédé selon l'invention de création d'un sous flux MPTCP complémentaire d'une connexion MPTCP dans un réseau dans lequel une source TCP communique avec un récepteur TCP par l'intermédiaire de CRI mettant en oeuvre l'invention, deux des CRI mettant en oeuvre l'invention étant des relais TCP/MPTCP,
La Fig. 14A représente schématiquement un entête de paquet SYN de type MANAGE_SUBFLOW comportant un sous entête de type INFO_SUBFLOW selon un premier mode de réalisation de l'invention,
La Fig. 14B représente schématiquement un entête de paquet SYN/ACK ou ACK de type MANAGE_SUBFLOW comportant un sous entête INFO_SUBFLOW selon l'invention,
La Fig. 14C représente schématiquement un entête MP_JOIN d'un paquet SYN, modifié selon l'invention,
La Fig. 14D représente schématiquement un entête MP_JOIN d'un paquet SYN/ACK ou ACK, modifié selon l'invention,
La Fig. 14E représente schématiquement un entête de type MANAGE_SUBFLOW comportant un sous entête ADD_SUBFLOW selon l'invention,
La Fig. 14F représente schématiquement un entête de type MANAGE_SUBFLOW comportant un sous entête REMOVE_SUBFLOW selon l'invention,
La Fig. 14G représente schématiquement un entête de type ADD_ADDR2 selon l'invention,
La Fig. 14H représente schématiquement un entête de paquet SYN de type MANAGE_SUBFLOW comportant un sous entête de type INFO_SUBFLOW selon un deuxième mode de réalisation de l'invention,
La Fig. 14I représente schématiquement un entête de type REMOVE_ADDR selon l'invention.

La présente invention est expliquée en prenant l'exemple d'une application utilisant le protocole MPTCP. Les principes de l'invention sont toutefois adaptables à tout autre protocole de transport adapté à un mode de communication multi-lien.

La présente invention se situe dans le domaine des communications sur réseau. Une méthode selon l'invention permet, entre autres, aux CRI d'analyser les sous flux des connexions MPTCP pour permettre l'ajout ou le retrait de nouveaux sous-flux MPTCP dans le cas d'une ouverture de liens intermédiaires dans un réseau de communication, comme par exemple l'ouverture de liens dans un WAN. Pour ce faire, un CRI selon l'invention a la capacité d'analyser la signalisation des connexions MPTCP, d'insérer dans des paquets MPTCP transitant par le CRI des entêtes permettant la mise en oeuvre de l'invention ou de créer et envoyer des paquets pour transmettre des informations permettant la mise en oeuvre de l'invention. Nous appelons par la suite la méthode selon l'invention, la méthode MPTCP+.

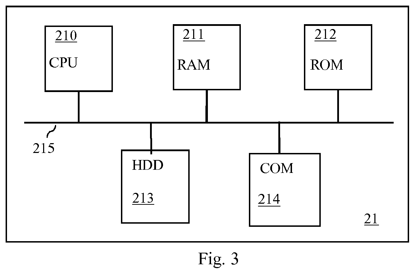

La **Fig. 3** illustre schématiquement un exemple d'architecture matérielle d'un dispositif 21 apte à mettre en oeuvre l'invention soit dans une source telle que la source 1001, soit dans un récepteur tel que le récepteur 1006, soit dans un CRI, tel que les CRI 1002 à 1005. Le dispositif 21 comporte, reliés par un bus de communication 215 : un processeur ou CPU (« Central Processing Unit » en anglais) 210; une mémoire vive RAM (« Random Access Memory » en anglais) 211; une mémoire morte ROM (« Read Only Memory » en anglais) 212; une unité de stockage 213 ou un lecteur de support de stockage, tel qu'un lecteur de cartes SD (« Secure Digital » en anglais) ou de clés USB (« Universal Serial Bus » en anglais) ou un disque dur HDD (« Hard Disk Drive» en anglais); au moins une interface de communication 214 permettant d'échanger des données avec d'autres équipements. L'interface de communication 214 permet au dispositif 21 de recevoir des paquets de données, de transmettre des paquets de données et de recevoir, dans le cas d'une source ou d'un récepteur, des instructions de la part d'un utilisateur par l'intermédiaire, par exemple, d'un dispositif de commande (non représenté), tel qu'un dispositif de pointage, permettant à l'utilisateur de manipuler une interface graphique sur un dispositif d'affichage (non représenté).

Le processeur 210 est capable d'exécuter des instructions chargées dans la RAM 211 à partir de la ROM 212, d'une mémoire externe (non représentée), d'un support de stockage, ou d'un réseau de communication. Lorsque le dispositif 21 est mis sous tension, le processeur 210 est capable de lire de la RAM 211 des instructions et de les exécuter. Ces instructions forment un programme d'ordinateur causant la mise en oeuvre, par le processeur 210, de tout ou partie des algorithmes et étapes décrits par la suite.

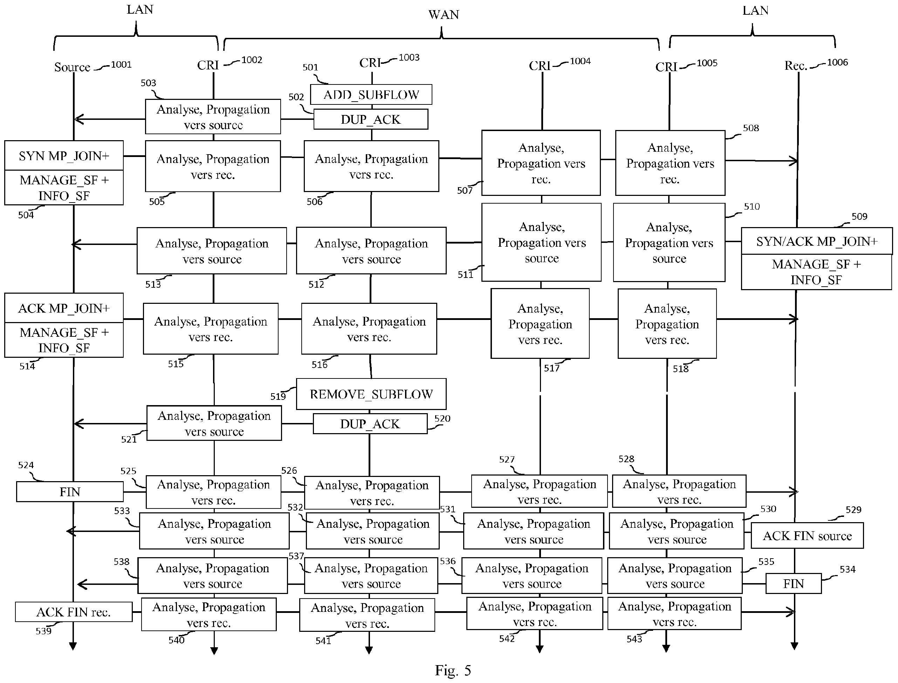

Dans un mode de réalisation particulier du dispositif 21, le dispositif 21 comprend un dispositif de traitement accéléré de paquets de données (non représenté). Le dispositif de traitement accéléré de paquets de données est relié au bus de communication 215. Le dispositif de traitement accéléré de paquets de données est apte à recevoir et transmettre très rapidement des paquets de données par l'intermédiaire de l'interface 214 sans que ces paquets de données n'aient à être traités par le processeur 210. Le processeur 210 peut activer ou désactiver le dispositif de traitement accéléré de paquets de données lorsque cela est nécessaire et notamment, comme nous le verrons pas la suite en relation avec la Fig. 5, lorsqu'un nouveau lien intermédiaire est détecté par un CRI. Lorsque le dispositif de traitement de paquets de données est désactivé, chaque paquet de données reçu par le dispositif 21 est traité par le processeur 210, selon un mode de traitement ralenti.

Tout ou partie des algorithmes et étapes décrits par la suite peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

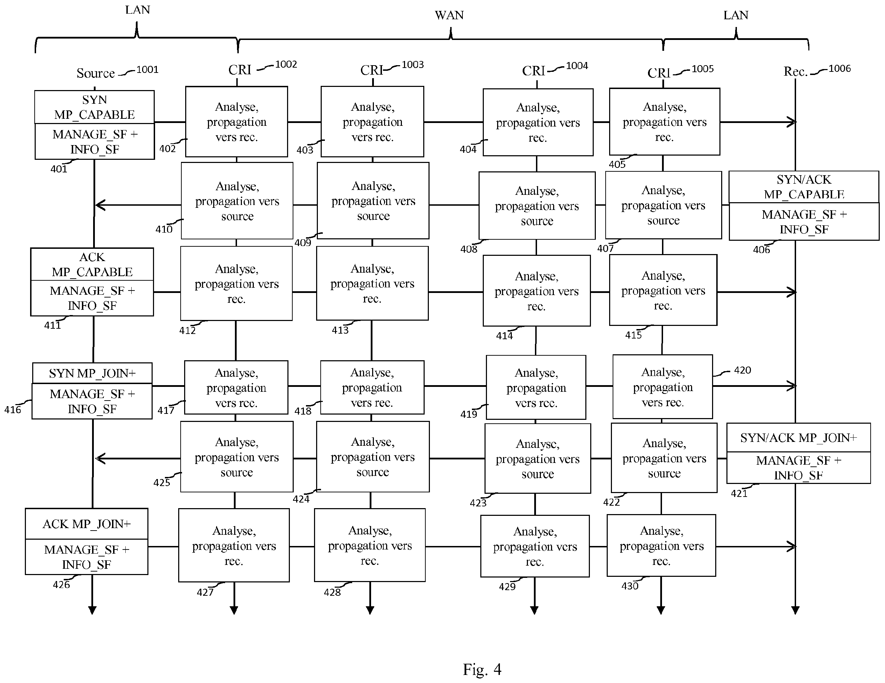

La mise en oeuvre de la méthode MPTCP+ est particulièrement simplifiée lorsque tous les éléments d'un réseau (source, CRI, récepteur) sont compatibles avec la méthode MPTCP+. Ce cas est décrit en relation avec les Figs. 4, 5 et 6. Toutefois cette condition n'est pas nécessaire, et l'incompatibilité de certains éléments du réseau avec la méthode MPTCP+ n'empêche pas la mise en oeuvre de la méthode MPTCP+.

Ainsi, il n'est pas nécessaire que chaque CRI entre une source et un récepteur soit compatible avec la méthode MPTCP+. Il suffit qu'au moins deux éléments du réseau (source, CRI, récepteur) soient compatibles avec la méthode MPTCP, et qu'au moins un CRI supporte la méthode MPTCP+. Idéalement, tout élément de réseau se trouvant entre lesdits deux éléments de réseau compatibles avec la méthode MPTCP et possédant plusieurs interfaces d'entrées/sorties doit supporter la méthode MPTCP+ afin de garantir une unicité de chemin pour les demandes de création de sous flux additionnel. Si tel n'est pas le cas, l'existence d'une temporisation lors de la demande de création d'un sous flux additionnel par un CRI (et détaillée par la suite) permet néanmoins d'appliquer l'invention.

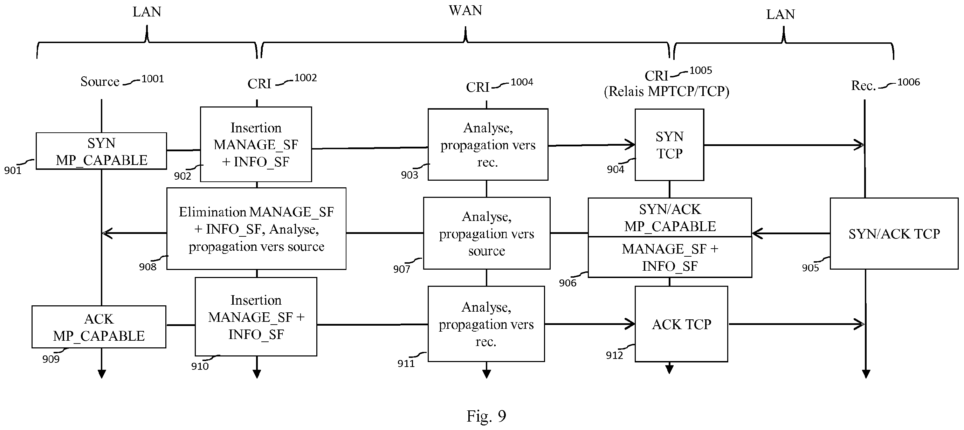

La mise en oeuvre de la méthode MPTCP+ avec une source compatible avec le protocole MPTCP, mais incompatible avec la méthode MPTCP+ est possible. En effet, un CRI compatible avec la méthode MPTCP+ est apte à compenser une incompatibilité de la source avec la méthode MPTCP+, en insérant dans des paquets de données MPTCP générés par la source, des entêtes compatibles avec la méthode MPTCP+. Ce cas est décrit par la suite en relation avec les Figs. 9, 10, et 11.

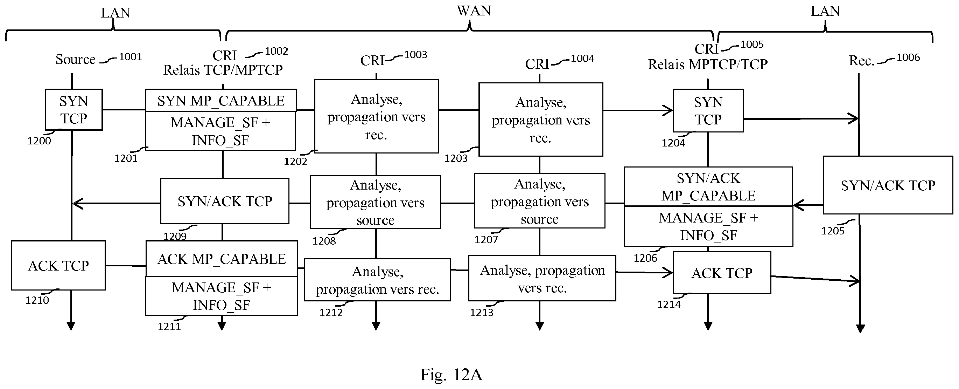

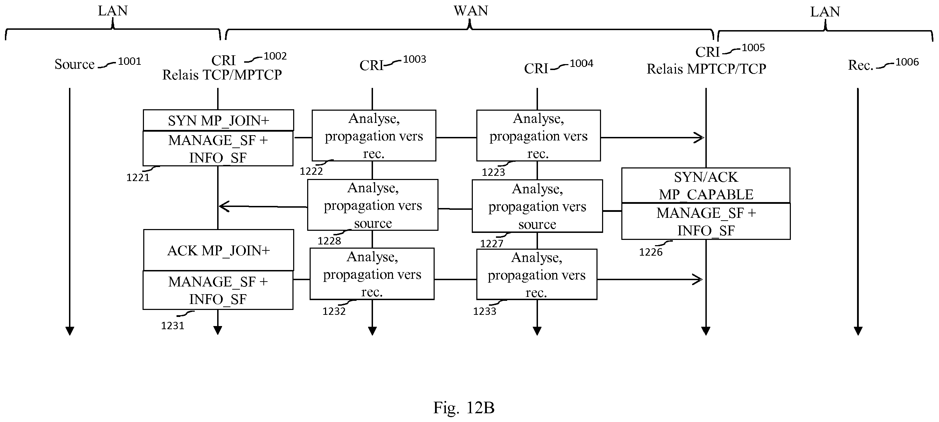

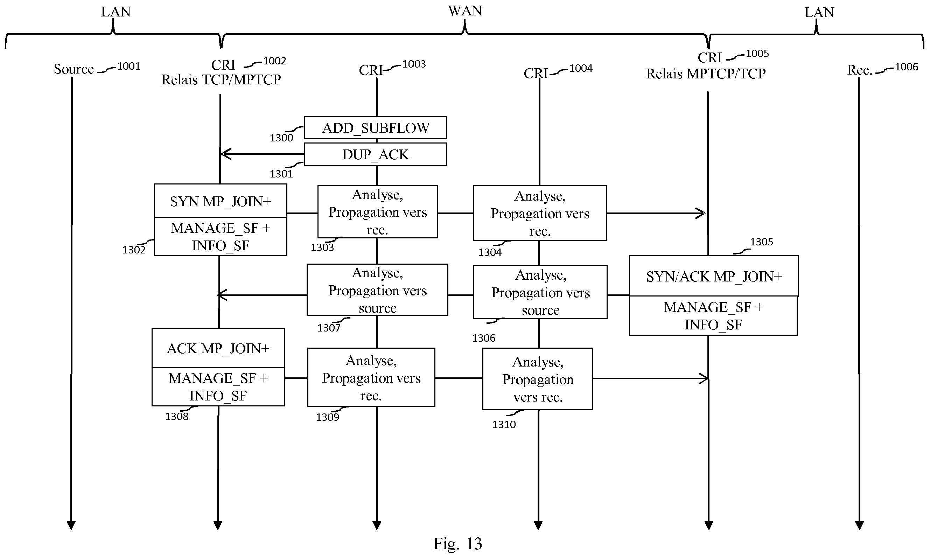

La mise en oeuvre de la méthode MPTCP+ avec une source incompatible avec le protocole MPTCP et la méthode MPTCP+ est possible. Il est toutefois nécessaire dans ce cas d'associer à la source un relais TCP/MPTCP compatible avec la méthode MPTCP+ ou un dispositif d'encapsulation MPTCP compatible avec la méthode MPTCP+. Ce cas est décrit par la suite en relation avec les Figs. 12A, 12B et 13.

Il en va de même du côté d'un récepteur. La mise en oeuvre de la méthode MPTCP+ avec un récepteur compatible avec le protocole MPTCP, mais incompatible avec la méthode MPTCP+ est possible. En effet, un CRI compatible avec la méthode MPTCP+ est apte à compenser une incompatibilité du récepteur avec la méthode MPTCP+, en supprimant des paquets de données compatibles avec la méthode MPTCP+, les entêtes compatibles avec la méthode MPTCP+. Ce cas est décrit en relation avec les Figs. 9, 10 et 11.

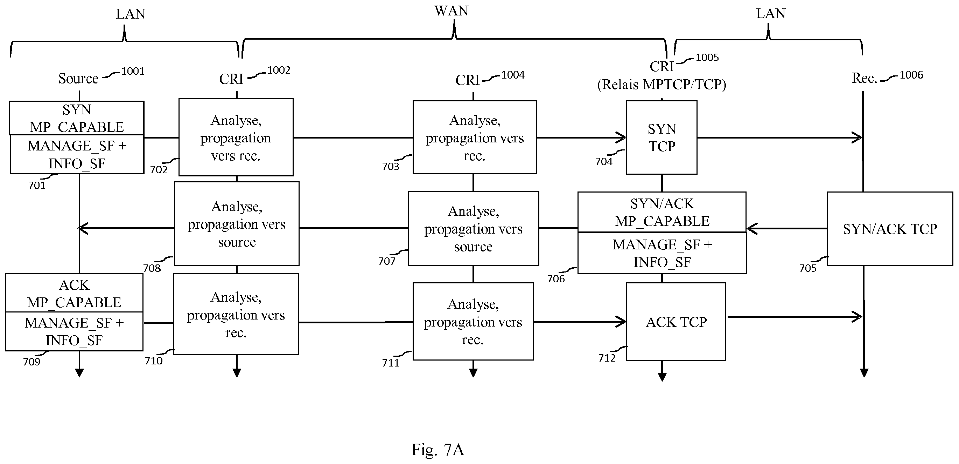

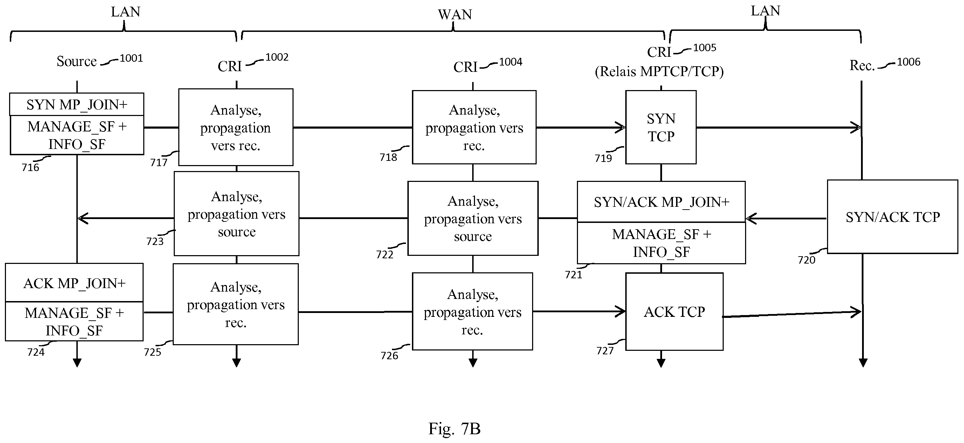

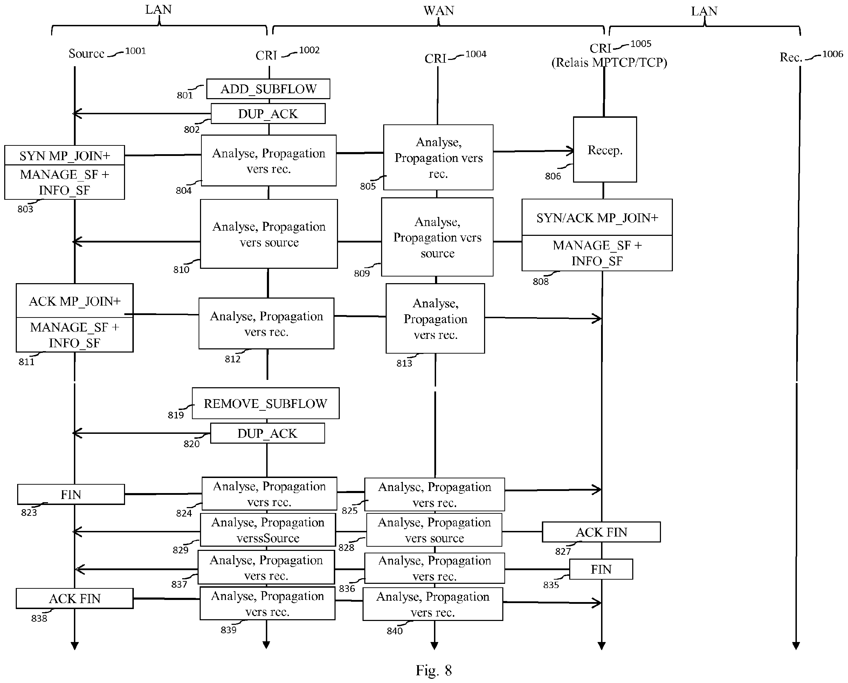

La mise en oeuvre de la méthode MPTCP+ avec un récepteur incompatible avec le protocole MPTCP et la méthode MPTCP+ est possible. Il est toutefois nécessaire dans ce cas d'associer au récepteur un relais TCP/MPTCP compatible avec la méthode MPTCP+ ou un dispositif d'encapsulation MPTCP compatible avec la méthode MPTCP+. Ce cas est décrit par la suite en relation avec les Figs. 7A, 7B et 8.

La **Fig. 4** illustre schématiquement un exemple de mise en oeuvre d'un procédé selon l'invention de créations de sous flux d'une connexion MPTCP dans le réseau décrit en relation avec la Fig. 1, les sous flux comprenant un sous flux initial et un sous flux additionnel, ces deux créations étant initiées par la source 1001. La source 1001, le récepteur 1006 et les CRI 1002 à 1005 sont compatibles avec le protocole MPTCP et la méthode MPTCP+. Les deux créations de sous flux MPTCP se font dans le cadre de la méthode MPTCP+.

Dans une première phase décrite en relation avec les étapes 401 à 415, un sous flux MPTCP, identifié par un premier sextuplet, est créé sur un premier lien. Les deux identifiants d'adresse prendront par exemple la valeur « 0 ». Cette première phase débute dans une étape 401 par la création et l'envoi d'un paquet SYN avec un entête MP_CAPABLE classique tel que décrit en relation avec la **Fig. 1** et un entête MANAGE_SUBFLOW comprenant un sous entête INFO_SUBFLOW. L'entête MANAGE_SUBFLOW est un entête pouvant être inséré dans un paquet MPTCP et permettant d'identifier l'utilisation de la méthode MPTCP+. Cet entête peut être composé de plusieurs sous entêtes.

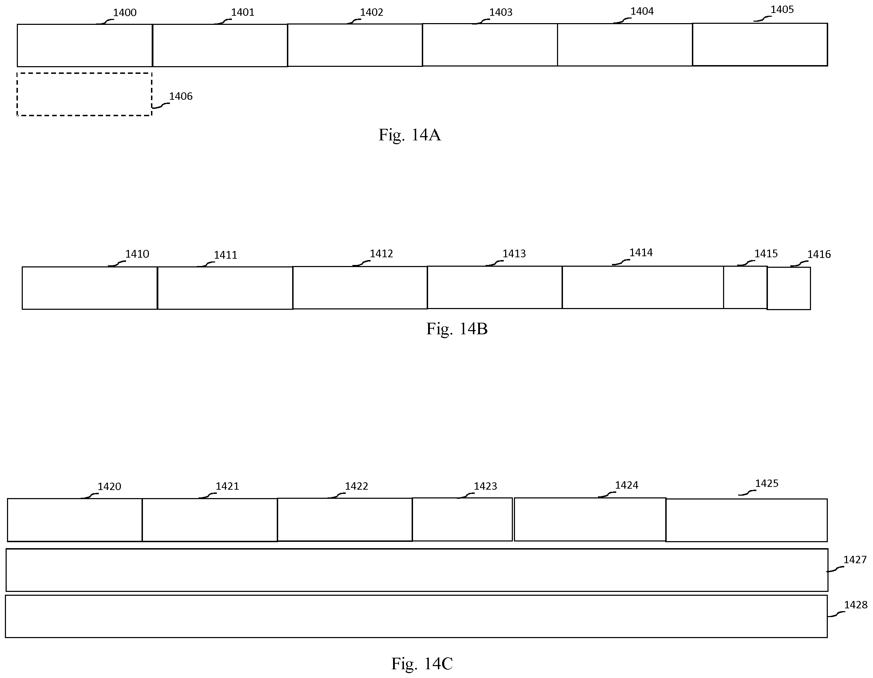

La **Fig. 14A** décrit un entête de paquet SYN de type MANAGE_SUBFLOW comportant le sous entête INFO_SUBFLOW créé par une source. Pour simplifier, nous appelons par la suite un entête MANAGE_SUBFLOW comportant un sous entête INFO_SUBFLOW « entête INFO_SUBFLOW ». On retrouve dans l'entête INFO_SUBFLOW les champs 1400, 1401 et 1402 d'un entête MPTCP classique appelés respectivement *Kind, Length* et *SubType* selon la terminologie employée dans le protocole MPTCP. Le champ *SubType* 1402 prend une valeur spécifique permettant d'identifier l'entête MANAGE_SUBFLOW, par exemple la valeur *0x09* en hexadécimal. L'entête INFO_SUBFLOW permet d'échanger des informations entre la source 1001, le récepteur 1006 et les CRI 1002 à 1005 lors de la phase de création d'une connexion MPTCP mettant en oeuvre la méthode MPTCP+. L'entête INFO_SUBFLOW comprend un champ 1403, appelé *SubSubT* selon la terminologie employée dans le protocole MPTCP, codé par exemple sur quatre bits prenant une valeur spécifique permettant d'identifier l'entête INFO_SUBFLOW, *e.g.* la valeur *0x00* en hexadécimal. Le champ *SubSubT* 1403 est suivi d'un champ 1404, appelé *Sf_Id*, permettant d'identifier un sous flux MPTCP et un champ 1405, appelé *Addr_Id*, permettant d'identifier une adresse IP d'une source à l'origine du sous flux. Dans le cas de l'entête MANAGE_SUBFLOW, les champs *Sf_Id* 1404 et *Addr_Id* 1405 sont des champs de taille fixe codés par exemple sur quatre bits. Optionnellement l'entête INFO_SUBFLOW peut contenir un champ 1406, appelé *Seq_Req*, codé par exemple sur 15 bits permettant d'identifier un numéro de séquence d'une requête de création d'un flux MPTCP, lorsque cette requête a été émise par un CRI. Dans l'exemple de la Fig. 4, la requête est émise par la source 1001. Le champ *Seq_Req* 1406 est donc absent du paquet SYN.

Lors de l'étape 401, les champs *Sf_Id* 1404 et *Addr_Id* 1405 de l'entête INFO_SUBFLOW sont mis à « 0 ».

Lors d'une étape 402, le CRI 1002 reçoit le paquet SYN, analyse ce paquet pour déterminer si une action est nécessaire et propage le paquet SYN en direction du récepteur 1006. Lors de l'analyse du paquet SYN contenant l'entête MP_CAPABLE et l'entête INFO_SUBFLOW, le CRI 1002 récupère des informations sur la source 1001, et notamment une adresse IP de la source 1001 et un numéro de port de la source 1001. Si le CRI ne possède pas déjà ces informations, le CRI les sauvegarde en mémoire et les associe avec un identifiant de la source. Le CRI associe ensuite aux informations sauvegardées, des informations sur le sous flux MPTCP en cours de création, notamment une clé extraite de l'entête MP CAPABLE, un identificateur de sous flux et un identificateur d'adresse. Le CRI sauvegarde aussi une information indiquant que la source 1001 est compatible avec la méthode MPTCP+ puisque le champ *Seq_Req* 1406 de l'entête INFO_SUBFLOW est absent indiquant que l'entête INFO_SUBFLOW a été ajouté par la source 1001. Les CRI 1003, 1004 et 1005 appliquent respectivement des étapes 403, 404 et 405 identiques à l'étape 402.

Suite à la réception du paquet SYN, le récepteur 1006 construit et envoie en direction de la source 1001, lors d'une étape 406, un paquet SYN/ACK avec un entête MP_CAPABLE et un entête INFO_SUBFLOW. La **Fig. 14B** décrit un entête de paquet SYN/ACK et ACK de type INFO_SUBFLOW. Les champs 1410, 1411, 1412 et 1413, respectivement appelés *Kind, Length*, *SubType* et *SubSubT,* sont identiques à ceux d'un paquet SYN décrit en relation avec la Fig. 14A. Ces champs sont suivis par un champ 1414, appelé *TypeOfLink* selon une terminologie classique des protocoles de transport, codé par exemple sur 6 bits, donnant des indications sur le premier lien. Par exemple, le champ *TypeOfLink* 1414 peut donner des indications sur des délais de transmission sur le lien, sur un débit de transmission sur le lien, sur un coût de transmission sur le lien, etc. Le champ *TypeOfLink* 1414 est suivi d'un champ 1415, appelé A, et d'un champ 1416, appelé B, permettant d'identifier un algorithme de cryptographie utilisé lors de transmissions de données dans le sous flux MPTCP initial.

Lors de l'étape 406, le champ *TypeOfLink* 1414 est mis à une valeur donnant des indications sur le premier lien et les champs *A* 1415 et *B* 1416 sont mis respectivement à une valeur permettant d'identifier l'algorithme de cryptage utilisé. Dans une étape 407, le CRI 1005 analyse le paquet SYN/ACK pour vérifier si une action est nécessaire et transmet le paquet en direction de la source 1001. Lors de l'analyse d'un paquet SYN/ACK contenant l'entête MP_CAPABLE et l'entête INFO_SUBFLOW, le CRI 1005 récupère des informations sur le récepteur 1006 comprenant une adresse IP du récepteur 1006 et un numéro de port du récepteur 1006. Si le CRI 1005 ne possède pas déjà ces informations, il les sauvegarde en mémoire et les associe à un identifiant du récepteur 1006. Le CRI associe ensuite aux informations sauvegardées, des informations sur le sous flux MPTCP en cours de création comprenant une clé extraite de l'entête MP CAPABLE, un identificateur de sous flux et un identificateur d'adresse, chaque identificateur prenant une valeur par défaut égale à « 0 » tel que spécifié par le protocole MPTCP. La clé est utilisée pour sécuriser l'ouverture de sous flux complémentaires MPTCP. Le CRI sauvegarde aussi une information indiquant que le récepteur 1006 est compatible avec la méthode MPTCP+, ce qu'il peut déduire de la présence des champs *TypeOfLink* 1414, *A* 1415et *B* 1416 dans l'entête INFO_SUBFLOW. Les CRI 1004, 1003 et 1002 appliquent respectivement des étapes 408, 409 et 410 identiques à l'étape 407.

Suite à la réception du paquet SYN/ACK, la source 1001 construit et envoie un paquet ACK en direction du récepteur 1006 lors d'une étape 411, ce paquet comportant des entêtes MP_CAPABLE et INFO_SUBFLOW. La syntaxe de l'entête INFO_SUBFLOW d'un paquet ACK est identique à la syntaxe de l'entête INFO_SUBFLOW d'un paquet SYN/ACK. Lors de l'étape 411, les champs *TypeOfLink* 1414, *A* 1415 et *B* 1416 sont recopiés du paquet SYN/ACK. Dans une étape 412, le CRI 1002 analyse le paquet ACK pour vérifier si une action est nécessaire et transmet le paquet en direction du récepteur 1006. Lors de l'analyse d'un paquet ACK, le CRI vérifie que toutes les informations concernant la connexion et le sous flux MPTCP initial sont cohérentes. Dans des étapes 413, 414 et 415, les CRI 1003, 1004 et 1005 appliquent des étapes identiques à l'étape 412. Le sous flux MPTCP initial est ouvert après réception par le récepteur 1006 du paquet ACK.

Dans une seconde phase décrite en relation avec les étapes 416 à 430, un sous flux MPTCP additionnel est créé sur un second lien identifié par un second sextuplet. On peut remarquer que l'adresse IP du récepteur du second sextuplet peut être égale à l'adresse IP du récepteur du premier sextuplet. Cette phase débute par la création puis l'envoi par la source 1001 lors d'une étape 416, d'un paquet SYN comportant un entête MP_JOIN+ et un entête INFO_SUBFLOW. L'entête MP_JOIN+ d'un paquet SYN est similaire à l'entête MP_JOIN classique d'un paquet SYN. La syntaxe d'un entête MP_JOIN+ d'un paquet SYN est décrite en relation avec la **Fig. 14C****.** La syntaxe d'un entête INFO_SUBFLOW d'un paquet SYN est celle décrite en relation avec la Fig. 14A.

L'entête MP_JOIN+ d'un paquet SYN comporte des champs 1420, 1421, 1422 typiques d'un entête selon le protocole MPTCP appelés respectivement *Kind, Length* et *SubType* selon la terminologie du protocole MPTCP. Le champ 1422 *SubType* permet d'identifier l'entête MP_JOIN+. L'entête MP_JOIN+ comprend de plus un champ 1423, appelé *MaxSf,* codé par exemple sur trois bits, un champ 1424, appelé *SubFlow_Id,* de taille variable et un champ 1425, appelé *Address_Id,* de taille variable. Le champ *MaxSf* 1423 indique le nombre de bits alloués au champ *SubFlow_Id* 1424 et au champ *Address_Id* 1425, qui lorsque le champ *MaxSf* 1423 est codé sur 3 bits peuvent aller de 0 à 7 bits. Le champ *SubFlow_Id* 1424 permet d'identifier un sous flux. Le champ *Address_Id* 1425 permet d'identifier l'adresse IP du dispositif réseau ayant créé le paquet (*i.e.* une source ou un destinataire) indépendamment de la valeur de l'adresse IP correspondante. Le champ *Address_Id* 1425 permet de reconnaître une adresse IP même si elle a été modifiée dans le réseau par exemple par un dispositif de traduction d'adresse. On note que les champs *SubFlow_Id* 1424 et *Address_Id* 1425 de l'entête MP_JOIN+ remplacent un champ *Address_ID* d'un entête MP_JOIN tel que défini dans le protocole MPTCP. Par ailleurs l'entête MP_JOIN+ comprend un champ 1427, appelé «*jeton récepteur (JR)*» (« receiver token » en terminologie anglo-saxonne), et un champ 1428, appelé «*numéro aléatoire source (NAS)*» (« source random number » en terminologie anglo-saxonne). Les champs *JR* 1427 et *NAS* 1428 sont utilisés pour sécuriser la connexion MPTCP.

Lors de l'étape 416, le champ *Address_Id* 1425 est positionné à une valeur représentative à l'adresse IP de la source du second sextuplet. Le champ *SubFlow_Id* 1424 est positionné à valeur permettant de représenter le premier sous flux créé pour le second sextuplet. Par exemple le champ *SubFlow_Id* 1424 prend la valeur « 0 ». Lors d'une création d'un sous flux MPTCP additionnel initiée par une source (resp. un récepteur), les champs *Sf_Id* 1404 et *Addr_Id* 1405 de l'entête INFO_SUBFLOW du paquet SYN ne sont pas utilisés. Dans un mode de réalisation ces champs prennent, par exemple, la valeur « 0 ».

Lors d'une étape 417, le CRI 1002 reçoit le paquet SYN, analyse ce paquet pour déterminer si une action est nécessaire et propage le paquet SYN en direction du récepteur 1006. Lors de l'analyse du paquet SYN contenant l'entête MP_JOIN+ et l'entête INFO_SUBFLOW, le CRI 1002 récupère des informations sur la source comprenant une adresse IP de la source et un numéro de port de la source. Si le CRI 1002 ne possède pas déjà ces informations, il les sauvegarde en mémoire et les associe avec un identifiant de la source. Le CRI 1002 associe ensuite aux informations sauvegardées, des informations sur le sous flux MPTCP additionnel en cours de création comprenant le jeton récepteur et le numéro aléatoire source, l'identificateur de sous flux, l'identificateur d'adresse extraits de l'entête MP_JOIN+ et une clé.

Lorsque préalablement à la réception du paquet SYN comportant l'entête MP_JOIN+, le CRI 1002 a reçu un paquet comportant un entête MP_CAPABLE (comme c'est le cas dans l'exemple de la Fig. 4), la clé associée aux informations sauvegardées est celle reçue lors de l'étape 402 de réception du paquet comportant l'entête MP_CAPABLE.

Mais, il est possible qu'une réception par un CRI d'un paquet SYN comportant l'entête MP_JOIN+ ne soit pas précédée d'une réception d'un paquet SYN comportant l'entête MP_CAPABLE. Ce cas peut se produire lorsqu'un paquet SYN comportant l'option MP_CAPABLE a suivi une première route dans le réseau alors qu'un paquet SYN comportant l'option MP_JOIN+ a suivi une seconde route différente de la première. Dans ce cas la clé associée aux informations sauvegardées est construite par le CRI à partir du jeton récepteur et/ou du numéro aléatoire source.

Les CRI 1003, 1004 et 1005 appliquent respectivement des étapes 418, 419 et 420 identiques à l'étape 417.

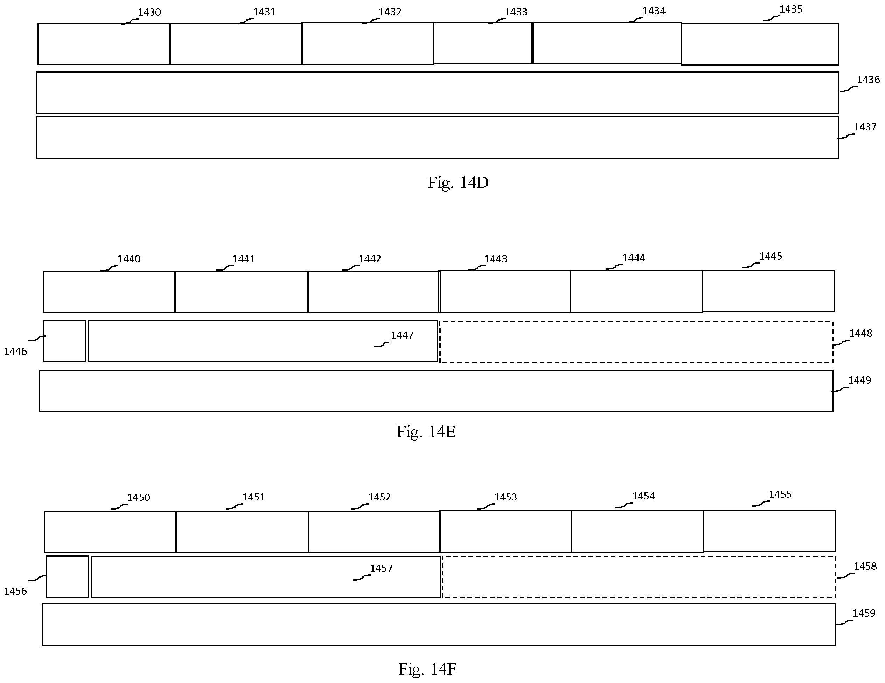

Suite à la réception du paquet SYN, le récepteur 1006 construit et envoie en direction de la source 1001, lors d'une étape 421, un paquet SYN/ACK avec un entête MP_JOIN+ et un entête INFO_SUBFLOW. Un entête de paquet SYN/ACK et ACK de type MP_JOIN+ est décrit en relation avec la **Fig. 14D****.**

L'entête MP_JOIN+ d'un paquet SYN/ACK ou ACK comporte des champs 1430, 1431, 1432, 1433, 1434 et 1435, appelés respectivement *Kind, Length*, *SubType, MaxSf, SubFlow Id*, et *Address Id* respectivement identiques aux champs 1420, 1421, 1422, 1423, 1424 et 1425, de mêmes noms d'un entête MP_JOIN+ d'un paquet SYN décrit en relation avec la Fig. 14C. Par ailleurs l'entête MP_JOIN+ comprend un champ 1436, appelé« *numéro de sécurité source* » et connu sous l'appellation *HMAC* dans le protocole MPTCP, et un champ 1437, appelé «*numéro aléatoire source (NAS)*». Les champs *HMAC* 1436 et *NAS* 1437 sont utilisés pour sécuriser la connexion MPTCP. Le champ *HMAC* 1436 est calculé à partir des informations de clé, de jeton récepteur et/ou de numéro aléatoire source échangées entre la source 1001 et le récepteur 1006 lors des échanges de paquets comportant l'entête MP_CAPABLE ou l'entête MP_JOIN+.

La syntaxe d'un entête INFO_SUBFLOW d'un paquet SYN/ACK est celle décrite en relation avec la Fig. 14B.

Lors de l'étape 421, le champ *Address_Id* 1435 est positionné à une valeur correspondant à l'adresse IP récepteur du second sextuplet, le champ *SubFlow_Id* 1434 est positionné à la valeur « 0 » pour représenter le premier sous flux créé pour le second sextuplet, le champ *TypeOfLink* 1414 de l'entête INFO_SUBFLOW est mis à une valeur donnant des indications sur le second lien et les champs *A* 1415 et *B* 1416 sont mis respectivement à une valeur permettant d'identifier l'algorithme de cryptage utilisé.

Dans une étape 422, le CRI 1005 analyse le paquet SYN/ACK pour vérifier si une action est nécessaire et transmet le paquet en direction de la source 1001. Lors de l'analyse d'un paquet SYN/ACK contenant l'entête MP_JOIN+ et l'entête INFO_SUBFLOW, le CRI 1005 récupère des informations sur le récepteur comprenant une adresse IP du récepteur et un numéro de port du récepteur. Si le CRI 1005 ne possède pas déjà ces informations, il les sauvegarde en mémoire. Le CRI 1005 associe ensuite aux informations sauvegardées, des informations sur le sous flux MPTCP en cours de création comprenant une clé, le numéro aléatoire source, l'identificateur de sous flux MPTCP et l'identificateur d'adresse de récepteur extrait de l'entête MP_JOIN+ du paquet SYN/ACK. De manière similaire à l'étape 417, la clé est celle obtenue lors de l'étape 407 si un paquet SYN/ACK comportant l'entête MP_CAPABLE a été reçu par le CRI 1005 ou une clé construite par le CRI 1005 à partir du numéro aléatoire source.

Les CRI 1004, 1003 et 1002 appliquent respectivement des étapes 423, 424 et 425 identiques à l'étape 422.

Suite à la réception du paquet SYN/ACK, la source 1001 construit et envoie lors d'une étape 426 un paquet ACK en direction du récepteur 1006, ce paquet comportant les entêtes MP_JOIN+ et INFO_SUBFLOW. Lors de l'étape 426, les champs *TypeOfLink* 1414, *A* 1415 et *B* 1416 sont recopiés du paquet SYN/ACK. Dans une étape 427, le CRI 1002 analyse le paquet ACK pour vérifier si une action est nécessaire et transmet le paquet en direction du récepteur 1006. Lors de l'analyse d'un paquet ACK, le CRI 1002 vérifie que toutes les informations concernant la connexion et le sous flux MPTCP additionnel sont cohérentes. Dans des étapes 428, 429 et 430, les CRI 1003, 1004 et 1005 appliquent respectivement des étapes identiques à l'étape 427. Le sous flux MPTCP additionnel est ouvert après réception par le récepteur 1006 du paquet ACK.

La Fig. 4 décrit une phase d'ouverture d'un sous flux MPTCP initial et d'un sous flux MPTCP additionnel. D'autres sous flux MPTCP additionnels pourraient être créés durant cette phase en répétant les étapes 416 à 430 avec d'autres sextuplets, tant que des adresses IP source et récepteur sont disponibles. Cette phase est suivie d'une phase de transfert de paquets de données qui est en tout point identique à une phase de transfert de paquets de données selon le protocole MPTCP. Lorsque des procédures de traitement accélérées sont disponibles dans les CRI 1002 à 1005, celles-ci sont mises en oeuvre sur les paquets de données transmis durant la phase de transfert de paquets de données.

La phase de transfert de paquets de données est suivie d'une phase de fermeture de sous flux MPTCP. Cette phase de fermeture est en tout point identique à une phase de fermeture selon le protocole MPTCP. La phase de fermeture selon le protocole MPTCP peut se baser sur l'utilisation d'un paquet FIN ou d'un paquet RST tel que défini dans le protocole MPTCP. Dans le cas de l'utilisation d'un paquet FIN, la phase de fermeture comprend la transmission d'un paquet FIN par la source 1001 suivie de la transmission d'un accusé de réception du paquet FIN par le récepteur 1006. De cette manière le sous flux MPTCP est fermé du côté de la source 1001. Le sous flux MPTCP est ensuite fermé du côté du récepteur 1006. Le récepteur 1006 transmet un paquet FIN à la source 1001. La source 1001 répond par la transmission au récepteur 1006 d'un accusé de réception du paquet FIN. De cette manière le sous flux MPTCP est fermé du côté du récepteur 1006. Lors de leur passage dans les CRI 1002 à 1005, les paquets FIN sont analysés, ce qui permet aux CRI de supprimer les informations concernant le sous flux MPTCP ainsi fermé de la mémoire desdits CRI.

La mise en oeuvre de la méthode MPTCP+ décrite en relation avec la Fig. 4 représente une création de deux sous flux MPTCP initiée par l'unité réseau 1001. Dans une autre mise en oeuvre de la méthode MPTCP+ la création des deux sous flux peut être initiée par le récepteur 1006, puisque le procédé est inversible.

Par ailleurs le réseau de communication utilisé dans la mise en oeuvre de la méthode MPTCP+ dans la Fig. 4 comporte un CRI sur le LAN source, un CRI sur le LAN récepteur et deux CRI sur la partie WAN du réseau. Le procédé fonctionne de la même manière dans une autre configuration, par exemple avec au moins un CRI compatible avec la méthode MPTCP+ sur au moins l'un des LAN et/ou au moins un CRI compatible avec la méthode MPTCP+ sur le WAN.

Dans l'exemple de la Fig. 4, aucun lien intermédiaire ne s'est ouvert sur le réseau. La **Fig. 5** représente schématiquement un exemple de mise en oeuvre d'un procédé selon l'invention de création d'un sous flux MPTCP complémentaire, puis d'un procédé selon l'invention de suppression dudit sous flux MPTCP complémentaire, suite à une ouverture d'un nouveau lien dans le réseau de la Fig. 1. Dans l'exemple de la Fig. 5, un lien intermédiaire s'ouvre à partir du CRI 1003 et en direction du récepteur 1006.

Suite à l'ouverture du lien intermédiaire, une procédure de création d'un sous flux MPTCP complémentaire utilisant le lien intermédiaire est lancée. La procédure de création d'un sous flux MPTCP complémentaire comprend une procédure de signalisation d'une ouverture d'un nouveau lien intermédiaire décrite en relation avec des étapes 501 à 503 et une procédure de poignée de mains en trois étapes décrites en relation avec des étapes 504 à 518.

Le sous flux MPTCP complémentaire doit partager les adresses IP source et récepteur d'un sous flux MPTCP initial ou additionnel existant. Si on considère par exemple que la mise en oeuvre de l'exemple de la Fig. 5 suit la mise en oeuvre de l'exemple de la Fig. 4, le sous flux MPTCP complémentaire partage, par exemple, les adresses IP source et récepteur du sous flux MPTCP initial créé dans les étapes 401 à 415.

La procédure de signalisation d'une ouverture d'un nouveau lien intermédiaire débute par l'étape 501 au cours de laquelle le CRI 1003 construit un entête MANAGE_SUBFLOW comportant un sous entête ADD_SUBFLOW dont la syntaxe est décrite en relation avec la **Fig. 14E****.** Nous appelons par la suite, pour simplifier, un entête MANAGE_SUBFLOW comportant un sous entête ADD_SUBFLOW « entête ADD_SUBFLOW ». L'entête ADD_SUBFLOW comprend des champs 1440, 1441, 1442 et 1443, appelés respectivement *Kind, Length*, *Subtype* et *SubSubT* respectivement identiques aux champs *Kind* 1400, *Length* 1401, *Subtype* 1402 et *SubSubT* 1403 de l'entête INFO_SUBFLOW décrit en relation avec les Figs. 14A. L'entête ADD_SUBFLOW comprend de plus un champ 1444, appelé *SF_Id*, et un champ 1445, appelé *Addr_Id.* Les champs *SF_Id* 1444 et *Addr_Id* 1445 permettent d'indiquer au destinataire du paquet contenant l'entête ADD_SUBFLOW (ici la source 1001), quel sous flux MPTCP dupliquer. Dans l'exemple de la Fig. 5, les champs *SF_Id* 1444 et *Addr_Id* 1445 représentent respectivement un identifiant de sous flux MPTCP de la source 1001 et un identifiant d'adresse de la source 1001. Par ailleurs l'entête ADD _SUBFLOW comprend un champ 1446, appelé *D,* par exemple de longueur 1 bit indiquant qui de la source ou du récepteur doit initier la création du sous flux MPTCP complémentaire, un champ 1447 appelé *Seq_Req,* par exemple de taille « 15 » bits utilisé pour identifier quel CRI est à l'origine de la création du sous flux, un champ optionnel 1448, appelé *Port,* par exemple de taille « 16 » bits permettant d'identifier un port utilisé pour initier la création du sous flux et un champ 1449, appelé « *numéro de sécurité » HMAC,* utilisé pour sécuriser une transmission de sous flux, codé par exemple sur « 32 » bits.

Lors de l'étape 501, le CRI 1003 positionne les champs *SF_Id* 1444 et *Addr_Id* 1445 à des valeurs permettant d'identifier quel sous flux MPTCP initial ou additionnel doit servir de base à la création du sous flux MPTCP complémentaire. Puisque, dans l'exemple de la Fig. 5, c'est le sous flux MPTCP initial qui est utilisé, les champs *SF_Id* 1444 et *Addr_Id* 1445 prennent la valeur « 0 ». Le champ *D* 1446 prend la valeur « 0 » pour indiquer que c'est à la source 1001 d'initier la création du sous flux MPTCP complémentaire, *i.e.* c'est à la source 1001 d'envoyer le premier paquet SYN de la procédure de poignée de mains en trois étapes. Le champ *Seq_Req* 1447 prend une valeur aléatoire « AL1 » déterminée par le CRI 1003. La valeur aléatoire « AL1 » du champ *Seq_Req* 1447 est stockée dans la mémoire du CRI 1003. Dans cet exemple, le champ optionnel *Port* 1448 n'est pas utilisé.

La procédure de signalisation d'une ouverture d'un nouveau lien intermédiaire se poursuit avec l'étape 502 au cours de laquelle l'entête ADD_SUBFLOW est inséré dans au moins un paquet et envoyé en direction de la source 1001. Dans un mode de réalisation, des entêtes ADD _SUBFLOW identiques sont insérés dans plusieurs paquets, de manière à assurer une bonne réception d'au moins un paquet comportant l'entête ADD_SUBFLOW par la source 1001. Les paquets utilisés sont des paquets destinés à la source 1001 ou des paquets d'accusé de réception dupliqués de type DUP_ACK (« Duplicate Acknowledgement » en terminologie anglo-saxonne) spécialement créés par le CRI 1003 si les paquets destinés à la source 1001 ne peuvent être utilisés. Les paquets destinés à la source 1001 peuvent être tout type de paquets utilisés lors de la communication entre la source 1001 et le récepteur 1006.

Les paquets comportant l'entête ADD_SUBFLOW peuvent être transportés dans un sous flux MPTCP existant destiné à la source, dans plusieurs sous flux MPTCP existants destinés à la source, voire dans tous les sous flux MPTCP existants destinés à la source transitant par le CRI 1003.

Tout paquet classique destiné à la source 1001 bénéficie, lorsque celle-ci est disponible dans un CRI, d'une procédure de traitement accéléré mise en oeuvre par exemple par le dispositif de traitement accéléré de paquets de données du dispositif 21 compris dans un CRI. Ce paquet classique n'est donc pas traité par le processeur 210 du dispositif 21, ce qui empêche le dispositif 21 d'appliquer un traitement particulier à ce paquet. Dans le cadre de l'invention, il est nécessaire d'appliquer un traitement particulier à certains paquets, soit pour y insérer des entêtes ADD_SUBFLOW, soit pour créer des paquets DUP ACK à partir de ces paquets pour y insérer des entêtes ADD_SUBFLOW. Dans un mode de réalisation, lorsqu'un CRI met en oeuvre une procédure de traitement accéléré, cette procédure est interrompue temporairement lorsque l'ouverture du lien intermédiaire est détectée. De cette manière, les paquets reçus par le CRI sont traités par le processeur 210 du dispositif 21. Le CRI peut alors introduire l'entête ADD_SUBFLOW dans des paquets à destination de la source 1001 ou créer des paquets DUP _ACK contenant l'entête ADD _SUBFLOW s'il ne peut insérer l'entête ADD _SUBFLOW dans les paquets destinés à la source 1001. Le CRI peut ensuite réactiver la procédure de traitement accéléré. On suppose ici que chaque CRI est capable de détecter une apparition ou une disparition de liens intermédiaires en mettant en oeuvre un procédé de surveillance d'événements réseaux.

Par la suite, nous décrivons différents modes de réalisation dans lesquels, les entêtes ADD_SUBFLOW (mais aussi des entêtes REMOVE_SUBFLOW que nous décrivons plus loin en relation avec des procédures de fermetures de sous flux MPTCP complémentaires) sont insérés dans des paquets DUP_ACK. Ces modes de réalisation ne sont toutefois nullement restrictifs et tout autre type de paquet transitant par un CRI à l'origine d'une ouverture (resp. d'une fermeture) d'un sous flux MPTCP complémentaire peut être utilisé pour transmettre des entêtes ADD_SUBFLOW (resp. REMOVE_SUBFLOW).

Dans l'exemple de la Fig. 5, sous le contrôle du processeur 210, le CRI 1003 insère l'entête ADD SUBFLOW dans les DUP ACK destinés à la source. La procédure de traitement accéléré est ensuite réactivée par le processeur 210 du dispositif 21 du CRI 1003 après l'envoi des paquets DUP_ACK contenant l'entête ADD_SUBFLOW.

Lorsqu'il reçoit un paquet DUP_ACK lors de l'étape 503, le CRI 1002 le traite comme un paquet DUP_ACK classique et le propage en direction de la source 1001.

Suite à la réception du paquet DUP _ACK contenant l'entête ADD_SUBFLOW, la source 1001 lance une procédure de poignée de mains en trois étapes. La procédure de poignée de mains en trois étapes débute par la création puis l'envoi par la source 1001, lors de l'étape 504, d'un paquet SYN contenant un entête MP_JOIN+ et un entête INFO_SUBFLOW. Le paquet SYN créé lors de l'étape 504 est similaire au paquet SYN créé lors de l'étape 416. Le champ *Address_Id* 1425 de l'entête MP_JOIN+ du paquet SYN créé lors de l'étape 504 prend la même valeur d'identifiant d'adresse que le paquet SYN créé lors de l'étape 401. Par contre, de manière à distinguer le sous flux MPTCP initial du sous flux MPTCP complémentaire, la source 1001 positionne le champ *SubFlow_Id* 1424 à une valeur différente de celle associée au sous flux MPTCP initial. Par exemple, lorsqu'un premier sous flux MPTCP est créé pour un sextuplet, il est associé par défaut à un identifiant de sous flux MPTCP de valeur « 0 ». Lorsqu'un deuxième sous flux MPTCP est créé pour le même sextuplet, il est associé à un identifiant de sous flux MPTCP de valeur « 1 » et ainsi de suite par incrément d'une unité jusqu'à épuisement des valeurs d'identifiant de sous flux MPTCP possibles. Comme lors de l'étape 416 de création d'un sous flux MPTCP additionnel, les champs *Sf_Id* 1404 et *Addr_Id* 1405 de l'entête INFO_SUBFLOW ne sont pas utilisés. Dans un mode de réalisation ces champs prennent, par exemple, la valeur « 0 ». Par ailleurs, puisqu'ici, c'est un CRI qui est à l'origine de la création du sous flux MPTCP complémentaire, un champ *Seq_Req* 1406 est inséré dans l'entête INFO_SUBFLOW. Le champ *Seq_Req* 1406 de l'entête INFO _SUBFLOW prend la valeur aléatoire « AL1 ».

Lors des étapes 505 à 508, les CRI 1002 à 1005 reçoivent, analysent et propagent le paquet SYN en direction du récepteur 1006.

L'analyse mise en oeuvre lors de l'étape 505 est identique à l'analyse mise en oeuvre lors de l'étape 402.. Le lien de sortie de chaque CRI correspond au lien de sortie utilisé par le sous flux MPTCP initial ou additionnel identifié dans l'entête ADD_SUBFLOW.

Lors de l'étape 506, le CRI 1003 détermine, en lisant le champ *Seq_Req* 1406 de l'entête INFO_SUBFLOW, que ce paquet SYN se rapporte à la procédure de création du sous flux MPTCP complémentaire dont il est à l'origine. Grâce à cette constatation, le CRI 1003 sait qu'il doit utiliser le lien intermédiaire récemment ouvert et que le paquet SYN doit être propagé vers le récepteur 1006 en utilisant ce lien intermédiaire.

Les analyses mises en oeuvre lors des étapes 507, 508 sont respectivement identiques aux analyses mises en oeuvre lors des étapes 404, 405.

Suite à la réception du paquet SYN, le récepteur 1006 construit et envoie, lors de l'étape 509, un paquet SYN/ACK avec un entête MP_JOIN+ et un entête INFO_SUBFLOW. Lors de l'étape 509, le champ *Address_Id* 1435 de l'entête MP_JOIN+ du paquet SYN/ACK prend une valeur d'identifiant d'adresse correspondant à l'adresse utilisée pour transmettre le paquet SYN/ACK créé lors de l'étape 406. Par contre, de manière à distinguer le sous flux MPTCP initial du sous flux MPTCP complémentaire, le récepteur 1006 positionne le champ *SubFlow_Id* 1434 à une valeur différente de celle associée au sous flux MPTCP initial en prenant par exemple la valeur « 1 ». Concernant l'entête INFO_SUBFLOW, le champ *TypeOfLink* 1414 est mis à une valeur donnant des informations sur le lien utilisé et les champs *A* 1415 et *B* 1416 sont mis respectivement à une valeur permettant d'identifier l'algorithme de cryptage utilisé.

Les étapes 510 à 518 qui terminent la procédure de poignée de mains en trois étapes sont ensuite identiques respectivement aux étapes 422 à 430. Le sous flux MPTCP complémentaire est ouvert lorsque le paquet ACK est reçu par le récepteur 1006.

L'ouverture du sous flux complémentaire selon la méthode MPTCP+ est suivie d'une phase de transfert de paquets de données utilisant le lien intermédiaire. Lorsque des procédures de traitement accélérées sont disponibles dans les CRI 1002 à 1005 celles-ci sont mises en oeuvre sur les paquets de données transmis durant la phase de transfert de paquets de données.

Lorsque cette phase de transfert de paquets de données arrive à son terme, une phase de fermeture du sous flux MPTCP complémentaire est mise en oeuvre. La phase de fermeture du sous flux MPTCP complémentaire peut être initiée par la source 1001 ou le récepteur 1006. Dans ce cas, la phase de fermeture est en tout point identique à une phase de fermeture selon le protocole MPTCP basée sur un échange de paquets FIN et d'accusés de réception des paquets FIN.

Dans un mode de réalisation, la phase de fermeture est initiée par le CRI à l'origine de la demande de création du sous flux MPTCP complémentaire, *i.e.* par le CRI 1003 dans l'exemple de la Fig. 5. Dans ce cas, la phase de fermeture suit une procédure spécifique à la méthode MPTCP+. Cette procédure est décrite en relation avec les étapes 519 à 521 et 524 à 543 de la Fig. 5. Cette procédure débute par la création lors d'une étape 519 d'un entête de type REMOVE_SUBFLOW. L'entête REMOVE_SUBFLOW est décrit en relation avec la **Fig. 14F****.** L'entête REMOVE_SUBFLOW est identique à l'entête ADD_SUBFLOW. Un champ 1453 de l'entête REMOVE_SUBFLOW, appelé *SubSubT,* prend une valeur permettant d'identifier l'entête REMOVE_SUBFLOW.

Des champs 1454 et 1455, appelés respectivement *SF_Id, Addr_Id* par analogie avec les champs 1444 et 1445 de l'entête ADD_SUBFLOW, prennent des valeurs permettant de déterminer quel sous flux MPTCP doit être fermé. Dans l'exemple de la Fig. 5, c'est le sous flux MPTCP complémentaire qui doit être fermé. Les champs *SF_Id* 1454 et *Addr_Id* 1455 prennent donc respectivement les valeurs « 1 » et « 0 ». Un champ réservé 1457 est inséré à des fins d'alignement. Un champ 1456, appelé D par analogie avec le champ 1446 de l'entête ADD _SUBFLOW de l'entête REMOVE_SUBFLOW, prend une valeur indiquant à la source 1001 qu'elle doit lancer une procédure de fermeture du sous flux MPTCP complémentaire. Dans cet exemple, un champ 1458, appelé *Port* par analogie avec le champ 1448 de l'entête ADD_SUBFLOW, n'est pas utilisé.

L'entête REMOVE_SUBFLOW créé lors de l'étape 519 est inséré dans au moins un paquet d'accusé de réception de type DUP_ACK créé par le CRI 1003 et destiné à la source 1001. Un envoi de plusieurs paquets transportant l'entête REMOVE_SUBFLOW permet d'assurer que l'entête REMOVE_SUBFLOW est bien reçu par son destinataire, ici la source 1001. Chaque paquet transportant l'entête REMOVE_SUBFLOW peut être envoyé en utilisant un sous flux initial, additionnel ou complémentaire différent. Lorsqu'un destinataire reçoit à plusieurs reprises un même entête REMOVE_SUBFLOW, seul l'entête REMOVE_SUBFLOW reçu en premier est considéré.

Le CRI 1002 reçoit le paquet DUP_ACK contenant l'entête REMOVE_SUBFLOW et le transmet en direction de la source 1001.

Lorsque la source 1001 reçoit le paquet DUP ACK contenant l'entête REMOVE_SUBFLOW, elle lance une phase de fermeture du sous flux MPTCP complémentaire en tout point identique à une phase de fermeture selon le protocole MPTCP basée sur un échange de paquets FIN et d'accusés de réception des paquets FIN. Cette phase débute, dans une étape 524, par un envoi par la source 1001 d'un paquet FIN en direction du récepteur 1006. Dans des étapes 525 à 528, les CRI 1002 à 1005 analysent et propagent le paquet FIN en direction du récepteur 1006. Lors des analyses des étapes 526 à 528, les CRI 1002 à 1005 constatent que le sous flux complémentaire est en cours de fermeture.

La réception du paquet FIN par le récepteur 1006 provoque lors d'une étape 529, l'envoi d'un accusé de réception du paquet FIN en direction de la source. Lors d'étapes 530 à 533 les CRI 1005 à 1002 analysent et propagent l'accusé de réception du paquet FIN en direction de la source 1001. Lors des analyses des étapes 530 à 533, les CRI 1005 à 1002 constatent que la phase de fermeture du sous flux complémentaire initiée par la source prend fin.

Lors d'une étape 534, le récepteur 1006 lance à son tour une phase de fermeture du sous flux MPTCP complémentaire. Cette phase débute par un envoi par le récepteur 1006 d'un paquet FIN en direction de la source 1001. Lors d'étapes 535 à 538, les CRI 1005 à 1002 analysent et propagent le paquet FIN en direction de la source 1001. Lors de l'analyse des étapes 535 à 538, les CRI 1005 à 1002 déterminent qu'une phase de fermeture du sous flux MPTCP complémentaire est en cours.

La réception du paquet FIN par la source provoque lors d'une étape 539, l'envoi d'un accusé de réception du paquet FIN en direction du récepteur 1006. Lors d'étapes 540 à 543, les CRI 1002 à 1005 analysent et propagent l'accusé de réception en direction du récepteur 1006. Lors des analyses des étapes 540 à 543, le CRI 1002 à 1005 déterminent que la phase de fermeture du sous flux MPTCP complémentaire initiée par le récepteur 1006 se termine. Chaque CRI supprime alors toutes références au sous flux MPTCP complémentaire stockées dans sa mémoire. La source 1001 et le récepteur 1006 suppriment eux aussi toutes références au sous flux MPTCP complémentaire stocké dans leur mémoire respective.

Une demande de création d'un sous flux complémentaire MPTCP par un CRI utilise des parties de paquets qui ne sont pas protégées (e.g., signalisation au sein d'un paquet TCP où les entêtes de la présente invention peuvent être insérés). Il existe donc une probabilité non négligeable pour que ladite demande de création de sous flux MPTCP+ n'aboutisse pas. Dans un mode de réalisation, une temporisation est activée dans chaque CRI impliqué dans une création d'un sous flux MPTCP+ complémentaire après la fin de la procédure de poignée de mains en trois étapes. Cette temporisation prend une durée *d* prédéfinie qui peut être fixée lors d'une phase de configuration de chaque CRI. Pendant la durée de la temporisation, toute nouvelle création de sous flux MPTCP+ par le CRI est bloquée. En bloquant les créations de nouveaux sous flux MPTCP+ pendant la durée *d* de la temporisation, on s'assure que la création de chaque sous flux MPTCP+ a abouti avant de demander la création d'un nouveau sous flux MPTCP+.

Nous avons vu plus haut que la procédure de création d'un sous flux MPTCP initial ou additionnel était en général inversible et pouvait être initiée par la source 1001 ou le récepteur 1006. Une procédure de création d'un sous flux MPTCP initial ou additionnel initiée par un récepteur peut se produire par exemple quand une nouvelle adresse IP est créée ou devient disponible du côté du récepteur. Cette procédure initiée par le récepteur peut toutefois nécessiter des étapes additionnelles lorsque par exemple un CRI met en oeuvre une procédure de traduction d'adresse empêchant l'acheminement d'un paquet SYN comportant un entête MP_CAPABLE et un entête INFO_SUBFLOW.

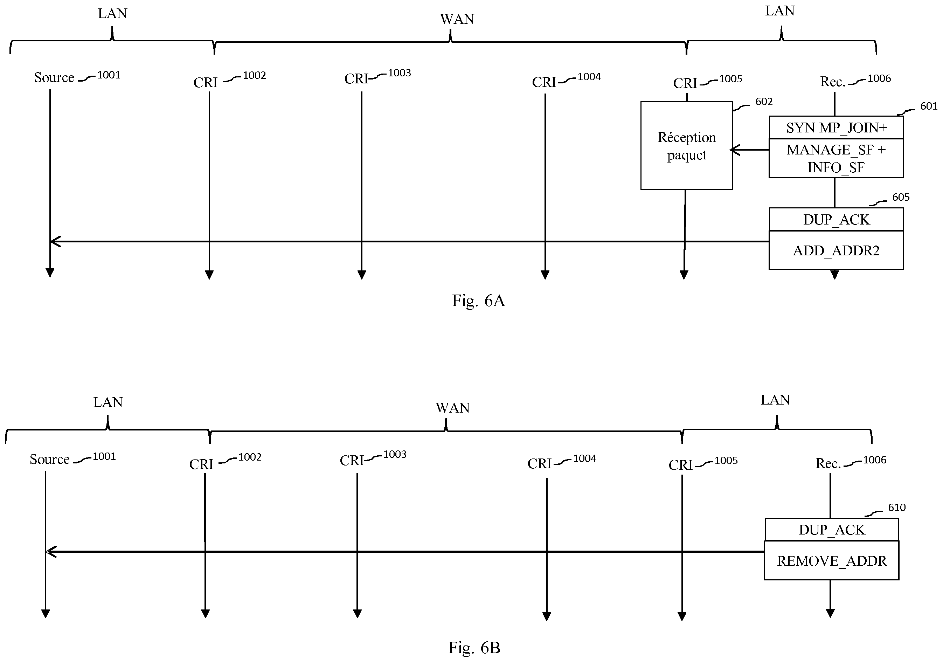

La **Fig. 6A** représente schématiquement une procédure mise en oeuvre dans le cadre de l'invention lorsqu'un CRI de type traducteur d'adresse réseaux (NAT) empêche une création d'un sous flux MPTCP initial ou additionnel dans le réseau décrit en relation avec la Fig. 1 dans le cas où le CRI 1005 met en oeuvre une procédure de traduction d'adresse. Dans cette exemple, suite à une ouverture d'une nouvelle adresse IP sur le récepteur 1006, le récepteur 1006 lance une procédure de création d'un sous flux MPTCP additionnel par la création et l'envoi dans une étape 601 d'un paquet SYN contenant un entête MP_CAPABLE et un entête INFO_SUBFLOW. Lors d'une étape 602, le paquet SYN est reçu par le CRI 1005. Le CRI 1005 applique une procédure de traduction d'adresse conduisant à la perte du paquet car, par exemple, il trouve dans le champ d'adresse de destination du paquet (ici l'adresse de la source 1001), une adresse qu'il ne connait pas.

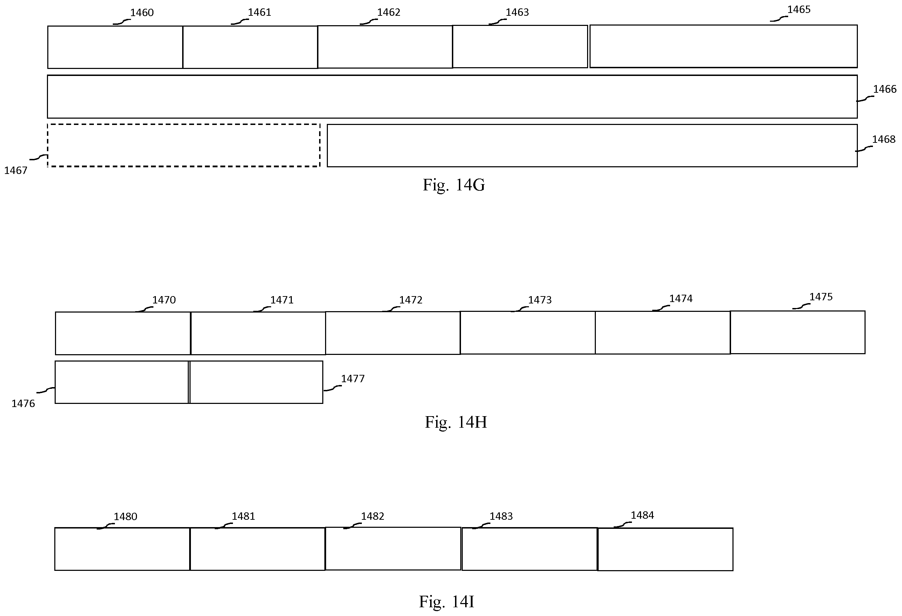

Suite à l'envoi du paquet SYN, le récepteur 1006 se met en attente de la réception d'un paquet SYN/ACK. Si aucun paquet SYN/ACK n'est reçu dans un temps *T* prédéfini après l'envoi du paquet SYN, le récepteur crée et envoie en direction de la source 1001 dans une étape 605 au moins un paquet de type DUP_ACK contenant un entête de type ADD ADDR2. Le paquet DUP ACK peut être envoyé plusieurs fois pour assurer sa réception par la source 1001. Dans un mode de réalisation il est envoyé sur chaque sous flux initial, additionnel et complémentaire existant. La syntaxe d'un entête ADD _ADDR2 est décrite en relation avec la **Fig. 14G****.** L'entête ADD_ADDR2 comprend les champs 1460, 1461 et 1462, appelés respectivement *Kind, Length* et *SubType,* typiques d'un entête selon le protocole MPTCP. Ces trois champs sont suivis d'un champ 1463, appelé *IPVer*, permettant de déterminer la taille d'un champ 1466 *Address_IP* contenant une adresse IP et décrit par la suite. Le champ *IPVer* 1463 est suivi d'un champ 1465, appelé *Addr_Id*, destiné à contenir un identifiant d'adresse IP. Le champ *Addr_Id* 1465 est suivi du champ *Address_IP* 1466, d'un champ optionnel 1467, appelé *port,* destiné à recevoir un numéro de port et d'un champ 1468, appelé « numéro de sécurité » HMAC, utilisé pour sécuriser la transmission du sous flux MPTCP.

Lors de la création du paquet DUP_ACK dans l'étape 605, le récepteur 1006 insère la nouvelle adresse IP du récepteur dans le champ *Address_IP* 1466 et un identifiant de cette adresse dans le champ *Addr_Id* 1465.

Le paquet DUP_ACK est reçu et retransmis par les CRI 1002 à 1005 sans que ceux-ci n'aient à mener une action sur ce paquet. Le paquet DUP _ACK est ensuite reçu par la source 1001. Suite à la réception du paquet DUP _ACK contenant l'entête ADD_ADDR2, la source 1001 lance une procédure de poignée de mains en trois étapes en échangeant des paquets SYN, SYN/ACK et ACK comprenant des entêtes MP_JOIN+ et INFO_SUBFLOW entre la source 1001 et le récepteur 1006. Cette procédure est similaire à la procédure décrite en relation avec les étapes 416 à 430 de la Fig. 4. Toutefois dans ce cas, c'est la nouvelle adresse IP du récepteur 1006 que la source 1001 a pu trouver dans le paquet ADD _ADDR2 qui est utilisée dans le sextuplet pour la création du sous flux MPTCP.

Il arrive que sur une unité réseau, telle qu'une source ou un récepteur, une adresse IP en cours d'utilisation devienne subitement inutilisable. Dans ce cas, les sous flux MPTCP liés à cette adresse ne peuvent plus être utilisés. L'invention propose une procédure permettant de supprimer un ensemble de sous flux MPTCP lié à une adresse IP.

La Fig. 6B représente schématiquement un exemple de mise en oeuvre d'une procédure de suppression de chaque sous flux d'une connexion MPTCP lié à une adresse IP d'un récepteur. Cette procédure s'appuie sur un entête de type REMOVE_ADDR. La **Fig. 14I** représente schématiquement un entête de type REMOVE ADDR selon l'invention. On trouve dans l'entête REMOVE ADDR des champs 1480, 1481, et 1482, appelés respectivement *Kind, Length* et *SubType,* typiques d'un entête selon le protocole MPTCP. Le champ *SubType* 1482 permet d'identifier l'entête REMOVE_ADDR. Le champ *SubType* 1482 est suivi d'un champ réservé 1483, appelé *Reserved,* et d'un champ 1484, appelé *Addr_Id.* Le champ *Addr_Id* 1484 est apte à transporter un identifiant d'une adresse IP. Le champ *Addr_Id* 1484 peut, par exemple, transporter un identifiant d'une adresse IP devenue subitement inutilisable.

Dans l'exemple de mise en oeuvre décrit en relation avec la Fig. 6B, nous supposons qu'une adresse IP du récepteur 1006 disparait alors que cette adresse IP était utilisée pour une pluralité de sous flux MPTCP.

Lors d'une étape 610, le récepteur 1006 crée un entête REMOVE_ADDR dans lequel un identifiant de l'adresse IP inutilisable est inséré dans le champ *Addr_Id* 1484. L'entête REMOVE_ADDR est ensuite inséré dans un ou plusieurs paquets DUP_ACK et envoyé à destination de la source 1001 dans des sous flux MPTCP encore disponibles (*i.e.* n'utilisant pas l'adresse IP inutilisable). Chaque CRI traversé qui analyserait un paquet DUP_ACK contenant l'entête REMOVE ADDR supprimerait de sa mémoire toute référence à des sous flux MPTCP existants utilisant l'adresse IP indiquée par le champ *Addr_Id* 1484. Lorsque la source 1001 reçoit un paquet DUP _ACK contenant l'entête REMOVE_ADDR, elle ferme chaque sous flux utilisant l'adresse IP indiquée par le champ *Addr_Id* 1484. De cette manière, chaque sous flux concerné par l'adresse IP inutilisable est définitivement supprimé du côté de la source 1001, du récepteur 1006 et des CRI 1002 à 1005. On peut noter qu'une procédure identique peut être mise en oeuvre par la source 1001 si l'une de ses adresses IP devient inutilisable.

La **Fig. 7A** représente schématiquement un exemple de mise en oeuvre d'un procédé selon l'invention de création d'un sous flux MPTCP initial, dit sous flux MPTCP initial relayé, dans un réseau dans lequel une source apte à mettre en oeuvre la méthode MPTCP+ communique avec un récepteur TCP. Nous reprenons ici le réseau décrit en relation avec la Fig. 1. Par mesure de clarté, le CRI 1003 n'est pas représenté. Dans cet exemple, le CRI 1005 est un relais TCP/MPTCP tel que décrit plus haut.

Par la suite nous appelons respectivement paquet SYN MPTCP, paquet SYN/ACK MPTCP et paquet ACK MPTCP, des paquets SYN, SYN/ACK et ACK utilisés pour créer un sous flux MPTCP. Par ailleurs, nous appelons respectivement paquet SYN TCP, paquet SYN/ACK TCP et paquet ACK TCP, des paquets SYN, SYN/ACK et ACK utilisés pour créer un flux TCP.

Comme nous le décrivons par la suite, deux procédures de poignées de mains en trois étapes sont mises en oeuvre dans ce cas. Une première procédure de poignée de mains en trois étapes est mise en oeuvre entre la source 1001 et le CRI 1005 jouant un rôle de relais TCP/MPTCP et permet de créer le sous flux MPTCP initial relayé et une seconde procédure de poignée de mains en trois étapes entre le CRI 1005 et le récepteur 1006 permet de créer un flux TCP, dit flux TCP relais. La première procédure de poignée de mains en trois étapes est initiée directement par la source 1001 alors que la deuxième procédure de poignée de mains en trois étapes est initiée indirectement par la source 1001 par l'intermédiaire du CRI 1005.

Dans une étape 701 identique à l'étape 401, la source 1001 crée et envoie un paquet SYN MPTCP avec un entête MP_CAPABLE classique et un entête INFO_SUBFLOW. Lors d'étapes 702 et 703, les CRI 1002 et 1004 mettent en oeuvre des étapes respectivement identiques aux étapes 402 et 404. Dans une étape 704, le CRI 1005 reçoit le paquet SYN MPTCP.

En réponse au paquet SYN MPTCP, le CRI 1005 construit et envoie lors d'une étape 706 un paquet SYN/ACK MPTCP avec un entête MP_CAPABLE et un entête INFO_SUBFLOW. L'étape 706 mise en oeuvre par le CRI 1005 est identique à l'étape 406 mise en oeuvre par le récepteur 1006. Lors de la réception du paquet SYN/ACK MPTCP, les CRI 1004 et 1002 mettent en oeuvre des étapes 707 et 708 respectivement identiques aux étapes 408 et 410.

En réponse au paquet SYN/ACK MPTCP, la source 1001 construit et envoie lors d'une étape 709 un paquet ACK MPTCP avec un entête MP_CAPABLE et un entête INFO_SUBFLOW. L'étape 709 mise en oeuvre par la source 1001 est identique à l'étape 411. Lors de la réception du paquet ACK MPTCP, les CRI 1002 et 1004 mettent en oeuvre des étapes 710 et 711 respectivement identiques aux étapes 412 et 414. La réception du paquet ACK MPTCP par le CRI 1005 met fin à la procédure de poignée de mains en trois étapes entre la source 1001 et le CRI 1005. Le sous flux MPTCP initial relayé est alors créé entre la source 1001 et le CRI 1005, et une transmission de données utilisant ce sous flux MPTCP initial relayé peut débuter.

Par ailleurs, lors de l'étape 704, le CRI 1005 construit un paquet SYN TCP, insère les données contenues dans le paquet SYN MPTCP dans le paquet SYN TCP et envoie le paquet SYN TCP au récepteur 1006.

En réponse au paquet SYN TCP, le récepteur 1006 construit et transmet un paquet SYN/ACK TCP au CRI 1005 lors d'une étape 705.

En réponse au paquet SYN/ACK TCP, le CRI 1005 construit et transmet un paquet ACK TCP au récepteur 1006 lors d'une étape 712. La réception du paquet ACK TCP par le récepteur 1006 met fin à la procédure de poignée de mains en trois étapes permettant la création du flux TCP relais entre le CRI 1005 et le récepteur 1006. Le flux TCP relais peut alors être utilisé pour communiquer entre le CRI 1005 et le récepteur 1006.

Lors d'une transmission de données depuis la source 1001 vers le récepteur 1006, le CRI 1005 extrait les données contenues dans des paquets MPTCP du sous flux MPTCP initial relayé et les insère dans des paquets TCP du flux TCP relais. Réciproquement, lors d'une transmission de données depuis le récepteur 1006 vers la source 1001, le CRI 1005 extrait les données contenues dans les paquets TCP du flux TCP relais et les insère dans des paquets MPTCP du sous flux MPTCP initial relayé.

La libération du sous flux MPTCP initial relayé se fait de manière standard, tel qu'expliqué dans le protocole MPTCP. Dans un mode de réalisation, la libération du sous flux MPTCP initial relayé provoque la libération du flux TCP relais qui lui est associé. La libération du flux TCP relais se fait de manière standard, tel qu'expliqué dans le standard TCP.

La **Fig. 7B** représente schématiquement un exemple de mise en oeuvre d'un procédé selon l'invention de création d'un sous flux additionnel d'une connexion MPTCP, dit sous flux MPTCP additionnel relayé, dans un réseau dans lequel une source apte à mettre en oeuvre la méthode MPTCP+ communique avec un récepteur TCP. Nous reprenons ici le réseau décrit en relation avec la Fig. 7A.

Dans cet exemple, une première procédure de poignée de mains en trois étapes est mise en oeuvre entre la source 1001 et le CRI 1005 jouant le rôle d'un relais TCP/MPTCP et permet de créer le sous flux MPTCP additionnel relayé et une seconde procédure de poignée de mains en trois étapes entre le CRI 1005 et le récepteur 1006 permet de créer un flux TCP relais. Toutefois, il n'est pas nécessaire de créer un flux TCP relais spécifiquement pour relayer le sous flux MPTCP additionnel relayé. Le sous flux MPTCP additionnel relayé pourrait être relayé par un flux TCP relais existant entre le CRI 1005 et le récepteur 1006.

Dans une étape 716 identique à l'étape 416, la source 1001 crée et envoie un paquet SYN MPTCP avec un entête MPJOIN+ et un entête INFO_SUBFLOW. Lors d'étapes 717 et 718, les CRI 1002 et 1004 mettent en oeuvre des étapes respectivement identiques aux étapes 417 et 419. Dans une étape 719, le CRI 1005 reçoit le paquet SYN MPTCP.

En réponse au paquet SYN MPTCP, le CRI 1005 construit et envoie lors d'une étape 721 un paquet SYN/ACK MPTCP avec un entête MP_JOIN+ et un entête INFO_SUBFLOW. L'étape 721 mise en oeuvre par le CRI 1005 est identique à l'étape 421 mise en oeuvre par le récepteur 1006. Lors de la réception du paquet SYN/ACK MPTCP, les CRI 1004 et 1002 mettent en oeuvre des étapes 722 et 723 respectivement identiques aux étapes 423 et 425.

En réponse au paquet SYN/ACK MPTCP, la source 1001 construit et envoie lors d'une étape 724 un paquet ACK MPTCP avec un entête MP_JOIN+ et un entête INFO_SUBFLOW. L'étape 724 mise en oeuvre par la source 1001 est identique à l'étape 426. Lors de la réception du paquet ACK MPTCP, les CRI 1002 et 1004 mettent en oeuvre des étapes 725 et 726 respectivement identiques aux étapes 427 et 429. La réception du paquet ACK MPTCP par le CRI 1005 met fin à la procédure de poignée de mains en trois étapes entre la source 1001 et le CRI 1005. Le sous flux MPTCP additionnel relayé est alors créé entre la source 1001 et le CRI 1005, et une transmission de données utilisant ce sous flux MPTCP additionnel relayé peut débuter.

Par ailleurs, lors de l'étape 719, le CRI 1005 construit un paquet SYN TCP, insère les données contenues dans le paquet SYN MPTCP dans le paquet SYN TCP et envoie le paquet SYN TCP au récepteur 1006.

En réponse au paquet SYN TCP, le récepteur 1006 construit et transmet un paquet SYN/ACK TCP au CRI 1005 lors d'une étape 720.

En réponse au paquet SYN/ACK TCP, le CRI 1005 construit et transmet un paquet ACK TCP au récepteur 1006 lors d'une étape 727. La réception du paquet ACK TCP par le récepteur 1006 met fin à la procédure de poignée de mains en trois étapes permettant la création du flux TCP relais entre le CRI 1005 et le récepteur 1006. Le flux TCP relais peut alors être utilisé pour communiquer entre le CRI 1005 et le récepteur 1006.

Lors d'une transmission de données depuis la source 1001 vers le récepteur 1006, le CRI 1005 extrait les données contenues dans des paquets MPTCP du sous flux MPTCP additionnel relayé et les insère dans des paquets TCP du flux TCP relais. Réciproquement, lors d'une transmission de données depuis le récepteur 1006 vers la source 1001, le CRI 1005 extrait les données contenues dans les paquets TCP du flux TCP relais et les insère dans des paquets MPTCP du sous flux MPTCP additionnel relayé.

La libération du sous flux MPTCP additionnel relayé se fait de manière standard telle qu'expliquée dans le standard MPTCP. Dans un mode de réalisation, la libération du sous flux MPTCP additionnel relayé provoque la libération du flux TCP relais qui lui est associé.

Dans un mode de réalisation, la seconde procédure de poignée de mains en trois étapes n'est pas mise en oeuvre. Dans ce mode de réalisation, le sous flux MPTCP additionnel relayé est relayé par un flux TCP existant entre le CRI 1005 et le récepteur 1006, par exemple en utilisant le flux TCP relais créé pour relayer le sous flux MPTCP initial relayé de l'exemple décrit en relation avec la Fig. 7A. Dans ce cas, la fermeture du sous flux MPTCP additionnel relayé n'entraîne pas la fermeture du flux MPTCP relais.

La **Fig. 8** représente schématiquement un exemple de mise en oeuvre d'un procédé selon l'invention de création d'un sous flux complémentaire d'une connexion MPTCP, dit sous flux MPTCP complémentaire relayé, suite à une ouverture d'un nouveau lien dans un réseau dans lequel une source apte à mettre en oeuvre la méthode MPTCP+ communique avec un récepteur TCP, puis d'un procédé selon l'invention de suppression dudit sous flux MPTCP complémentaire relayé. Nous reprenons ici le réseau décrit en relation avec la Fig. 7A. Dans l'exemple de la Fig. 8, un lien intermédiaire s'ouvre à partir du CRI 1002 et en direction du récepteur 1006.

Suite à l'ouverture du lien intermédiaire, une procédure de signalisation d'une ouverture d'un nouveau lien intermédiaire décrite en relation avec les étapes 801 et 802 est lancée. Le sous flux MPTCP complémentaire relayé doit partager les adresses IP source et récepteur d'un sous flux MPTCP initial ou additionnel existant. Si on considère par exemple que la mise en oeuvre de la Fig. 8 suit la mise en oeuvre de la Fig. 7A, le sous flux MPTCP complémentaire relayé peut partager les adresses IP source et récepteur du sous flux MPTCP initial relayé.

Le CRI 1002 construit un entête de type ADD_SUBFLOW lors de l'étape 801 identique à l'étape 501.

Lors d'une étape 802 identique à l'étape 502, un entête ADD_SUBFLOW est inséré dans plusieurs paquets DUP ACK, chaque paquet DUP_ACK étant transmis à la source en utilisant des sous flux MPTCP existants différents destinés à la source et transitant par le CRI 1002.

La procédure de signalisation de l'ouverture d'un nouveau lien intermédiaire est suivie d'une procédure de poignée de mains en trois étapes entre la source 1001 et le CRI 1005. Cette procédure de poignée de mains en trois étapes, décrite en relation avec des étapes 803 à 806, 808 à 810 et 811 à 813, permet la création du sous flux MPTCP complémentaire relayé.

Suite à la réception du paquet DUP_ACK contenant l'entête ADD_SUBFLOW, la source 1001 crée et envoie, lors d'une étape 803 identique à l'étape 504, un paquet SYN MPTCP contenant un entête MP JOIN+ et un entête INFO SUBFLOW. Le champ *Address_Id* 1425 de l'entête MP_JOIN+ du paquet SYN MPTCP créé lors de l'étape 803 prend la même valeur d'identifiant d'adresse que le paquet SYN MPTCP créé lors de l'étape 701. Par contre, de manière à distinguer le sous flux MPTCP initial relayé du sous flux MPTCP complémentaire relayé, la source 1001 positionne le champ *SubFlow_Id* 1424 à une valeur différente de celle associée au sous flux MPTCP initial, par exemple, la valeur « 1 ». Par ailleurs, puisqu'ici c'est le CRI 1002 qui est à l'origine de la création du sous flux MPTCP complémentaire relayé, un champ *Seq_Req* 1406 est inséré dans l'entête INFO_SUBFLOW. Le champ *Seq_Req* 1406 de l'entête INFO_SUBFLOW prend une valeur aléatoire « AL2 ».

Lors des étapes 804 et 805, les CRI 1002 et 1004 reçoivent, analysent et propagent le paquet SYN MPTCP en direction du récepteur 1006. Les analyses mises en oeuvre lors des étapes 804 et 805 sont respectivement identiques aux analyses mises en oeuvre lors des étapes 505 et 507.

Lors de l'étape 804, le CRI 1002 détermine, en lisant le champ *Seq_Req* 1406 de l'entête INFO_SUBFLOW, que le paquet SYN se rapporte à la procédure de création du sous flux MPTCP complémentaire relayé dont il est à l'origine si ledit champ *Seq_Req* est égal à « AL2 ». Le CRI 1002 sait alors qu'il doit utiliser le lien intermédiaire récemment ouvert et que le paquet SYN MPTCP doit être propagé vers le récepteur 1006 en utilisant ce lien intermédiaire.

Suite à la réception du paquet SYN MPTCP lors d'une étape 806, le CRI 1005 construit et envoie, lors d'une étape 808 identique à l'étape 509 mise en oeuvre par le récepteur 1006, un paquet SYN/ACK MPTCP avec un entête MP_JOIN+ et un entête INFO_SUBFLOW. Lors de l'étape 808, le champ *Address_Id* 1435 de l'entête MP_JOIN+ du paquet SYN/ACK MPTCP prend la même valeur d'identifiant d'adresse que celle utilisée dans l'entête MP_JOIN+ du paquet SYN/ACK MPTCP créé lors de l'étape 509. Par contre, de manière à distinguer le sous flux MPTCP initial relayé du sous flux MPTCP complémentaire relayé, le CRI 1005 positionne le champ *SubFlow_Id* 1434 à une valeur différente de celle associée au sous flux MPTCP initial relayé en prenant par exemple la valeur « 1 ».

Les étapes 809 et 810 sont respectivement identiques aux étapes 511 et 513.

Les étapes 811, 812 et 813 sont respectivement identiques aux étapes 514, 515 et 517. Le sous flux MPTCP complémentaire relayé est ouvert lorsque le paquet ACK MPTCP est reçu par le CRI 1005.

Dans cet exemple, le sous flux MPTCP complémentaire relayé est relayé par le flux TCP relais créé lors des étapes 704, 705 et 712. Lors d'une transmission de données depuis la source 1001 vers le récepteur 1006, le CRI 1005 extrait les données contenues dans des paquets MPTCP du sous flux MPTCP complémentaire relayé et les insère dans des paquets TCP du flux TCP relais. Réciproquement, lors d'une transmission de données depuis le récepteur 1006 vers la source 1001, le CRI 1005 extrait les données contenues dans les paquets TCP du flux TCP relais et les insère dans des paquets MPTCP du sous flux MPTCP complémentaire relayé.

Lorsque cette phase de transfert de paquets de données arrive à son terme, une phase de fermeture du sous flux MPTCP complémentaire relayé est mise en oeuvre.

La phase de fermeture du sous flux MPTCP complémentaire relayé peut être initiée par la source 1001 ou le CRI 1005. Dans ce cas, la phase de fermeture est en tout point identique à une phase de fermeture selon le protocole MPTCP basée sur un échange de paquets FIN et d'accusés de réception des paquets FIN.

Dans un mode de réalisation, la phase de fermeture est initiée par le CRI 1002. Dans ce cas, la phase de fermeture suit une procédure similaire à la procédure décrite en relation avec la Fig. 5. Cette procédure débute par la création lors d'une étape 819 identique à l'étape 519 d'un entête de type REMOVE_SUBFLOW.

Les champs *SF_Id* 1454 et *Addr_Id* 1455 prennent des valeurs permettant de déterminer quel sous flux MPTCP doit être fermé. Dans l'exemple de la Fig. 8, c'est le sous flux MPTCP complémentaire relayé qui doit être fermé. Les champs *SF_Id* 1454 et *Addr_Id* 1455 prennent donc respectivement les valeurs « 1 » et « 0 ». Le champ *D* 1456 de l'entête REMOVE_SUBFLOW prend une valeur indiquant que la source 1001 doit initier la fermeture du sous flux MPTCP complémentaire relayé. Dans cet exemple, le champ *Port* 1458 n'est pas utilisé.

L'entête REMOVE_SUBFLOW créé lors de l'étape 819 est inséré dans au moins un paquet DUP _ACK destiné à la source 1001. Dans un mode de réalisation, chaque paquet DUP ACK est transmis dans un sous flux MPTCP différent destiné à la source 1001 transitant par le CRI 1002.

Lorsque la source 1001 reçoit le paquet contenant l'entête REMOVE_SUBFLOW qui lui est destiné, elle lance une phase de fermeture du sous flux MPTCP complémentaire relayé en tout point identique à une phase de fermeture selon le protocole MPTCP basée sur un échange de paquets FIN et d'accusés de réception des paquets FIN.

Cette phase débute par un envoi par la source 1001 d'un paquet FIN en direction du CRI 1005 lors d'une étape 823. Dans des étapes 824 et 825, les CRI 1002 et 1004 analysent et propagent le paquet FIN en direction du récepteur 1006.

La réception du paquet FIN par le CRI 1005 provoque lors d'une étape 827, l'envoi d'un accusé de réception du paquet FIN en direction de la source 1001. Lors d'étapes 828 et 829, les CRI 1004 et 1002 analysent et propagent l'accusé de réception du paquet FIN en direction de la source 1001.

Une phase de fermeture du sous flux complémentaire initiée par le CRI 1005 est ensuite lancée lors d'une étape 835. Cette phase débute par un envoi par le CRI 1005 d'un paquet FIN en direction de la source 1001. Lors d'étapes 836 et 837, les CRI 1004 et 1002 analysent et propagent le paquet FIN en direction de la source 1001.

La réception du paquet FIN par la source 1001 provoque lors d'une étape 838, l'envoi d'un accusé de réception du paquet FIN en direction du CRI 1005. Lors d'étapes 839 et 840, les CRI 1002 et 1004 analysent et propagent l'accusé de réception en direction du CRI 1005. Le sous flux MPTCP complémentaire relayé est supprimé lors de la réception par le CRI 1005 de l'accusé de réception du paquet FIN.

La **Fig. 9** représente schématiquement un exemple de mise en oeuvre d'un procédé selon l'invention de création d'un sous flux initial d'une connexion MPTCP dans un réseau dans lequel une source apte à mettre en oeuvre le protocole MPTCP, mais inapte à mettre en oeuvre la méthode MPTCP+, communique avec un récepteur TCP par l'intermédiaire d'au moins un CRI mettant en oeuvre la méthode MPTCP+. Nous reprenons ici le réseau décrit en relation avec la Fig. 7A. Le sous flux MPTCP initial créé est un sous flux MPTCP initial relayé par le relais TCP/MPTCP mis en oeuvre par le CRI 1005. Dans cet exemple, la source 1001 est apte à mettre en oeuvre le protocole MPTCP, mais inapte à mettre en oeuvre la méthode MPTCP+. Comme nous le décrivons par la suite, le CRI 1002, qui lui est compatible avec la méthode MPTCP+, est apte à compenser l'incompatibilité de la source 1001 avec la méthode MPTCP+.

Par ailleurs, dans cet exemple, nous supposons que la source 1001, le récepteur 1006 et les CRI 1002 à 1005 sont reliés entre eux par de multiples liens de communication. A partir de ces liens de communication, plusieurs chemins de transmission différents peuvent être formés pour communiquer entre la source 1001 et le récepteur 1006. Pour simplifier, un chemin de transmission est appelé « chemin » par la suite et un lien de communication est appelé « lien » par la suite. Certains chemins n'impliquent pas chaque CRI 1002 à 1005, ce qui peut entraîner des incertitudes sur le chemin que doit emprunter un sous flux MPTCP. Lors d'une procédure de poignée de mains en trois étapes de création d'un sous flux MPTCP initial, additionnel ou complémentaire, impliquant exclusivement des unités réseau (source, récepteur, CRI) compatibles avec la méthode MPTCP+, chaque unité réseau peut déterminer sans ambiguïté les liens et chemins à utiliser par les paquets SYN, SYN/ACK et ACK. Pour ce faire, chaque unité réseau peut s'appuyer sur les identifiants de sous flux et d'adresse et les numéros de séquence *Seq_Req* contenus dans les entêtes INFO_SUBFLOW et MP_JOIN+ pour mener à bien la procédure de poignée de mains en trois étapes.

Par contre, une unité réseau non compatible avec la méthode MPTCP+, comme la source 1001 dans l'exemple de la Fig. 9, n'est pas capable de manipuler et d'utiliser les identifiants de sous flux et d'adresse et les numéros de séquence *Seq_Req* puisque ces informations sont spécifiques à la méthode MPTCP+. Si une unité réseau ne supporte pas la méthode MPTCP+ et dispose de plusieurs chemins, alors si elle choisit un mauvais chemin pour diriger un paquet lors d'une procédure de poignée de mains en trois étapes, la temporisation déclenchée lors de la création de sous flux par un CRI (et détaillée plus haut) permettra de recommencer à nouveau la procédure de poignée de mains en trois étapes si un des paquets est perdu. Cette solution peut toutefois induire des latences dans la création d'un sous flux MPTCP.

Dans l'exemple de mise en oeuvre décrit en relation avec la Fig. 9, une procédure de poignée de mains en trois étapes spécifique est utilisée pour créer un sous flux MPTCP initial. La procédure de poignée de mains en trois étapes spécifique permet de contrôler de bout en bout quel lien doit être utilisé par une unité réseau, telle que la source 1001, le récepteur 1006 ou les CRI 1002 à 1005, pour transmettre un paquet.

Lorsqu'une procédure de création d'un sous flux MPTCP (initial, additionnel, ou complémentaire) est lancée par une source ou un récepteur compatible avec le protocole MPTCP mais non compatible avec la méthode MPTCP+, le premier CRI compatible avec la méthode MPTCP+ recevant le paquet SYN MPTCP de la procédure de poignée de mains en trois étapes (par exemple, le CRI 1002 dans l'exemple de la Fig. 9) définit un premier ensemble de numéros de port local, tel qu'une plage de numéros de port, et insère un entête INFO_SUBFLOW comprenant une information représentative dudit premier ensemble de numéros de port local dans le paquet SYN MPTCP. Ce premier ensemble de numéros de port local correspond à un ensemble de numéros de port que peut allouer le premier CRI pour communiquer dans le cadre du sous flux MPTCP.

Selon un procédé que nous détaillons par la suite, chaque unité réseau par laquelle transite le paquet SYN MPTCP, définit un second ensemble de numéros de port local dépendant du premier ensemble de numéros de port local et insère une information représentative de ce deuxième ensemble de numéros de port local dans l'entête INFO_SUBFLOW du paquet SYN. Une unité réseau par laquelle transite le paquet SYN MPTCP est un autre CRI que le premier CRI (par exemple le CRI 1004 de l'exemple de la Fig. 9). Chaque second ensemble de numéros de port local défini par une unité réseau correspond à un ensemble de numéros de port que peut allouer ladite unité réseau pour communiquer dans le cadre du sous flux MPTCP. La procédure de poignée de mains en trois étapes spécifique utilise un entête INFO_SUBFLOW de paquet SYN adapté, dit entête INFO_SUBFLOW adapté. L'entête INFO_SUBFLOW adapté est décrit en relation avec la **Fig. 14H****.** L'entête INFO_SUBFLOW adapté permet de spécifier une plage de numéros de port. On trouve dans l'entête INFO_SUBFLOW adapté, des champs 1470, 1471 et 1472, appelés respectivement *Kind, Length* et *SubType,* d'un entête MPTCP classique. L'entête INFO_SUBFLOW adapté comprend de plus un champ 1473, appelé *SubSubT,* codé par exemple sur quatre bits prenant une valeur spécifique permettant d'identifier l'entête INFO_SUBFLOW adapté. Le champ *SubSubT* 1473 est suivi d'un champ réservé 1474, appelé *Reserved,* codé par exemple sur quatre bits, et un champ 1475, appelé *Addr_Id*, codé par exemple sur quatre bits permettant d'identifier une adresse IP d'une unité réseau à l'origine d'une ouverture d'un sous flux MPTCP. L'entête INFO_SUBFLOW comprend par ailleurs des champs 1476 et 1477, appelés respectivement *Port_first* et *Port_last*, codés par exemple sur seize bits, représentant une plage de numéros de port.

Dans une étape 901, la source 1001 crée et envoie un paquet SYN MPTCP avec un entête MP_CAPABLE classique.

Dans une étape 902, le CRI 1002 reçoit le paquet SYN MPTCP créé lors de l'étape 902. Puisque le paquet SYN MPTCP reçu ne contient pas d'entête INFO_SUBFLOW, le CRI 1002 sauvegarde en mémoire une information représentative du fait que la source 1001 n'est pas compatible avec la méthode MPTCP+. Par ailleurs, le CRI 1002 sauvegarde en mémoire une information représentative du fait qu'il est le premier CRI compatible avec la méthode MPTCP+ sur un chemin menant de la source 1001 au CRI 1006.

De plus, lors de l'étape 902, le CRI 1002 alloue une plage de numéros de ports permettant d'identifier des liens à utiliser pour communiquer avec le récepteur 1006. Les numéros de ports de ladite plage peuvent permettre d'identifier des liens existants, ou servir pour identifier des liens futurs qui pourraient s'ouvrir à partir du CRI 1002. Chaque lien est associé à une sous partie de la plage de numéros de port allouée. Par exemple, le CRI 1002 peut allouer une plage de numéros de ports allant de la valeur « 80 » à la valeur « 5080 » pour cinq liens, deux liens existants comprenant un lien utilisé pour transmettre le paquet SYN MPTCP en direction du récepteur 1006 et trois liens hypothétiques qui pourraient s'ouvrir dans le futur. Ladite plage est ensuite divisée en cinq sous parties. Une première sous partie allant de la valeur « 80 » à la valeur « 1079 » est associée au lien utilisé pour transmettre le paquet SYN MPTCP en direction du récepteur 1006. Une seconde sous partie allant de la valeur « 1080 » à la valeur « 2079 » est associée au second lien existant. Trois autres sous parties sont allouées pour les liens hypothétiques.

Le CRI 1002 insère ensuite un entête INFO_SUBFLOW adapté tel que décrit en relation avec la Fig. 14H dans le paquet SYN MPTCP. Lors de l'étape 902, le champ *Addr_Id* 1475 de l'entête INFO_SUBFLOW adapté prend une valeur permettant d'identifier une adresse IP de la source 1001 utilisée pour transmettre le paquet SYN MPTCP, par exemple le champ *Addr_Id* 1475 prend la valeur « 0 ». Le champ *Port_fïrst* 1476 prend la valeur minimale de la sous partie de la plage de numéros de ports allouée par le CRI 1002 correspondant au lien utilisé pour transmettre le paquet SYN MPTCP en direction du récepteur 1006. Le champ *Port_last* 1477 prend la valeur maximale de la sous partie de la plage de numéros de ports allouée par le CRI 1002 correspondant au lien utilisé pour transmettre le paquet SYN MPTCP en direction du récepteur 1006. En reprenant l'exemple de la plage de numéros de ports allant de la valeur « 80 » à la valeur « 5080 », le champ *Port_first* 1476 prend la valeur « 80 » et le champ *Port_last* 1477 prend la valeur « 1079 ».

Lors d'une étape 903, le CRI 1004 reçoit le paquet SYN MPTCP comportant l'entête INFO_SUBFLOW adapté introduit par le CRI 1002. Le CRI 1004 sauvegarde la plage de numéros de port indiquée dans l'entête INFO_SUBFLOW par les champs *Port_fïrst* 1476 et *Port_last* 1477. La plage sauvegardée par le CRI 1004 est divisée en sous parties, chaque sous partie correspondant à un lien existant ou hypothétique permettant de communiquer avec le récepteur 1006. Comme dans le cas du CRI 1002, le CRI 1004 peut diviser la plage en cinq sous parties, deux sous parties correspondant à des liens existants comprenant un lien utilisé pour transmettre le paquet SYN MPTCP au CRI 1005 et trois liens hypothétiques. Le CRI 1004 modifie les champs *Port_fïrst* 1476 et *Port_last* 1477 du paquet SYN MPTCP pour indiquer la sous partie de la plage de numéros de ports utilisée pour transmettre le paquet SYN MPTCP. En reprenant l'exemple de la plage de numéros de ports allant de la valeur « 80 » à la valeur « 5080 », le champ *Port_fïrst* 1476 reste inchangé et le champ *Port_last* 1477 prend la valeur « 279 ». Le paquet SYN MPTCP ainsi modifié est ensuite transmis en direction du récepteur 1006.

Dans une étape 904, le CRI 1005 reçoit le paquet SYN MPTCP. Dans une étape 906, le CRI 1005 construit et envoie un paquet SYN/ACK MPTCP avec un entête MP_CAPABLE, un entête INFO_SUBFLOW en direction de la source 1001. L'entête INFO_SUBFLOW est celui décrit en relation avec la Fig. 14B. Les champs de l'entête INFO_SUBFLOW créé lors de l'étape 906 sont identiques aux champs correspondants de l'entête INFO _SUBFLOW créé lors de l'étape 706.

Lors de la réception du paquet SYN/ACK MPTCP, le CRI 1004 met en oeuvre une étape 907 similaire à l'étape 707.

Dans une étape 908, le CRI 1002 reçoit le paquet SYN/ACK MPTCP. En consultant l'entête INFO_SUBFLOW ainsi que les informations sauvegardées en mémoire lors de l'étape 902, le CRI 1002 en déduit que ce paquet est destiné à la source 1001 qui n'est pas compatible avec la méthode MPTCP+. Afin de fournir un paquet SYN/ACK adapté à la source 1001, le CRI 1002 supprime du paquet SYN/ACK MPTCP l'entête INFO_SUBFLOW. Le paquet SYN/ACK ainsi modifié est envoyé à la source 1001.

On peut noter que dans un mode de réalisation de l'étape 908, le CRI 1002 ne supprime pas l'entête INFO_SUBFLOW. Dans ce cas, l'entête INFO_SUBFLOW est ignoré par la source 1001.

En réponse au paquet SYN/ACK MPTCP, la source 1001 construit et envoie lors d'une étape 909 un paquet ACK MPTCP avec un entête MP_CAPABLE.

Lors d'une étape 910, le CRI 1002 reçoit le paquet ACK MPTCP et insère un entête INFO_SUBFLOW dans le paquet ACK MPTCP. L'entête INFO_SUBFLOW est celui décrit en relation avec la Fig. 14B.

Lors d'une étape 911, similaire à l'étape 711, le CRI 1004 reçoit le paquet ACK MPTCP.

La réception du paquet ACK MPTCP par le CRI 1005 met fin à la procédure de poignée de mains en trois étapes permettant de créer le sous flux MPTCP initial relayé. Ledit sous flux MPTCP initial relayé utilise : entre la source 1001 et le CRI 1002 le lien utilisé lors de l'étape 901 pour envoyer le paquet SYN MPTCP sans entête MANAGE SUBFLOW ; entre le CRI 1002 et le CRI 1004, le lien utilisé lors de l'étape 902 pour envoyer le paquet SYN MPTCP comportant l'entête INFO_SUBFLOW adapté comprenant des informations représentatives d'une première plage de numéros de ports ; et entre le CRI 1004 et le CRI 1005 le lien utilisé lors de l'étape 903 pour retransmettre le paquet SYN MPTCP comportant l'entête INFO_SUBFLOW adapté dans lequel les informations représentatives de la plage de numéros de ports ont été modifiées.

La réception du paquet SYN MPTCP par le CRI 1005 lors de l'étape 904 provoque le déclenchement d'une procédure de poignée de mains en trois étapes de création d'un flux TCP relais comprenant des étapes 904, 905 et 912 identiques aux étapes 705, 705 et 712.

La libération du sous flux MPTCP initial relayé se fait de manière standard, tel qu'expliqué dans le standard MPTCP, en utilisant les liens correspondant au sous flux MPTCP initial relayé. Dans un mode de réalisation, la libération du sous flux MPTCP initial relayé provoque la libération du flux TCP relais. La libération du flux TCP relais se fait de manière standard, tel qu'expliqué dans le standard TCP.

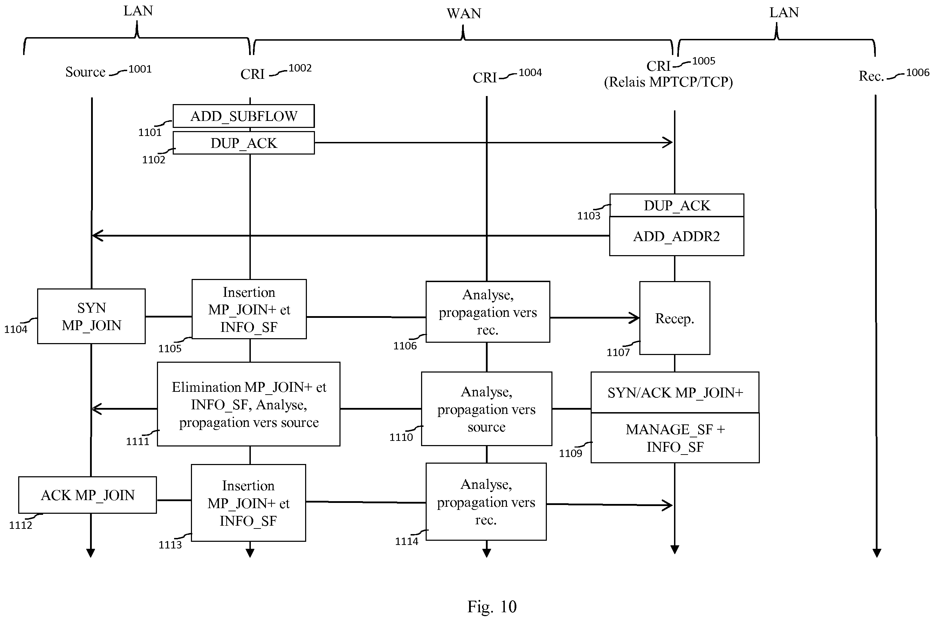

La **Fig. 10** représente schématiquement un exemple de mise en oeuvre d'un procédé, selon l'invention, de création d'un sous flux complémentaire d'une connexion MPTCP suite à une ouverture d'un nouveau lien dans un réseau dans lequel une source apte à mettre en oeuvre le protocole MPTCP, mais inapte à mettre en oeuvre l'invention, communique avec un récepteur TCP par l'intermédiaire d'au moins un CRI mettant en oeuvre l'invention. Nous reprenons ici le réseau décrit en relation avec la Fig. 7A et supposons que l'exemple de mise en oeuvre de la Fig. 10 suit la création d'un sous flux MPTCP initial relayé décrit en relation avec la Fig. 9. Le sous flux complémentaire créé dans l'exemple de la Fig. 10 est donc un sous flux MPTCP complémentaire relayé partageant les adresses IP source et récepteur du sous flux MPTCP initial relayé créé dans l'exemple de mise en oeuvre décrit en relation avec la Fig. 9.

Dans l'exemple de la Fig. 10, un lien intermédiaire s'ouvre à partir du CRI 1002 et en direction du récepteur 1006.

Suite à l'ouverture du lien intermédiaire, une procédure de signalisation d'une ouverture d'un nouveau lien intermédiaire décrite en relation avec des étapes 1101 et 1102 est lancée. Le CRI 1002 construit un entête de type ADD_SUBFLOW lors de l'étape 1101. L'entête ADD_SUBFLOW construit lors de l'étape 1101 ne diffère de l'entête ADD _SUBFLOW construit lors de l'étape 801 que par la présence du champ optionnel *Port.* Le numéro de port est compris dans une sous partie de la plage de numéros de ports correspondant à un lien pouvant être utilisé pour le sous flux MPTCP complémentaire relayé défini lors de l'étape 902. Par exemple si une sous partie de la plage de numéros de ports comprise entre la valeur « 2080 » et la valeur « 3079 » correspond à un lien non utilisé, le numéro de port prend la valeur « 2080 ».

Lors d'une étape 1102, le CRI 1002 détermine à qui transmettre des paquets DUP ACK contenant l'entête ADD_SUBFLOW. Il est nécessaire en effet de transmettre ces paquets à un destinataire capable de répondre à ces paquets. En d'autres termes, il est nécessaire que le destinataire soit compatible avec la méthode MPTCP+. Dans le réseau utilisé dans l'exemple décrit en relation avec la Fig. 10, la source 1001 et le récepteur 1006 ne sont pas compatibles avec la méthode MPTCP+. Seul le CRI 1005 est compatible avec la méthode MPTCP+ puisqu'il joue un rôle de relais TCP/MPTCP compatible avec la méthode MPTCP. L'entête ADD_SUBFLOW construit lors de l'étape 1101 est inséré, par exemple, dans plusieurs paquets DUP_ACK, chaque paquet DUP ACK étant transmis au CRI 1005 en utilisant des sous flux MPTCP existants différents destinés au CRI 1005 et transitant par le CRI 1002.

Suite à la réception d'au moins un desdits paquets DUP_ACK contenant l'entête ADD_SUBFLOW, le CRI 1005 crée et envoie à la source 1001, dans une étape 1103, similaire à l'étape 605, au moins un paquet de type DUP_ACK contenant un entête de type ADD_ADDR2 tel que décrit en relation avec la Fig. 14G. Les champs *Addr_Id* 1465 et *Address_IP* 1466 de l'entête ADD _ADDR2 prennent respectivement la valeur « 0 », correspondant à l'identifiant d'adresse utilisé dans le champ *Addr_Id* 1475 de l'entête INFO_SUBFLOW lors de la transmission du paquet SYN MPTCP lors de l'étape 902, et une adresse IP correspondant à cet identifiant. L'utilisation de l'identifiant d'adresse utilisé dans le champ *Addr_Id* 1475 lors de l'étape 902 permet d'indiquer à la source 1001 que le sous flux MPTCP complémentaire relayé à créer est un sous flux complémentaire du sous flux MPTCP initial relayé créé dans l'exemple de mise en oeuvre décrit en relation avec la Fig. 9. Par ailleurs, le CRI 1005 insère un champ optionnel *Port* 1467 dans l'entête ADD_ADDR2 et donne au champ *Port* 1467 de l'entête ADD_ADDR2 la valeur du champ *Port* 1448 de l'entête ADD_SUBFLOW (i.e. le port ayant le numéro de port « 2080 »).

La procédure de signalisation de l'ouverture d'un nouveau lien intermédiaire est suivie d'une procédure de poignée de mains en trois étapes entre la source 1001 et le CRI 1005. Cette procédure de poignée de mains en trois étapes, décrite en relation avec des étapes 1104 à 1107, 1109 à 1111 et 1112 à 1114, permet la création du sous flux MPTCP complémentaire relayé utilisant le nouveau lien. Cette procédure de poignée de mains en trois étapes est une procédure de poignée de mains en trois étapes spécifique.

Suite à la réception d'au moins un des paquets DUP ACK contenant l'entête ADD _ADDR2, la source 1001 crée et envoie, lors d'une étape 1104, un paquet SYN MPTCP contenant un entête MP_JOIN classique, tel que décrit dans le standard MPTCP. Le paquet SYN contenant l'entête MP_JOIN est transmis vers un port de destination du CRI 1002 dont le numéro de port correspond au numéro de port indiqué dans le champ *Port* de l'entête ADD _ADDR2 reçu par la source 1001 (i.e. le port ayant le numéro de port « 2080 »).

Lors d'une étape 1105, le CRI 1002 reçoit le paquet SYN MPTCP contenant l'entête MP_JOIN sur un port de destination correspondant au numéro de port indiqué dans l'entête ADD _ADDR2 (i.e. le port ayant le numéro de port « 2080 »). La réception sur ce port de destination permet au CRI 1002 de déterminer qu'il est en présence d'un paquet SYN MPTCP relatif au sous flux MPTCP complémentaire relayé dont il a initié la création. Le CRI 1002 construit alors un entête INFO_SUBFLOW adapté et un entête MP_JOIN+. Le champ *Address_Id* 1425 de l'entête MP_JOIN+ prend la même valeur d'identifiant d'adresse que le champ *Addr_Id* 1405 de l'entête INFO_SUBFLOW adapté du paquet SYN MPTCP créé lors de l'étape 902. Le champ *Subflow_Id* 1424 de l'entête MP_JOIN+ n'est pas utilisé et prend une valeur quelconque, par exemple la valeur « 0 ». En effet, dans cet exemple, l'utilisation du champ *Subflow_Id* 1424 n'est plus nécessaire pour identifier un sous flux puisque un sous flux peut être identifié à partir des informations représentatives de numéros de ports. Un ensemble de numéros de port local dépendant du numéro de port indiqué dans l'entête ADD _ADDR2 est défini et sauvegardé en mémoire par le CRI 1002. Le champ *Port_fïrst* 1476 prend une valeur de numéro de port appartenant à la même sous partie de la plage de numéros de port que la valeur du numéro de port indiquée dans l'entête ADD_ADDR2. Par exemple, le champ *Port_fïrst* 1476 prend la valeur de numéro de port indiquée dans l'entête ADD_ADDR2. Le champ *Port_last* 1477 prend une valeur de numéro de port comprise dans la même sous partie de la plage de numéros de port que le numéro de port indiqué dans le paquet ADD_ADDR2. Par exemple, si le champ *Port_first* 1476 prend la valeur « 2080 » indiquée dans l'entête ADD_ADDR2, le champ *Port_last* 1477 prend la valeur « 3079 ». Les entêtes MP_JOIN+ et INFO_SUBFLOW ainsi créés sont utilisés pour remplacer l'entête MP_JOIN dans le paquet SYN MPTCP reçu lors de l'étape 1105. Le paquet SYN MPTCP ainsi modifié est ensuite transmis en direction du récepteur 1006 en utilisant le nouveau lien.

Lors d'une étape 1106, le CRI 1004 reçoit le paquet SYN MPTCP contenant l'entête MP_JOIN+ et l'entête INFO_SUBFLOW. La réception du paquet SYN MPTCP indique au CRI 1004 qu'une phase de création d'un sous flux MPTCP complémentaire relayé est en cours. Le CRI 1004 définit un ensemble de numéros de port local compris dans la plage de numéros de port indiquée par les champs *Port_first* 1476 et *Port_last* 1477 du paquet SYN MPTCP. Par la suite, le CRI 1004 remplace les valeurs des champs *Port_first* 1476 et *Port_last* 1477 du paquet SYN MPTCP par des valeurs représentant l'ensemble de numéros de port local défini par le CRI 1004. Par exemple, si la plage de numéros de ports reçue par le CRI 1004 est comprise entre la valeur « 2080 » et la valeur « 3079 », le CRI 1004 peut fixer la valeur du champ *Port_first* 1476 à « 2080 » et la valeur du champ *Port_last* 1477 à « 2279 ». Le paquet SYN MPTCP ainsi modifié est ensuite transmis en direction du récepteur 1006.

Dans une étape 1107, le CRI 1005 reçoit le paquet SYN MPTCP.

Dans une étape 1109, le CRI 1005 construit et envoie un paquet SYN/ACK MPTCP avec un entête MP_JOIN+ et un entête INFO_SUBFLOW en direction de la source 1001. Le champ *Subflow_Id* 1434 de l'entête MP_JOIN+ n'est pas utilisé et prend une valeur quelconque, par exemple la valeur « 0 ». Le champ *TypeOfLink* 1414 et les champs *A* 1415 et *B* 1416 de l'entête INFO_SUBFLOW, donnent respectivement des indications sur le nouveau lien, et des indications sur un algorithme de cryptage utilisé.

Lors de la réception du paquet SYN/ACK MPTCP, le CRI 1004 met en oeuvre une étape 1110 similaire à l'étape 907.

Lors d'une étape 1111, le CRI 1002 reçoit le paquet SYN/ACK MPTCP. En consultant l'entête INFO_SUBFLOW ainsi que les informations sauvegardées en mémoire lors des étapes 902 et 1105 le CRI 1002 sait que ce paquet doit être transmis à la source 1001 qui n'est pas compatible avec la méthode MPTCP+. Par conséquent, lors de l'étape 1111, le CRI 1002 supprime les entêtes MP_JOIN+ et INFO_SUBFLOW du paquet SYN/ACK MPTCP et les remplace par un entête MP_JOIN classique. Le CRI 1002 transmet ensuite le paquet SYN/ACK MPTCP ainsi modifié à la source 1001.

On peut noter que dans un mode de réalisation de l'étape 1111, le CRI 1002 ne remplace pas les entêtes MP_JOIN+ et INFO_SUBFLOW par un entête MP_JOIN. Dans ce cas, les entêtes et champs relatifs à la méthode MPTCP+ sont ignorés par la source 1001.

Dans une étape 1112, en réponse à la réception du paquet SYN/ACK MPTCP, la source 1001 transmet un paquet ACK MPTCP avec un entête MP_JOIN classique vers un port de destination du CRI 1002 dont le numéro de port est indiqué dans le champ *Port* de l'entête ADD_ADDR2 reçu par la source 1001.

Dans une étape 1113, lors de la réception du paquet ACK MPTCP sur le port de destination dont le numéro de port est indiqué dans le champ *Port* 1467 de l'entête ADD_ADDR2, le CRI 1002 sait qu'il est en présence d'un paquet ACK MPTCP relatif au sous flux MPTCP complémentaire relayé dont il est à l'origine. Lors de l'étape 1113, un entête MP_JOIN+ et un entête INFO_SUBFLOW sont construits par le CRI 1002. Les champs *TypeOfLink* 1414, *A* 1415 et *B* 1416 sont recopiés à partir des champs correspondants du paquet SYN/ACK MPTCP reçu lors de l'étape 1111. L'entête MP_JOIN du paquet ACK MPTCP est ensuite remplacé par les entêtes MP_JOIN+ et INFO_SUBFLOW. Le paquet ACK MPTCP ainsi modifié est transmis en direction du récepteur 1006 en utilisant le nouveau lien.

Dans une étape 1114, le CRI 1004 reçoit le paquet ACK MPTCP. Le paquet ACK MPTCP est ensuite retransmis au CRI 1005, ce qui met fin à la procédure de poignée de mains en trois étapes.

Le sous flux MPTCP complémentaire relayé ainsi créé est relayé par un flux TCP existant, comme par exemple, le flux TCP relais créé lors des étapes 904, 905 et 912.

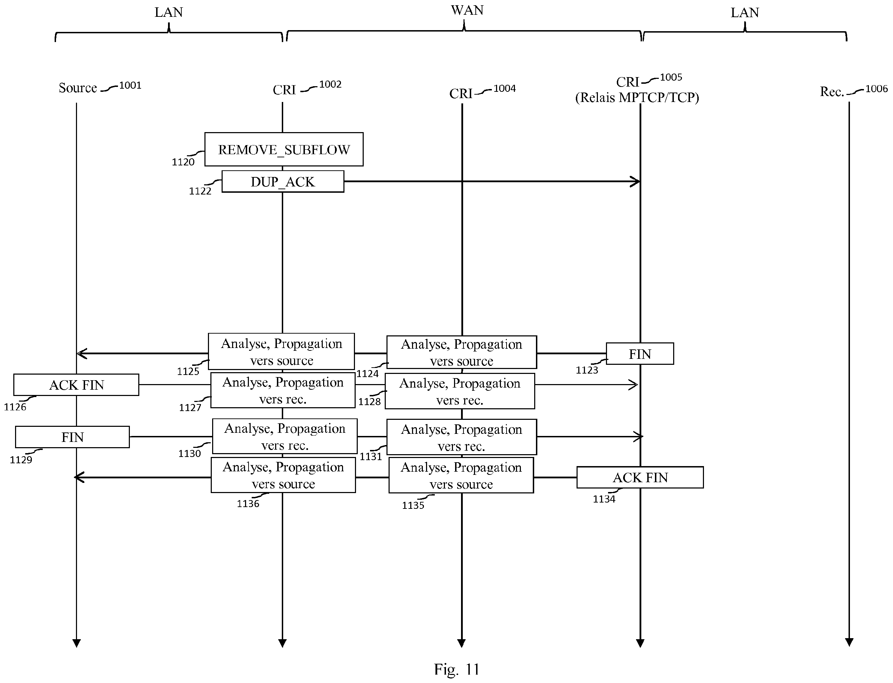

La **Fig. 11** représente schématiquement un exemple de mise en oeuvre d'un procédé de suppression du sous flux complémentaire d'une connexion MPTCP initiée par un CRI dans un réseau dans lequel une source apte à mettre en oeuvre le protocole MPTCP, mais inapte à mettre en oeuvre la méthode MPTCP+, communique avec un récepteur TCP par l'intermédiaire d'au moins un CRI mettant en oeuvre la méthode MPTCP+. Nous reprenons ici le réseau décrit en relation avec la Fig. 7A et supposons que l'exemple de mise en oeuvre de la Fig. 11 suit la création d'un sous flux MPTCP complémentaire relayé décrit en relation avec la Fig. 10.

Dans l'exemple décrit en relation avec la Fig. 11, la phase de fermeture est initiée par le CRI à l'origine de la demande de création du sous flux complémentaire, *i.e.* par le CRI 1002. Dans ce cas, la phase de fermeture suit une procédure similaire à la procédure spécifique à la méthode MPTCP+ décrite en relation avec les étapes 519 à 521 et 524 à 543 de la Fig. 5. Cette procédure débute par la création lors d'une étape 1120 d'un entête de type REMOVE_SUBFLOW.

Le champ *SF_Id* 1454 de chaque entête REMOVE_SUBFLOW prend une valeur par défaut, par exemple « 0 ». En effet, dans l'exemple de la Fig. 11, l'identification du sous flux MPTCP à supprimer utilise le numéro de port utilisé par le CRI 1002 pour la transmission du sous flux MPTCP complémentaire relayé plutôt que la valeur du champ *SF_Id* 1454.

Le champ *Addr_Id* 1455 de l'entête REMOVE_SUBFLOW prend la même valeur que le champ *Addr_Id* 1445 de l'entête ADD_SUBFLOW construit par le CRI 1002 lors de l'étape 1101.

Le champ *D* de l'entête REMOVE_SUBFLOW prend une valeur indiquant à la source 1001 qu'elle doit lancer une procédure de fermeture du sous flux MPTCP complémentaire relayé. Dans cet exemple, le champ *Port* 1458 prend la valeur du port utilisé par le CRI 1002 pour transmettre le sous flux MPTCP complémentaire relayé, utilisé, par exemple, lors de l'étape 1110.

L'entête REMOVE_SUBFLOW créé lors de l'étape 1120 est inséré, lors d'une étape 1122, dans au moins un paquet DUP_ACK transitant par le CRI 1002 et à destination du CRI 1005, le CRI 1005 étant la seule entité dans le réseau de la Fig. 11 à pouvoir répondre à un paquet contenant l'entête REMOVE_SUBFLOW. Dans un mode de réalisation, chaque paquet DUP_ACK est transmis dans un sous flux MPTCP différent destiné à la source 1001 transitant par le CRI 1002.

Lorsque le CRI 1005 reçoit le paquet DUP_ACK contenant l'entête REMOVE_SUBFLOW, le CRI 1005 lance une phase de fermeture du sous flux MPTCP complémentaire. Cette phase débute, lors d'une étape 1123, par un envoi, par le CRI 1005, d'un paquet FIN en direction du CRI 1002. Le CRI 1005 utilise le numéro de port indiqué dans le champ *port* 1458 de l'entête REMOVE_SUBFLOW pour identifier le sous flux MPTCP à supprimer.

Dans une étape 1124, le CRI 1004 analyse et propage le paquet FIN en direction du CRI 1002.

Dans une étape 1125, le CRI 1002 reçoit le paquet FIN sur le port indiqué par le champ *port* 1458 de l'entête REMOVE_SUBFLOW. La réception du paquet FIN sur ce port indique au CRI 1002 qu'une phase de suppression du sous flux MPTCP complémentaire relayé dont il a initié la création est en cours.

Lors d'une étape 1126, en réponse à la réception d'un paquet FIN en provenance du CRI 1002, la source 1001 envoie un accusé de réception du paquet FIN sur le port du CRI 1002 indiqué dans le champ *port* 1458 de l'entête REMOVE_SUBFLOW.

Lors d'une étape 1127 le CRI 1002 reçoit l'accusé de réception du paquet FIN sur le port du CRI 1002 indiqué dans le champ *port* 1458 de l'entête REMOVE_SUBFLOW et retransmet ce paquet au CRI 1004.

Lors d'une étape 1128, le CRI 1004 reçoit l'accusé de réception du paquet Fin et le retransmet au CRI 1005. L'étape 1128 met fin à la procédure de suppression du sous flux MPTCP complémentaire relayé du côté du CRI 1005.

Une phase de fermeture du sous flux MPTCP complémentaire relayé est ensuite lancée par la source 1001. Cette phase débute lors d'une étape 1129 par un envoi par la source 1001 d'un paquet FIN en direction du CRI 1005.

Lors d'une étape 1130, le CRI 1002 reçoit le paquet FIN et le retransmet au CRI 1004. Dans une étape 1131, le CRI 1004 reçoit le paquet FIN et le retransmet au CRI 1005.

Lors d'une étape 1134, en réponse à la réception du paquet FIN, le CRI 1005 envoie un accusé de réception du paquet FIN en direction du CRI 1002.

Lors d'une étape 1135, le CRI 1004 reçoit l'accusé de réception du paquet FIN et le retransmet au CRI 1002.

Lors d'une étape 1136, le CRI 1002 reçoit l'accusé de réception du paquet FIN indiquant au CRI 1002 que la phase de suppression du sous flux MPTCP complémentaire relayé prend fin. De plus, le CRI 1002 sait qu'il doit transmettre un accusé de réception du paquet FIN à la source 1001.

La réception de l'accusé de réception du paquet FIN par la source 1001 termine la procédure de suppression du sous flux MPTCP complémentaire relayé.

La **Fig. 12A** représente schématiquement un exemple de mise en oeuvre d'un procédé selon l'invention de création d'un sous flux MPTCP initial dans un réseau dans lequel une source TCP communique avec un récepteur TCP par l'intermédiaire de CRI mettant en oeuvre la méthode MPTCP+, deux des CRI mettant en oeuvre la méthode MPTCP+ étant des relais TCP/MPTCP.

Nous réutilisons dans l'exemple décrit en relation avec la Fig. 12A, le réseau décrit en relation avec la Fig. 1. Toutefois dans l'exemple de la Fig. 12A, la source 1001 et le récepteur 1006 sont incompatibles avec le protocole MPTCP et la méthode MPTCP+ et communiquent en utilisant le protocole TCP. Les CRI 1002 et 1005 sont des relais TCP/MPTCP et sont compatibles avec la méthode MPTCP+.

Par ailleurs, nous supposons ici qu'un seul chemin existe entre la source 1001 et le récepteur 1006, de sorte qu'il n'y a jamais d'ambiguïté sur les liens à utiliser par une unité réseau. L'entête INFO_SUBFLOW de paquet SYN utilisé dans cet exemple est donc celui décrit en relation avec la Fig. 14A.

Dans une étape 1200, la source 1001 démarre une première procédure de poignée de mains en trois étapes pour créer un flux TCP entre la source 1001 et le CRI 1002. Pour cela, la source 1001 envoie un paquet SYN TCP au CRI 1002. Dans une étape 1209, le CRI 1002 envoie un paquet SYN/ACK TCP à la source 1001. La première procédure de poignée de mains en trois étapes créant un flux TCP entre la source 1001 et le CRI 1002 se termine par une étape 1210, au cours de laquelle la source 1001 envoie un paquet ACK TCP au CRI 1002. Le Flux TCP ainsi créé est un flux TCP relais puisque, comme nous le décrivons par la suite, il permet de relayer des données issues d'un sous flux MPTCP entre la source 1001 et le CRI 1002. Nous appelons par la suite le flux TCP relais créé entre la source 1001 et le CRI 1002, flux TCP relais source.

Suite à la réception du paquet SYN TCP envoyé lors de l'étape 1200 par la source 1001, le CRI 1002 lance une deuxième procédure de poignée de mains en trois étapes pour créer un sous flux MPTCP initial. Ce sous flux MPTCP initial utilise, par exemple, le même sextuplet que celui utilisé lors de la création d'un sous flux MPTCP initial décrit en relation avec la Fig. 4 par les étapes 401 à 415. Dans le cas de l'exemple décrit en relation avec la Fig. 12A, le sous flux MPTCP initial est un sous flux MPTCP initial relayé, d'une part par le flux TCP relais source et, comme nous le décrivons par la suite, par un flux TCP relais entre le CRI 1005 et le récepteur 1006, que nous appelons flux TCP relais récepteur. Cette deuxième procédure de poignée de mains en trois étapes débute dans une étape 1201 par la création et l'envoi d'un paquet SYN MPTCP avec un entête MP_CAPABLE et un entête INFO_SUBFLOW. Dans l'exemple de la Fig. 12A, le CRI 1002, se comporte comme une source du point de vue de la connexion MPTCP. Les entêtes MP CAPABLE et INFO_SUBFLOW sont donc identiques aux entêtes MP_CAPABLE et INFO_SUBFLOW construits par la source 1001 lors de l'étape 401.

Par ailleurs, lors de l'étape 1201, le CRI 1002 fait l'association entre le flux MPTCP relais source et le sous flux MPTCP initial relayé en cours de création. En faisant cette association, le CRI 1002 s'assure que chaque paquet TCP reçu par le CRI 1002 est aiguillé vers le sous flux MPTCP initial relayé et que chaque paquet MPTCP reçu par le CRI 1002 est aiguillé vers le flux TCP relais source.

Une fois créé, le paquet SYN MPTCP contenant les entêtes MP_CAPABLE et INFO_SUBFLOW est envoyé en direction du récepteur 1006.

Dans une étape 1202 identique à l'étape 403, le CRI 1003 reçoit le paquet SYN MPTCP contenant les entêtes MP_CAPABLE et INFO_SUBFLOW et le retransmet en direction du récepteur 1006. Dans une étape 1203 identique à l'étape 404, le CRI 1004 reçoit le paquet SYN MPTCP contenant les entêtes MP_CAPABLE et INFO_SUBFLOW et le retransmet en direction du récepteur 1006.

Dans une étape 1204, le CRI 1005 reçoit le paquet SYN MPTCP contenant les entêtes MP_CAPABLE et INFO_SUBFLOW et détermine que ce paquet est destiné au récepteur 1006. Le CRI 1005 met alors en oeuvre une troisième procédure de poignée de mains en trois étapes pour créer le flux TCP relais récepteur. Cette procédure comprend un envoi d'un paquet SYN TCP au récepteur 1006 lors d'une étape 1204, un envoi d'un paquet SYN/ACK TCP par le récepteur 1006 lors d'une étape 1205 en réponse au paquet SYN TCP, et un envoi d'un accusé de réception du paquet SYN/ACK TCP par le CRI 1005 lors d'une étape 1214. De la même manière que le CRI 1002 avait fait l'association entre le flux TCP relais source et le sous flux MPTCP initial relayé, lors de l'étape 1204, le CRI 1005 fait l'association entre le flux TCP relais récepteur et le sous flux MPTCP initial relayé. En faisant cette association, le CRI 1005 s'assure que chaque paquet TCP reçu par le CRI 1005 est aiguillé vers le sous flux MPTCP initial relayé et que chaque paquet MPTCP reçu par le CRI 1005 est aiguillé vers le flux TCP relais récepteur.

Lors d'une étape 1206, suite à la réception du paquet SYN MPTCP contenant les entêtes MP_CAPABLE et INFO_SUBFLOW, le CRI 1005 construit un paquet SYN/ACK MPTCP contenant un entête MP_CAPABLE et un entête INFO_SUBFLOW. Dans l'exemple décrit en relation avec la Fig. 12A, le CRI 1005 se comporte comme un récepteur. Les entêtes MP_CAPABLE et INFO_SUBFLOW sont donc identiques aux entêtes MP_CAPABLE et INFO_SUBFLOW construits par le récepteur 1006 lors de l'étape 406.

Une fois créé, le paquet SYN/ACK MPTCP contenant les entêtes MP_CAPABLE et INFO_SUBFLOW est envoyé en direction de la source 1001.

Dans une étape 1207 identique à l'étape 408, le CRI 1004 reçoit le paquet SYN/ACK MPTCP contenant les entêtes MP_CAPABLE et INFO_SUBFLOW et le retransmet en direction de la source 1001. Dans une étape 1208 identique à l'étape 409, le CRI 1003 reçoit le paquet SYN/ACK MPTCP contenant les entêtes MP_CAPABLE et INFO_SUBFLOW et le retransmet en direction de la source 1001.

Dans une étape 1211, suite à la réception du paquet SYN/ACK MPTCP contenant les entêtes MP_CAPABLE et INFO_SUBFLOW, le CRI 1002 construit un paquet ACK MPTCP contenant un entête MP_CAPABLE et un entête INFO_SUBFLOW identiques respectivement à l'entête MP_CAPABLE et à l'entête INFO_SUBFLOW construits lors de l'étape 411.

Dans une étape 1212 identique à l'étape 413, le CRI 1003 reçoit le paquet ACK MPTCP contenant les entêtes MP_CAPABLE et INFO_SUBFLOW et le retransmet en direction du récepteur 1006. Dans une étape 1203 identique à l'étape 404, le CRI 1004 reçoit le paquet ACK MPTCP contenant les entêtes MP_CAPABLE et INFO_SUBFLOW et le retransmet en direction du récepteur 1006.

La procédure de poignée de main en trois étapes permettant la création du sous flux MPTCP initial relayé se termine lors de la réception par la CRI 1005 du paquet ACK MPTCP contenant les entêtes MP_CAPABLE et INFO_SUBFLOW.

La source 1001 et le récepteur 1006 peuvent alors communiquer en utilisant le flux TCP relais source entre la source 1001 et le CRI 1002, le sous flux MPTCP initial relayé entre le CRI 1002 et le CRI 1005 et le flux TCP relais récepteur entre le CRI 1005 et le récepteur 1006.

La **Fig. 12B** représente schématiquement un exemple de mise en oeuvre d'un procédé selon l'invention de création d'un sous flux MPTCP additionnel dans un réseau dans lequel une source TCP communique avec un récepteur TCP par l'intermédiaire de CRI mettant en oeuvre la méthode MPTCP+, deux des CRI mettant en oeuvre la méthode MPTCP+ étant des relais TCP/MPTCP.

Nous réutilisons dans l'exemple décrit en relation avec la Fig. 12B, le réseau décrit en relation avec la Fig. 1. Comme dans l'exemple de la Fig. 12A, la source 1001 et le récepteur 1006 sont incompatibles avec le protocole MPTCP et la méthode MPTCP+ et communiquent en utilisant le protocole TCP. Les CRI 1002 et 1005 sont des relais TCP/MPTCP et sont compatibles avec la méthode MPTCP+.

Par ailleurs, nous supposons que la mise en oeuvre décrite en relation avec la Fig. 12B suit la mise en oeuvre décrite en relation avec la Fig. 12A, de sorte que le sous flux MPTCP additionnel créé dans l'exemple de la Fig. 12B est un sous flux MPTCP additionnel appartenant à la même connexion MPTCP que le sous flux MPTCP initial relayé dont la création a été décrite en relation avec la Fig. 12A. Le flux MPTCP additionnel est un sous flux MPTCP additionnel relayé puisque, comme nous le décrivons par la suite, deux flux TCP relais sont utilisés pour le relayer.

Nous supposons de plus, que les flux TCP relais utilisés pour relayer le sous flux MPTCP additionnel relayé, sont le flux TCP relais source et le flux TCP relais récepteur créés lors de la mise en oeuvre décrite en relation avec la Fig. 12A. En d'autres termes, aucun flux TCP relais n'est créé spécifiquement pour le sous flux MPTCP additionnel relayé. Ce sont donc les mêmes sous flux MPTCP relais qui sont utilisés pour relayer le sous flux TCP initial relayé et le sous flux MPTCP additionnel relayé.

Dans une étape 1221, le CRI 1002 lance une procédure de poignées de mains en trois étapes pour créer le sous flux MPTCP additionnel relayé. Le sous flux MPTCP initial relayé utilise, par exemple, le même sextuplet que celui utilisé lors de la création d'un sous flux MPTCP additionnel décrit en relation avec la Fig. 4 par les étapes 416 à 430. La procédure de poignée de mains en trois étapes débute dans une étape 1221 par la création et l'envoi d'un paquet SYN MPTCP avec un entête MP_JOIN+ et un entête INFO_SUBFLOW. Les entêtes MP_CAPABLE et INFO_SUBFLOW sont identiques respectivement aux entêtes MP_CAPABLE et INFO_SUBFLOW construits par la source 1001 lors de l'étape 416.

Par ailleurs, lors de l'étape 1221, le CRI 1002 fait l'association entre le flux MPTCP relais source et le sous flux MPTCP additionnel relayé en cours de création.

En faisant cette association, le CRI 1002 s'assure que chaque paquet TCP reçu par le CRI 1002 est aiguillé soit vers le sous flux MPTCP initial relayé, soit vers le sous flux additionnel relayé. Le choix du sous flux MPTCP à utiliser dépend par exemple d'informations représentatives d'un niveau d'utilisation de chaque sous flux MPTCP. Par ailleurs, chaque paquet MPTCP reçu par le CRI 1002 est aiguillé vers le flux TCP relais source, qu'il provienne du sous flux MPTCP initial relayé ou du sous flux MPTCP additionnel relayé.

Une fois créé, le paquet SYN MPTCP contenant les entêtes MP_JOIN+ et INFO_SUBFLOW est envoyé en direction du récepteur 1006.

Dans une étape 1222 identique à l'étape 418, le CRI 1003 reçoit le paquet SYN MPTCP contenant les entêtes MP_JOIN+ et INFO_SUBFLOW et le retransmet en direction du récepteur 1006. Dans une étape 1223 identique à l'étape 419, le CRI 1004 reçoit le paquet SYN MPTCP contenant les entêtes MP_JOIN+ et INFO_SUBFLOW et le retransmet en direction du récepteur 1006.

Dans une étape 1226, le CRI 1005 reçoit le paquet SYN MPTCP contenant les entêtes MP_JOIN+ et INFO_SUBFLOW et fait l'association entre le flux TCP relais récepteur et le sous flux MPTCP additionnel relayé. En faisant cette association, le CRI 1005 s'assure que chaque paquet TCP reçu par le CRI 1005 est aiguillé soit vers le sous flux MPTCP initial relayé, soit vers le sous flux MPTCP additionnel relayé. Le choix du sous flux MPTCP à utiliser est déterminé par le CRI 1005 par exemple en fonction d'un niveau d'utilisation de chaque sous flux MPTCP. De plus, chaque paquet MPTCP reçu par le CRI 1005 est aiguillé vers le flux TCP relais récepteur.

Par ailleurs, lors de l'étape 1226, suite à la réception du paquet SYN MPTCP contenant les entêtes MP_JOIN+ et INFO _SUBFLOW, le CRI 1005 construit un paquet SYN/ACK MPTCP contenant un entête MP_JOIN+ et un entête INFO_SUBFLOW. Les entêtes MP_JOIN+ et INFO_SUBFLOW sont identiques respectivement aux entêtes MP_JOIN+ et INFO_SUBFLOW construits par le récepteur 1006 lors de l'étape 421.

Une fois créé, le paquet SYN/ACK MPTCP contenant les entêtes MP_JOIN+ et INFO_SUBFLOW est envoyé en direction de la source 1001.

Dans une étape 1227 identique à l'étape 423, le CRI 1004 reçoit le paquet SYN/ACK MPTCP contenant les entêtes MP_JOIN+ et INFO_SUBFLOW et le retransmet en direction de la source 1001. Dans une étape 1228 identique à l'étape 424, le CRI 1003 reçoit le paquet SYN/ACK MPTCP contenant les entêtes MP_JOIN+ et INFO_SUBFLOW et le retransmet en direction de la source 1001.

Dans une étape 1231, suite à la réception du paquet SYN/ACK MPTCP contenant les entêtes MP_JOIN+ et INFO_SUBFLOW, le CRI 1002 construit un paquet ACK MPTCP contenant un entête MP_JOIN+ et un entête INFO_SUBFLOW identiques respectivement à l'entête MP_JOIN+ et à l'entête INFO_SUBFLOW construits par la source 1001 lors de l'étape 426.

Dans une étape 1232 identique à l'étape 428, le CRI 1003 reçoit le paquet ACK MPTCP contenant les entêtes MP_JOIN+ et INFO_SUBFLOW et le retransmet en direction du récepteur 1006. Dans une étape 1233 identique à l'étape 429, le CRI 1004 reçoit le paquet ACK MPTCP contenant les entêtes MP_JOIN+ et INFO_SUBFLOW et le retransmet en direction du récepteur 1006.

La procédure de poignée de main en trois étapes permettant la création du sous flux MPTCP additionnel relayé se termine lors de la réception par le CRI 1005 du paquet ACK MPTCP contenant les entêtes MP_JOIN+ et INFO_SUBFLOW.

La source 1001 et le récepteur 1006 peuvent alors communiquer en utilisant le flux TCP relais source entre la source 1001 et le CRI 1002, le sous flux MPTCP initial relayé et le sous flux MPTCP additionnel relayé entre le CRI 1002 et le CRI 1005 et le flux relais récepteur entre le CRI 1005 et le récepteur 1006.

La **Fig. 13** représente schématiquement un exemple de mise en oeuvre d'un procédé selon l'invention de création d'un sous flux MPTCP complémentaire dans un réseau dans lequel une source TCP communique avec un récepteur TCP par l'intermédiaire de CRI mettant en oeuvre la méthode MPTCP+, deux des CRI mettant en oeuvre la méthode MPTCP+ étant des relais TCP/MPTCP.

Nous réutilisons dans l'exemple décrit en relation avec la Fig. 13, le réseau décrit en relation avec la Fig. 1. Comme dans l'exemple de la Fig. 12A, la source 1001 et le récepteur 1006 sont incompatibles avec le protocole MPTCP et la méthode MPTCP+ et communiquent en utilisant le protocole TCP. Les CRI 1002 et 1005 sont des relais TCP/MPTCP et sont compatibles avec la méthode MPTCP+.

Par ailleurs, nous supposons que la mise en oeuvre décrite en relation avec la Fig. 13 suit les mises en oeuvre décrites en relation avec les Figs. 12A et 12B. Nous supposons que le sous flux MPTCP complémentaire créé dans l'exemple de la Fig. 13 est un sous flux MPTCP complémentaire du sous flux MPTCP initial relayé dont la création a été décrite en relation avec la Fig. 12A. Le flux MPTCP complémentaire est un flux MPTCP complémentaire relayé puisque, comme nous le décrivons par la suite, deux flux TCP relais sont utilisés pour le relayer.

Nous supposons de plus, que les flux TCP relais utilisés pour relayer le sous flux MPTCP complémentaire relayé, sont le flux TCP relais source et le flux TCP relais récepteur créés lors de la mise en oeuvre décrite en relation avec la Fig. 12A.

Dans l'exemple de mise en oeuvre de la Fig. 13, un nouveau lien intermédiaire s'ouvre à partir du CRI 1003, en direction du CRI 1005. Un objectif de la création du sous flux MPTCP complémentaire relayé est d'utiliser ce nouveau lien intermédiaire.

Le procédé de création du sous flux MPTCP complémentaire relayé est très similaire au procédé de création d'un sous flux MPTCP complémentaire décrit en relation avec la Fig. 5. En effet, ce procédé comprend une procédure de signalisation d'une ouverture d'un nouveau lien intermédiaire et une procédure de poignée de mains en trois étapes entre le CRI 1002, se comportant comme une source du point de vue de la connexion MPTCP, et le CRI 1005, se comportant comme un récepteur du point de vue de la connexion MPTCP.

Dans l'exemple de mise en oeuvre décrit en relation avec la Fig. 13, le sous flux MPTCP complémentaire relayé partage les adresses IP source et récepteur et les numéros de port source et récepteur du sous flux MPTCP initial relayé créé dans la mise en oeuvre décrite en relation avec la Fig. 12A.

Dans une étape 1300, le CRI 1003 débute la procédure de signalisation de l'ouverture d'un lien intermédiaire par une construction d'un entête de type ADD_SUBFLOW.

Lors d'une étape 1301, le CRI 1003 positionne les champs *SF_Id* 1444 et *Addr_Id* 1445 à des valeurs permettant d'identifier quel sous flux MPTCP initial ou additionnel doit servir de base à la création du sous flux MPTCP complémentaire relayé. Puisque, dans l'exemple de la Fig. 13, c'est le sous flux MPTCP initial relayé qui est utilisé, les champs *SF_Id* 1444 et *Addr_Id* 1445 prennent des valeurs correspondant au sous flux MPTCP initial relayé. Le champ *D* 1446 prend la valeur « 0 » pour indiquer que c'est au CRI 1002 d'initier la création du sous flux MPTCP complémentaire. Le champ *Seq_Req* 1447 prend une valeur aléatoire « AL3 » déterminée par le CRI 1003. La valeur aléatoire « AL3 » du champ *Seq_Req* 1447 est stockée dans la mémoire du CRI 1003. Dans cet exemple, le champ optionnel *Port* 1448 de l'entête ADD_SUBFLOW n'est pas utilisé puisqu'il n'y a pas d'ambiguïté sur le chemin à emprunter entre le CRI 1002 et le CRI 1005.

La procédure de signalisation d'une ouverture d'un nouveau lien intermédiaire se poursuit par une étape 1301 au cours de laquelle l'entête ADD_SUBFLOW est inséré dans au moins un paquet DUP_ACK destiné à la source 1001. Dans un mode de réalisation, l'entête ADD_SUBFLOW est inséré dans plusieurs paquets DUP_ACK transitant par le CRI 1003, en utilisant plusieurs sous flux MPTCP existants destinés à la source 1001.

Suite à la réception d'au moins un des paquets DUP_ACK contenant l'entête ADD_SUBFLOW, le CRI 1002 associe le sous flux MPTCP complémentaire relayé au flux TCP relais source. En faisant cette association, le CRI 1002 s'assure que chaque paquet TCP reçu par le CRI 1002 est aiguillé vers l'un des sous flux MPTCP (initial relayé, additionnel relayé ou complémentaire relayé). Le choix du sous flux MPTCP à utiliser peut dépendre, là encore, d'informations représentatives d'un niveau d'utilisation de chaque sous flux MPTCP. De plus, chaque paquet MPTCP reçu par le CRI 1002 est aiguillé vers le flux TCP relais source, qu'il provienne du sous flux MPTCP initial relayé, du sous flux MPTCP additionnel relayé ou du sous flux MPTCP complémentaire relayé.

Par ailleurs, lors de l'étape 1302, le CRI 1002 lance une procédure de poignée de mains en trois étapes pour créer le sous flux MPTCP complémentaire relayé. La procédure de poignée de mains en trois étapes débute par la création puis l'envoi par le CRI 1002, lors de l'étape 1302, d'un paquet SYN MPTCP comprenant un entête MP_JOIN+ et un entête INFO_SUBFLOW.

Le paquet SYN MPTCP créé lors de l'étape 1221 est très similaire au paquet SYN MPTCP créé lors de l'étape 504. Seule la valeur du champ *Seq_Req* 1406 de l'entête INFO_SUBFLOW est différente et prend la valeur aléatoire « AL3 ».

Dans une étape 1303, identique à l'étape 506, le CRI 1003 reçoit le paquet SYN MPTCP contenant les entêtes MP_JOIN+ et INFO_SUBFLOW. En lisant la valeur du champ *Seq_Req* 1406 de l'entête INFO_SUBFLOW, le CRI 1003 détermine que ce paquet se rapporte à la procédure de création du sous flux MPTCP complémentaire relayé dont il a l'origine, et en déduit que ce paquet doit être retransmis vers le CRI 1005 en utilisant le nouveau lien intermédiaire.

Lors d'une étape 1304 identique à l'étape 507, le CRI 1004 reçoit le paquet SYN MPTCP comprenant les entêtes MP_JOIN+ et INFO_SUBFLOW et le retransmet au CRI 1005.

Suite à la réception du paquet SYN MPTCP comprenant les entêtes MP_JOIN+ et INFO_SUBFLOW, le CRI 1005 construit et envoie, lors de l'étape 1305, un paquet SYN/ACK MPTCP avec un entête MP_JOIN+ et un entête INFO_SUBFLOW. Le paquet SYN/ACK créé lors de l'étape 1305 est identique au paquet SYN/ACK créé lors de l'étape 509.

Lors d'étapes 1306 et 1307, respectivement identiques aux étapes 511 et 512, les CRI 1004 et 1003 reçoivent le paquet SYN/ACK MPTCP comprenant les entêtes MP_JOIN+ et INFO_SUBFLOW et le retransmettent au CRI 1002.

Lors d'une étape 1308, le CRI 1002 crée un paquet ACK MPTCP comprenant un entête MP_JOIN+ et un entête INFO_SUBFLOW. Les entêtes MP_JOIN+ et INFO_SUBFLOW sont respectivement identiques aux entêtes MP_JOIN+ et INFO_SUBFLOW créés par la source 1001 lors de l'étape 514.

Lors d'étapes 1309 et 1310 respectivement identiques aux étapes 516 et 517, les CRI 1003 et 1004 reçoivent le paquet ACK MPTCP comprenant un entête MP_JOIN+ et un entête INFO_SUBFLOW et le retransmettent aux CRI 1005 en utilisant le nouveau lien intermédiaire. Le procédé de création du sous flux MPTCP complémentaire relayé se termine lorsque le CRI 1005 reçoit le paquet ACK MPTCP comprenant un entête MP_JOIN+ et un entête INFO_SUBFLOW.

La source 1001 et le récepteur 1006 peuvent alors communiquer en utilisant le flux TCP relais source entre la source 1001 et le CRI 1002, le sous flux MPTCP initial relayé, le sous flux MPTCP additionnel relayé et le sous flux MPTCP complémentaire relayé entre le CRI 1002 et le CRI 1005 et le flux relais récepteur entre le CRI 1005 et le récepteur 1006.

Dans les exemples de mises en oeuvre décrits en relation avec les Figs. 12A, 12B et 13, chaque relais TCP/MPTCP peut être remplacé par une unité réseau apte à réaliser une encapsulation. Dans ce cas, plutôt que d'être relayé, chaque flux TCP est encapsulé dans une connexion MPTCP composée de plusieurs sous flux MPTCP. L'utilisation d'unités réseau aptes à réaliser une encapsulation n'a pas d'impact sur les procédés de création des sous flux MPTCP.

Dans une mise en oeuvre particulière, ces relais TCP/MPTCP sont remplacés par des unités réseau aptes à réaliser une encapsulation de sous flux MPTCP dans un flux TCP.

Dans cette mise en oeuvre particulière, chaque flux TCP encapsulé est appelé «flux TCP à encapsuler » et chaque sous flux MPTCP (initial, additionnel ou complémentaire) utilisé pour encapsuler un flux TCP est appelé « sous flux MPTCP (initial, additionnel ou complémentaire) d'encapsulation ».

Les procédures de poignée de mains en trois étapes permettant de créer un sous flux MPTCP initial d'encapsulation, un sous flux MPTCP additionnel d'encapsulation et un sous flux MPTCP complémentaire d'encapsulation, sont respectivement identiques aux procédures de poignée de mains en trois étapes permettant de créer un sous flux MPTCP initial relayé, un sous flux MPTCP additionnel relayé et un sous flux MPTCP complémentaire relayé décrit en relation avec les Figs. 12A, 12B et 13. Toutefois dans ce cas, le sous flux MPTCP initial d'encapsulation et le sous flux MPTCP additionnel d'encapsulation sont établis dès la création de l'encapsulation. Dans la mise en oeuvre particulière utilisant des unités réseau aptes à réaliser une encapsulation de plusieurs connexions TCP dans une connexion MPTCP, seuls les CRI 1002 et 1005 ont un comportement différent. En effet, plutôt que de relayer les flux TCP par des sous flux MPTCP et des sous flux MPTCP par des flux TCP, les CRI 1002 et 1005 encapsulent des flux TCP dans des sous flux MPTCP et décapsulent ces flux TCP des flux MPTCP.

La source 1001 et le récepteur 1006 peuvent ensuite communiquer dans le sens allant de la source 1001 au récepteur 1006, de façon transparente en utilisant l'encapsulation de type MPTCP configurée entre le CRI 1002 et le CRI 1005.

## Revendications

1. Procédé de création d'un sous flux de paquets de données complémentaire en complément d'un sous flux de paquets de données existant dans une connexion réseau, dite connexion réseau multi-lien, utilisant un protocole de transport adapté à un mode de communication multi-lien, la connexion réseau multi-lien étant mise en oeuvre dans un réseau de communication comprenant une pluralité d'unités réseau, une première unité réseau de la dite pluralité utilisant un ensemble de connexion comprenant ladite connexion réseau multi-lien pour communiquer avec une seconde unité réseau de ladite pluralité via une troisième unité réseau de ladite pluralité, dite composant réseau intermédiaire, **caractérisé en ce que**, suite à une ouverture d'un lien de communication intermédiaire à partir du composant réseau intermédiaire et en direction de la deuxième unité réseau, ledit composant réseau intermédiaire met en oeuvre les étapes suivantes:
• obtenir (502, 802, 1102, 1301) un paquet ayant pour destinataire la première ou la deuxième unité réseau et compatible avec ledit protocole de transport,
• créer (501, 801, 1101, 1300) un entête d'un premier type, l'entête du premier type étant représentatif d'une demande de création dudit sous flux de paquets de données complémentaire, le sous flux de paquets de données complémentaire étant destiné à utiliser le lien de communication intermédiaire dans une phase de transfert de paquets de données suivant la création du sous flux de paquets de données complémentaire,
• insérer (502, 802, 1102, 1301) ledit entête de premier type dans ledit paquet,
• transmettre (502, 802, 1102, 1301) ledit paquet en direction dudit destinataire de sorte à provoquer le lancement, par la première ou la deuxième unité réseau, d'une procédure de création dudit sous flux de paquets de données complémentaire dans le cadre de ladite connexion réseau multi-lien.

2. Procédé selon la revendication 1, **caractérisé en ce que**, pour chaque sous flux créé dans le cadre de ladite connexion réseau multi-lien, le composant réseau intermédiaire applique une procédure de traitement accéléré à chaque paquet transmis lors de phases de transfert de paquets de données utilisant au moins un desdits sous flux créé, et **en ce que** le composant réseau intermédiaire interrompt la procédure de traitement accéléré pour au moins un des sous flux créé afin de permettre d'obtenir ledit paquet dans lequel l'entête de premier type est à insérer et de transmettre ledit paquet dans lequel l'entête de premier type a été inséré.

3. Procédé selon la revendication 1 ou 2, **caractérisé en ce que** la procédure de création du sous flux de paquets de données complémentaire comprend une procédure de poignée de mains en trois étapes mise en oeuvre entre deux unités réseau de ladite pluralité comprenant :
• une première étape (504, 803, 1104, 1302) de création et de transmission d'un premier paquet de synchronisation en direction de la deuxième unité réseau via le composant réseau intermédiaire,
• une seconde étape (509, 808, 1109, 1305) de création et de transmission d'un second paquet de synchronisation en direction de la première unité réseau et via le composant réseau intermédiaire, le second paquet de synchronisation étant apte à accuser réception du premier paquet de synchronisation,
• une troisième étape (514, 811, 1112, 1308) de création et de transmission d'un paquet d'accusé de réception en direction de la deuxième unité réseau via le composant réseau intermédiaire,
au moins un paquet échangé lors de la procédure de poignée de mains en trois étapes comprend un entête d'un deuxième type comprenant des informations provoquant l'utilisation dudit lien de communication intermédiaire lors de la phase de transfert de paquets de données.

4. Procédé selon la revendication 3, **caractérisé en ce que** l'entête de deuxième type du premier paquet de synchronisation est créé et inséré par la première unité réseau (504, 803) dans ledit premier paquet de synchronisation.

5. Procédé selon la revendication 3, **caractérisé en ce que** l'entête du deuxième type du premier paquet de synchronisation est créé et inséré (1105) par le composant réseau intermédiaire dans ledit premier paquet de synchronisation.

6. Procédé selon la revendication 5, **caractérisé en ce que** l'entête du deuxième type du second paquet de synchronisation est supprimé (1111) dudit second paquet de synchronisation par le composant réseau intermédiaire avant d'être transmis à la première unité réseau.

7. Procédé selon la revendication 6, **caractérisé en ce que** l'entête du deuxième type du paquet d'accusé de réception est créé et inséré (1113) dans le paquet d'accusé de réception par le composant réseau intermédiaire.

8. Procédé selon l'une quelconque des revendications 1 à 4, **caractérisé en ce que**, lors de la création (501, 801, 1300) de l'entête du premier type, le composant réseau intermédiaire détermine un numéro de séquence aléatoire et insère ledit numéro de séquence aléatoire dans l'entête du premier type, ledit numéro de séquence aléatoire étant utilisé par le composant réseau intermédiaire pour identifier (506, 512, 516, 804, 810, 812, 1303, 1307, 1309) des paquets échangés entre la source et le récepteur via le composant réseau intermédiaire dans le cadre de la procédure de poignée de mains en trois étapes.

9. Procédé selon la revendication 8 lorsqu'elle dépend de la revendication 4, **caractérisé en ce que**, lors de la création du premier paquet de synchronisation, la valeur de numéro de séquence aléatoire déterminée par le composant réseau intermédiaire est copiée dans un premier champ de l'entête de second type, de sorte que, lorsque le composant réseau intermédiaire reçoit ultérieurement un premier paquet de synchronisation comprenant un premier champ dont la valeur est égale à la valeur dudit numéro de séquence aléatoire, le composant réseau intermédiaire détermine (506, 804, 1303) que ledit premier paquet de synchronisation se rapporte à la procédure de création du sous flux de paquets de données complémentaire et en déduit que le premier paquet de synchronisation doit être transmis en utilisant le lien de communication intermédiaire.

10. Procédé selon la revendication 9, **caractérisé en ce que**, lors de la création du premier paquet de synchronisation, un identifiant de sous flux défini par la première unité réseau est attribué au sous flux complémentaire et est inséré dans un deuxième champ de l'entête de second type et **en ce que**, lors de la réception, par le composant réseau intermédiaire, du premier paquet de synchronisation comprenant le premier champ dont la valeur est égale à la valeur dudit numéro de séquence aléatoire, le composant réseau intermédiaire associe l'identifiant de sous flux, défini par la première unité réseau, inséré dans le deuxième champ de l'entête de second type au lien intermédiaire de sorte que chaque paquet transmis par la première unité réseau lors de la phase de transfert de paquets de données utilise le lien de communication intermédiaire.

11. Procédé selon la revendication 10, **caractérisé en ce que**, lors de la création du premier paquet de synchronisation, le sous flux intermédiaire est associé à une adresse de la première unité réseau, l'adresse ayant été utilisée par le sous flux de paquets de données existant, et un identifiant de l'adresse de la première unité réseau est inséré dans un troisième champ de l'entête de second type, et **en ce que**, lors de la réception du premier paquet de synchronisation par le composant réseau intermédiaire, le composant réseau intermédiaire associe l'identifiant de l'adresse de la première unité réseau à l'identifiant de sous flux.

12. Procédé selon l'une quelconque des revendications 5 à 7, **caractérisé en ce que**, lors de la création (1101) de l'entête du premier type, le composant réseau intermédiaire détermine un premier numéro de port dans un premier ensemble de numéros de port associé à un lien de communication appartenant à un chemin de transmission utilisé pour transmettre ledit paquet dans lequel est inséré l'entête de premier type et insère une information représentative du premier numéro de port dans l'entête du premier type, l'information représentative dudit premier numéro de port étant utilisée par le composant réseau intermédiaire pour identifier (1105, 1113) des paquets échangés entre la source et le récepteur via le composant réseau intermédiaire dans le cadre de la procédure de poignée de mains en trois étapes.

13. Procédé selon la revendication 12, **caractérisé en ce que** ledit destinataire est la première unité réseau ou la deuxième unité réseau et **en ce que**, lorsque le destinataire est la seconde unité réseau, la seconde unité réseau met en oeuvre les étapes suivantes :
• créer (1103) un entête d'un troisième type, l'entête du troisième type comprenant une information représentative du premier numéro de port,
• obtenir (1103) un paquet destiné à la première unité réseau,
• insérer (1103) ledit entête de troisième type dans ledit paquet obtenu, et,
• transmettre (1103) ledit paquet en direction de la première unité réseau de sorte que la première unité réseau communique (1104) avec le composant réseau intermédiaire en utilisant un port de destination correspondant au premier numéro de port.

14. Procédé selon la revendication 13, **caractérisé en ce que** le premier paquet de synchronisation est envoyé (1104) à destination d'un port du composant réseau intermédiaire correspondant au premier numéro de port, une réception du premier paquet de synchronisation sur ledit port du composant réseau intermédiaire correspondant au premier numéro de port permettant au composant réseau intermédiaire de déterminer (1105) que ledit premier paquet de synchronisation se rapporte à la procédure de création du sous flux de paquets de données complémentaire et en déduit que le premier paquet de synchronisation doit être transmis en utilisant le lien de communication intermédiaire.

15. Procédé selon la revendication 14, **caractérisé en ce que**, lors de la création (1105) de l'entête de second type inséré dans le premier paquet de synchronisation, le composant réseau intermédiaire insère dans ledit entête de second type une information représentative d'un premier ensemble de numéros de port local dépendant du premier numéro de port, chaque unité réseau de ladite pluralité, par laquelle transite le premier paquet de synchronisation, définit (1106) un deuxième ensemble de numéros de port local, compris dans l'ensemble de numéros de port représenté par l'information représentative d'un ensemble de numéros de port local reçue dans ledit entête de second type, et remplace ladite information représentative d'un ensemble de numéros de port local contenue dans ledit entête de second type par une information représentative du deuxième ensemble de numéros de port local.

16. Procédé selon l'une quelconque des revendication 13 à 15, **caractérisé en ce que** le paquet d'accusé de réception est envoyé (1112) à destination d'un port du composant réseau intermédiaire correspondant au premier numéro de port, une réception du paquet d'accusé de réception sur ledit port du composant réseau intermédiaire correspondant au premier numéro de port permettant au composant réseau intermédiaire de déterminer (1113) que ledit paquet d'accusé de réception se rapporte à la procédure de création du sous flux de paquets de données complémentaire et en déduit que le paquet d'accusé de réception doit être transmis en utilisant le lien de communication intermédiaire.

17. Procédé selon l'une quelconque des revendications précédentes, **caractérisé en ce que**, pour fermer le sous flux complémentaire, le composant réseau intermédiaire effectue les étapes suivantes :
• obtenir (520, 820, 1301) un paquet ayant pour destinataire la première ou la deuxième unité réseau et compatible avec le protocole de transmission,
• créer (519, 819, 1300) un entête d'un quatrième type, l'entête de quatrième type étant représentatif d'une demande de fermeture du sous flux de données complémentaire,
• insérer (520, 820, 1301) ledit entête de quatrième type dans ledit paquet,
• transmettre (520, 820, 1301) ledit paquet en direction du destinataire de sorte à provoquer le lancement par la première ou la seconde unité réseau d'une procédure de fermeture du sous flux de données complémentaire.

18. Procédé selon la revendication 17 lorsqu'elle dépend des revendications 8 à 11, **caractérisé en ce que**, lors de la création de l'entête de quatrième type, une pluralité d'informations est insérée dans l'entête de quatrième type, la pluralité d'informations comprenant un identifiant d'une adresse associé au sous flux de paquets de données complémentaire, un identifiant de sous flux associé au sous flux de données complémentaire, une valeur indiquant quelle unité réseau doit lancer la procédure de fermeture du sous flux de paquets de données complémentaire, cette pluralité d'informations étant utilisée de sorte à fermer le sous flux complémentaire du côté de la première et de la deuxième unité réseau.

19. Procédé selon la revendication 17 lorsqu'elle dépend des revendications 12 à 16 **caractérisé en ce que**, lors de la création de l'entête de quatrième type, une pluralité d'informations est insérée dans l'entête de quatrième type, la pluralité d'informations comprenant un identifiant d'une adresse associé au sous flux de paquets de données complémentaire, une information représentative du premier numéro de port et une valeur indiquant quelle unité réseau doit lancer la procédure de fermeture du sous flux de paquets de données complémentaire, cette pluralité d'informations étant utilisée de sorte à fermer le sous flux complémentaire du côté de la première et de la deuxième unité réseau.

20. Procédé selon l'une quelconque des revendications précédentes, **caractérisé en ce que** l'ensemble de connexions comprend une connexion mono-lien, et **en ce que** le composant réseau intermédiaire relaie un sous flux d'une connexion multi-lien dans un flux d'une connexion mono-lien ou encapsule un sous flux d'une connexion multi-lien dans un flux d'une connexion mono-lien, la première et la troisième étape de la procédure de poignée de mains en trois étapes et/ou la seconde étape de la procédure de poignée de mains en trois étapes étant mises en oeuvre par le composant réseau intermédiaire.

21. Dispositif de type composant réseau intermédiaire apte à créer un sous flux de paquets de données complémentaire en complément d'un sous flux de paquets de données existant dans une connexion réseau, dite connexion réseau multi-lien, utilisant un protocole de transport adapté à un mode de communication multi-lien, la connexion réseau multi-lien étant mise en oeuvre dans un réseau de communication comprenant une pluralité d'unités réseau, une première unité réseau de la dite pluralité utilisant un ensemble de connexions comprenant ladite connexion réseau multi-lien pour communiquer avec une seconde unité réseau de ladite pluralité via ledit dispositif, **caractérisé en ce que** ledit dispositif comprend les moyens suivants mis en oeuvre suite à une ouverture d'un lien de communication intermédiaire à partir dudit dispositif et en direction de la deuxième unité réseau:
• des moyens pour obtenir (502, 802, 1102, 1301) un paquet ayant pour destinataire la première ou la deuxième unité réseau et compatible avec ledit protocole de transport,
• des moyens pour créer (501, 801, 1101, 1300) un entête d'un premier type, l'entête du premier type étant représentatif d'une demande de création dudit sous flux de paquets de données complémentaire, le sous flux de paquets de données complémentaire étant destiné à utiliser le lien de communication intermédiaire dans une phase de transfert de paquets de données suivant la création du sous flux de paquets de données complémentaire,
• des moyens pour insérer (502, 802, 1102, 1301) ledit entête de premier type dans ledit paquet,
• des moyens pour transmettre (501, 801, 1101, 1300) ledit paquet en direction du destinataire du paquet de sorte à provoquer le lancement, par la première ou la deuxième unité réseau, d'une procédure de création dudit sous flux de paquets de données complémentaire dans le cadre de ladite connexion réseau multi-lien.

22. Système de communication comprenant au moins un dispositif de type composant réseau intermédiaire selon la revendication 21 et une pluralité d'unités réseau comprenant une première et une deuxième unités réseau aptes à communiquer en utilisant un ensemble de connexions comprenant une connexion, dite connexion réseau multi-lien, utilisant un protocole de transport adapté à un mode de communication multi-lien, la première unité réseau comprenant les moyens suivants, mis en oeuvre suite à une ouverture d'un lien de communication intermédiaire à partir dudit dispositif de type composant réseau intermédiaire et en direction de la deuxième unité réseau :
• des moyens (504, 803, 1104, 1302) pour créer et transmettre un premier paquet de synchronisation en direction de la deuxième unité réseau via ledit dispositif de type composant réseau intermédiaire,
• des moyens (514, 811, 1112, 1308) pour créer et transmettre un paquet d'accusé de réception en direction de la deuxième unité réseau via ledit dispositif de type composant réseau intermédiaire en réponse à un deuxième paquet de synchronisation provenant de la deuxième unité réseau,
la deuxième unité réseau comprenant les moyens suivants, mis en oeuvre suite à l'ouverture dudit lien de communication intermédiaire :
• des moyens (509, 808, 1109, 1305) pour créer et transmettre un second paquet de synchronisation en direction de la première unité réseau et via ledit dispositif de type composant réseau intermédiaire, le second paquet de synchronisation étant apte à accuser réception du premier paquet de synchronisation,
au moins un paquet comprenant un entête d'un deuxième type comprend des informations provoquant une utilisation dudit lien de communication intermédiaire lors d'une phase de transfert de paquets de données dans le cadre du sous flux de paquets de données complémentaire.

23. Produit programme d'ordinateur, comportant des instructions pour mettre en oeuvre, par un dispositif, le procédé selon l'une quelconque des revendications 1 à 20 par un processeur du dispositif.

24. Moyens de stockage, stockant un programme d'ordinateur comportant des instructions pour mettre en oeuvre, par un dispositif, le procédé selon l'une quelconque des revendications 1 à 20 lorsque ledit programme est exécuté par un processeur du dispositif.

## Patentansprüche

1. Verfahren zur Erzeugung eines komplementären Teilstroms von Datenpaketen als Komplement eines existierenden Teilstroms von Datenpaketen in einer Netzverbindung, Multilink-Netzverbindung genannt, unter Verwendung eines Transportprotokolls, das an einen Multilink-Kommunikationsmodus angepasst ist, wobei die Multilink-Netzverbindung in einem Kommunikationsnetz realisiert wird, das eine Vielzahl von Netzeinheiten umfasst, wobei eine erste Netzeinheit dieser Vielzahl eine Gesamtheit von Verbindungen verwendet, welche die Multilink-Netzverbindung umfasst, um mit einer zweiten Netzeinheit dieser Vielzahl über eine dritte Netzeinheit dieser Vielzahl, Zwischen-Netzkomponente genannt, zu kommunizieren, **dadurch gekennzeichnet, dass** im Anschluss an eine Öffnung eines Zwischen-Kommunikationslinks von der Zwischen-Netzkomponente aus und in Richtung der zweiten Netzeinheit die Zwischen-Netzkomponente die folgenden Schritte durchführt:
• Gewinnen (502, 802, 1102, 1301) eines Pakets, dessen Empfänger die erste oder die zweite Netzeinheit ist und das mit dem Transportprotokoll kompatibel ist,
• Erzeugen (501, 801, 1101, 1300) eines Headers eines ersten Typs, wobei der Header des ersten Typs für eine Anforderung der Erzeugung des komplementären Teilstroms von Datenpaketen repräsentativ ist, wobei der komplementäre Teilstrom von Datenpaketen dazu bestimmt ist, den Zwischen-Kommunikationslink in einer Phase der Übertragung von Datenpaketen zu verwenden, die auf die Erzeugung des komplementären Teilstroms von Datenpaketen folgt,
• Einfügen (502, 802, 1102, 1301) des Headers vom ersten Typ in das Paket,
• Übertragen (502, 802, 1102, 1301) des Pakets in Richtung des Empfängers, um die Einleitung, durch die erste oder die zweite Netzeinheit, einer Prozedur zur Erzeugung des komplementären Teilstroms von Datenpaketen im Rahmen der Multilink-Netzverbindung hervorzurufen.

2. Verfahren nach Anspruch 1, **dadurch gekennzeichnet, dass** für jeden Teilstrom, der im Rahmen der Multilink-Netzverbindung erzeugt wird, die Zwischen-Netzkomponente eine Prozedur der beschleunigten Verarbeitung auf jedes Paket anwendet, das während Phasen der Übertragung von Datenpaketen unter Verwendung wenigstens eines der erzeugten Teilströme übertragen wird, und dadurch, dass die Zwischen-Netzkomponente die Prozedur der beschleunigten Verarbeitung für wenigstens einen der erzeugten Teilströme unterbricht, um zu ermöglichen, das Paket zu gewinnen, in welches der Header vom ersten Typ einzufügen ist, und dieses Paket, in welches der Header vom ersten Typ eingefügt worden ist, zu übertragen.

3. Verfahren nach Anspruch 1 oder 2, **dadurch gekennzeichnet, dass** die Prozedur zur Erzeugung des komplementären Teilstroms von Datenpaketen eine zwischen zwei Netzeinheiten der Vielzahl durchgeführte Handshake-Prozedur in drei Schritten umfasst, welche umfasst:
• einen ersten Schritt (504, 803, 1104, 1302) der Erzeugung und Übertragung eines ersten Synchronisationspakets in Richtung der zweiten Netzeinheit über die Zwischen-Netzkomponente,
• einen zweiten Schritt (509, 808, 1109, 1305) der Erzeugung und Übertragung eines zweiten Synchronisationspakets in Richtung der ersten Netzeinheit und über die Zwischen-Netzkomponente, wobei das zweite Synchronisationspaket geeignet ist, den Empfang des ersten Synchronisationspakets zu bestätigen,
• einen dritten Schritt (514, 811, 1112, 1308) der Erzeugung und Übertragung eines Empfangsbestätigungspakets in Richtung der zweiten Netzeinheit über die Zwischen-Netzkomponente,
wobei wenigstens ein Paket, das während der Handshake-Prozedur in drei Schritten ausgetauscht wird, einen Header eines zweiten Typs umfasst, der Informationen umfasst, welche die Verwendung des Zwischen-Kommunikationslinks während der Phase der Übertragung von Datenpaketen bewirken.

4. Verfahren nach Anspruch 3, **dadurch gekennzeichnet, dass** der Header vom zweiten Typ des ersten Synchronisationspakets von der ersten Netzeinheit erzeugt und in das erste Synchronisationspaket eingefügt (504, 803) wird.

5. Verfahren nach Anspruch 3, **dadurch gekennzeichnet, dass** der Header des zweiten Typs des ersten Synchronisationspakets von der Zwischen-Netzkomponente erzeugt und in das erste Synchronisationspaket eingefügt (1105) wird.

6. Verfahren nach Anspruch 5, **dadurch gekennzeichnet, dass** der Header des zweiten Typs des zweiten Synchronisationspakets durch die Zwischen-Netzkomponente aus dem zweiten Synchronisationspaket entfernt (1111) wird, bevor es zu der ersten Netzeinheit übertragen wird.

7. Verfahren nach Anspruch 6, **dadurch gekennzeichnet, dass** der Header des zweiten Typs des Empfangsbestätigungspakets von der Zwischen-Netzkomponente erzeugt und in das Empfangsbestätigungspaket eingefügt (1113) wird.

8. Verfahren nach einem der Ansprüche 1 bis 4, **dadurch gekennzeichnet, dass** bei der Erzeugung (501, 801, 1300) des Headers des ersten Typs die Zwischen-Netzkomponente eine zufällige Folgenummer bestimmt und diese zufällige Folgenummer in den Header des ersten Typs einfügt, wobei die zufällige Folgenummer von der Zwischen-Netzkomponente verwendet wird, um Pakete zu identifizieren (506, 512, 516, 804, 810, 812, 1303, 1307, 1309), die zwischen der Quelle und dem Empfänger über die Zwischen-Netzkomponente im Rahmen der Handshake-Prozedur in drei Schritten ausgetauscht werden.

9. Verfahren nach Anspruch 8, wenn abhängig von Anspruch 4, **dadurch gekennzeichnet, dass** bei der Erzeugung des ersten Synchronisationspakets der Wert der zufälligen Folgenummer, der von der Zwischen-Netzkomponente bestimmt wurde, in ein erstes Feld des Headers vom zweiten Typ kopiert wird, so dass, wenn die Zwischen-Netzkomponente später ein erstes Synchronisationspaket empfängt, das ein erstes Feld umfasst, dessen Wert gleich dem Wert der zufälligen Folgenummer ist, die Zwischen-Netzkomponente bestimmt (506, 804, 1303), dass sich das erste Synchronisationspaket auf die Prozedur der Erzeugung des komplementären Teilstroms von Datenpaketen bezieht, und daraus ableitet, dass das erste Synchronisationspaket unter Verwendung des Zwischen-Kommunikationslinks übertragen werden muss.

10. Verfahren nach Anspruch 9, **dadurch gekennzeichnet, dass** bei der Erzeugung des ersten Synchronisationspakets eine von der ersten Netzeinheit definierte Teilstromkennung dem komplementären Teilstrom zugewiesen wird und in ein zweites Feld des Headers vom zweiten Typ eingefügt wird, und dadurch, dass beim Empfang, durch die Zwischen-Netzkomponente, des ersten Synchronisationspakets, welches das erste Feld umfasst, dessen Wert gleich dem Wert der zufälligen Folgenummer ist, die Zwischen-Netzkomponente die von der ersten Netzeinheit definierte Teilstromkennung, die in das zweite Feld des Headers vom zweiten Typ eingefügt wurde, dem Zwischen-Link zuordnet, so dass jedes Paket, das von der ersten Netzeinheit während der Phase der Übertragung von Datenpaketen übertragen wird, den Zwischen-Kommunikationslink verwendet.

11. Verfahren nach Anspruch 10, **dadurch gekennzeichnet, dass** bei der Erzeugung des ersten Synchronisationspakets der Zwischen-Teilstrom einer Adresse der ersten Netzeinheit zugeordnet wird, wobei die Adresse von dem existierenden Teilstrom von Datenpaketen verwendet worden ist, und eine Kennung der Adresse der ersten Netzeinheit in ein drittes Feld des Headers vom zweiten Typ eingefügt wird, und dadurch, dass beim Empfang des ersten Synchronisationspakets durch die Zwischen-Netzkomponente die Zwischen-Netzkomponente die Kennung der Adresse der ersten Netzeinheit der Teilstromkennung zuordnet.

12. Verfahren nach einem der Ansprüche 5 bis 7, **dadurch gekennzeichnet, dass** bei der Erzeugung (1101) des Headers des ersten Typs die Zwischen-Netzkomponente eine erste Portnummer in einer ersten Gesamtheit von Portnummern bestimmt, die einer Kommunikationsverbindung zugeordnet ist, die zu einem Übertragungsweg gehört, der verwendet wird, um das Paket zu übertragen, in welches der Header von ersten Typ eingefügt ist und eine für die erste Portnummer repräsentative Information in den Header des ersten Typs eingefügt ist, wobei die für die erste Portnummer repräsentative Information von der Zwischen-Netzkomponente verwendet wird, um Pakete zu identifizieren (1105, 1113), die zwischen der Quelle und dem Empfänger über die Zwischen-Netzkomponente im Rahmen der Handshake-Prozedur in drei Schritten ausgetauscht werden.

13. Verfahren nach Anspruch 12, **dadurch gekennzeichnet, dass** der Empfänger die erste Netzeinheit oder die zweite Netzeinheit ist, und dadurch, dass, wenn der Empfänger die zweite Netzeinheit ist, die zweite Netzeinheit die folgenden Schritte durchführt:
• Erzeugen (1103) eines Headers eines dritten Typs, wobei der Header des dritten Typs eine für die erste Portnummer repräsentative Information umfasst,
• Gewinnen (1103) eines Pakets, das für die erste Netzeinheit bestimmt ist,
• Einfügen (1103) des Headers vom dritten Typ in das gewonnene Paket, und
• Übertragen (1103) des Pakets in Richtung der ersten Netzeinheit, derart, dass die erste Netzeinheit mit der Zwischen-Netzkomponente unter Verwendung eines Ziel-Ports kommuniziert (1104), welcher der ersten Portnummer entspricht.

14. Verfahren nach Anspruch 13, **dadurch gekennzeichnet, dass** das erste Synchronisationspaket an einen Port der Zwischen-Netzkomponente gesendet wird (1104), welcher der ersten Portnummer entspricht, wobei ein Empfang des ersten Synchronisationspakets an dem Port der Zwischen-Netzkomponente, welcher der ersten Portnummer entspricht, der Zwischen-Netzkomponente ermöglicht zu bestimmen (1105), dass sich das erste Synchronisationspaket auf die Prozedur der Erzeugung des komplementären Teilstroms von Datenpaketen bezieht, und daraus abzuleiten, dass das erste Synchronisationspaket unter Verwendung des Zwischen-Kommunikationslinks übertragen werden muss.

15. Verfahren nach Anspruch 14, **dadurch gekennzeichnet, dass** bei der Erzeugung (1105) des Headers vom zweiten Typ, der in das erste Synchronisationspaket eingefügt wird, die Zwischen-Netzkomponente in den Header vom zweiten Typ eine Information einfügt, die für eine erste lokale Gesamtheit von Portnummern repräsentativ ist, die von der ersten Portnummer abhängt, jede Netzeinheit der Vielzahl, welche von dem ersten Synchronisationspaket durchquert wird, eine zweite lokale Gesamtheit von Portnummern definiert (1106), die in der Gesamtheit von Portnummern enthalten ist, die durch die für eine lokale Gesamtheit von Portnummern repräsentative Information repräsentiert wird, die in dem Header vom zweiten Typ empfangen wird, und diese für eine lokale Gesamtheit von Portnummern repräsentative Information, die in dem Header vom zweiten Typ enthalten ist, durch eine Information ersetzt, die für die zweite lokale Gesamtheit von Portnummern repräsentativ ist.

16. Verfahren nach einem der Ansprüche 13 bis 15, **dadurch gekennzeichnet, dass** das Empfangsbestätigungspaket an einen Port der Zwischen-Netzkomponente gesendet wird (1112), welcher der ersten Portnummer entspricht, wobei ein Empfang des Empfangsbestätigungspakets an dem Port der Zwischen-Netzkomponente, welcher der ersten Portnummer entspricht, der Zwischen-Netzkomponente ermöglicht zu bestimmen (1113), dass sich das Empfangsbestätigungspaket auf die Prozedur der Erzeugung des komplementären Teilstroms von Datenpaketen bezieht, und daraus abzuleiten, dass das Empfangsbestätigungspaket unter Verwendung des Zwischen-Kommunikationslinks übertragen werden muss.

17. Verfahren nach einem der vorhergehenden Ansprüche, **dadurch gekennzeichnet, dass**, um den komplementären Teilstrom zu schließen, die Zwischen-Netzkomponente die folgenden Schritte durchführt:
• Gewinnen (520, 820, 1301) eines Pakets, dessen Empfänger die erste oder die zweite Netzeinheit ist und das mit dem Übertragungsprotokoll kompatibel ist,
• Erzeugen (519, 819, 1300) eines Headers eines vierten Typs, wobei der Header vom vierten Typ für eine Anforderung des Schließens des komplementären Teilstroms von Daten repräsentativ ist,
• Einfügen (520, 820, 1301) des Headers vom vierten Typ in das Paket,
• Übertragen (520, 820, 1301) des Pakets in Richtung des Empfängers, um die Einleitung, durch die erste oder die zweite Netzeinheit, einer Prozedur zum Schließen des komplementären Teilstroms von Daten hervorzurufen.

18. Verfahren nach Anspruch 17, wenn abhängig von den Ansprüchen 8 bis 11, **dadurch gekennzeichnet, dass** bei der Erzeugung des Headers vom vierten Typ eine Vielzahl von Informationen in den Header vom vierten Typ eingefügt wird, wobei die Vielzahl von Informationen eine Kennung einer Adresse, die dem komplementären Teilstrom von Datenpaketen zugeordnet ist, eine Teilstromkennung, die dem komplementären Teilstrom von Daten zugeordnet ist, und einen Wert, der angibt, welche Netzeinheit die Prozedur zum Schließen des komplementären Teilstroms von Datenpaketen einleiten muss, umfasst, wobei diese Vielzahl von Informationen verwendet wird, um den komplementären Teilstrom seitens der ersten und der zweiten Netzeinheit zu schließen.

19. Verfahren nach Anspruch 17, wenn abhängig von den Ansprüchen 12 bis 16, **dadurch gekennzeichnet, dass** bei der Erzeugung des Headers vom vierten Typ eine Vielzahl von Informationen in den Header vom vierten Typ eingefügt wird, wobei die Vielzahl von Informationen eine Kennung einer Adresse, die dem komplementären Teilstrom von Datenpaketen zugeordnet ist, eine Information, die für die erste Portnummer repräsentativ ist, und einen Wert, der angibt, welche Netzeinheit die Prozedur zum Schließen des komplementären Teilstroms von Datenpaketen einleiten muss, umfasst, wobei diese Vielzahl von Informationen verwendet wird, um den komplementären Teilstrom seitens der ersten und der zweiten Netzeinheit zu schließen.

20. Verfahren nach einem der vorhergehenden Ansprüche, **dadurch gekennzeichnet, dass** die Gesamtheit von Verbindungen eine Monolink-Verbindung umfasst, und dadurch, dass die Zwischen-Netzkomponente einen Teilstrom einer Multilink-Verbindung in einem Strom einer Monolink-Verbindung weiterleitet oder einen Teilstrom einer Multilink-Verbindung in einem Strom einer Monolink-Verbindung einkapselt, wobei der erste und der dritte Schritt der Handshake-Prozedur in drei Schritten und/oder der zweite Schritt der Handshake-Prozedur in drei Schritten von der Zwischen-Netzkomponente durchgeführt werden.

21. Vorrichtung vom Typ einer Zwischen-Netzkomponente, die in der Lage ist, einen komplementären Teilstrom von Datenpaketen als Komplement eines existierenden Teilstroms von Datenpaketen in einer Netzverbindung, Multilink-Netzverbindung genannt, unter Verwendung eines Transportprotokolls, das an einen Multilink-Kommunikationsmodus angepasst ist, zu erzeugen, wobei die Multilink-Netzverbindung in einem Kommunikationsnetz realisiert wird, das eine Vielzahl von Netzeinheiten umfasst, wobei eine erste Netzeinheit dieser Vielzahl eine Gesamtheit von Verbindungen verwendet, welche die Multilink-Netzverbindung umfasst, um mit einer zweiten Netzeinheit dieser Vielzahl über die Vorrichtung zu kommunizieren, **dadurch gekennzeichnet, dass** die Vorrichtung die folgenden Mittel umfasst, die im Anschluss an eine Öffnung eines Zwischen-Kommunikationslinks von der Vorrichtung aus und in Richtung der zweiten Netzeinheit eingesetzt werden:
• Mittel zum Gewinnen (502, 802, 1102, 1301) eines Pakets, dessen Empfänger die erste oder die zweite Netzeinheit ist und das mit dem Transportprotokoll kompatibel ist,
• Mittel zum Erzeugen (501, 801, 1101, 1300) eines Headers eines ersten Typs, wobei der Header des ersten Typs für eine Anforderung der Erzeugung des komplementären Teilstroms von Datenpaketen repräsentativ ist, wobei der komplementäre Teilstrom von Datenpaketen dazu bestimmt ist, den Zwischen-Kommunikationslink in einer Phase der Übertragung von Datenpaketen zu verwenden, die auf die Erzeugung des komplementären Teilstroms von Datenpaketen folgt,
• Mittel zum Einfügen (502, 802, 1102, 1301) des Headers vom ersten Typ in das Paket,
• Mittel zum Übertragen (501, 801, 1101, 1300) des Pakets in Richtung des Empfängers des Pakets, um die Einleitung, durch die erste oder die zweite Netzeinheit, einer Prozedur zur Erzeugung des komplementären Teilstroms von Datenpaketen im Rahmen der Multilink-Netzverbindung hervorzurufen.

22. Kommunikationssystem, welches wenigstens eine Vorrichtung vom Typ einer Zwischen-Netzkomponente nach Anspruch 21 und eine Vielzahl von Netzeinheiten umfasst, die eine erste und eine zweite Netzeinheit umfasst, die in der Lage sind, unter Verwendung einer Gesamtheit von Verbindungen, die eine Multilink-Netzverbindung genannte Verbindung umfasst, unter Verwendung eines Transportprotokolls, das an einen Multilink-Kommunikationsmodus angepasst ist, zu kommunizieren, wobei die erste Netzeinheit die folgenden Mittel umfasst, die im Anschluss an eine Öffnung eines Zwischen-Kommunikationslinks von der Vorrichtung vom Typ einer Zwischen-Netzkomponente aus und in Richtung der zweiten Netzeinheit eingesetzt werden:
• Mittel (504, 803, 1104, 1302) zum Erzeugen und Übertragen eines ersten Synchronisationspakets in Richtung der zweiten Netzeinheit über die Vorrichtung vom Typ einer Zwischen-Netzkomponente,
• Mittel (514, 811, 1112, 1308) zum Erzeugen und Übertragen eines Empfangsbestätigungspakets in Richtung der zweiten Netzeinheit über die Vorrichtung vom Typ einer Zwischen-Netzkomponente in Reaktion auf ein von der zweiten Netzeinheit stammendes zweites Synchronisationspaket,
wobei die zweite Netzeinheit die folgenden Mittel umfasst, die im Anschluss an die Öffnung des Zwischen-Kommunikationslinks eingesetzt werden:
• Mittel (509, 808, 1109, 1305) zum Erzeugen und Übertragen eines zweiten Synchronisationspakets in Richtung der ersten Netzeinheit und über die Vorrichtung vom Typ einer Zwischen-Netzkomponente, wobei das zweite Synchronisationspaket geeignet ist, den Empfang des ersten Synchronisationspakets zu bestätigen,
wobei wenigstens ein Paket einen Header eines zweiten Typs umfasst, der Informationen umfasst, welche eine Verwendung des Zwischen-Kommunikationslinks während einer Phase der Übertragung von Datenpaketen im Rahmen des komplementären Teilstroms von Datenpaketen bewirken.

23. Computerprogrammprodukt, welches Anweisungen zur Durchführung, durch eine Vorrichtung, des Verfahrens nach einem der Ansprüche 1 bis 20 durch einen Prozessor der Vorrichtung umfasst.

24. Speichermittel, welche ein Computerprogramm speichern, das Anweisungen zur Durchführung, durch eine Vorrichtung, des Verfahrens nach einem der Ansprüche 1 bis 20, wenn das Programm von einem Prozessor der Vorrichtung ausgeführt wird, umfasst.

## Claims

1. A method for creating a supplementary data packet subflow as a supplement to a data packet subflow existing in a network connection, referred to as a multipath network connection, using a transport protocol suited to a multipath communication mode, the multipath network connection being implemented in a communication network comprising a plurality of network units, a first network unit in said plurality using a connection set comprising said multipath network connection for communicating with a second network unit in said plurality via a third network unit in said plurality, referred to as an intermediate network component, **characterised in that**, following an opening of an intermediate communication path from the intermediate network component and in the direction of the second network unit, said intermediate network component implements the following steps:
• obtaining (502, 802, 1102, 1301) a packet intended for the first or second network unit and compatible with said transport protocol;
• creating (501, 801, 1101, 1300) a header of a first type, the header of the first type representing a request to create said supplementary data packet subflow, the supplementary data packet subflow being intended to use the intermediate communication path in a data packet transfer phase following the creation of the supplementary data packet subflow;
• inserting (502, 802, 1102, 1301) said header of the first type in said packet;
• transmitting (502, 802, 1102, 1301) said packet in the direction of said destination so as to cause the initiation, by the first or second network unit, of a procedure for creating said supplementary data packet subflow in the context of said multipath network connection.

2. The method according to claim 1, **characterized in that**, for each subflow created in the context of said multipath network connection, the intermediate network component applies an accelerated-processing procedure to each packet transmitted during data packet transfer phases using at least one of said subflows created, and **in that** the intermediate network component interrupts the accelerated-processing procedure for at least one of the subflows created in order to allow to obtain said packet in which the header of the first type is to be inserted and to transmit said packet in which the header of the first type has been inserted.

3. The method according to claim 1 or 2, **characterized in that** the procedure for creating the supplementary data packet subflow comprises a three-way handshake procedure implemented between two network units in said plurality comprising:
• a first step (504, 803, 1104, 1302) of creating and transmitting a first synchronisation packet in the direction of the second network unit via the intermediate network component;
• a second step (509, 809, 1109, 1305) of creating and transmitting a second synchronisation packet in the direction of the first network unit and via the intermediate network component, the second synchronisation packet being able to acknowledge receipt of the first synchronisation packet;
• a third step (514, 811, 1112, 1308) of creating and transmitting a receipt-acknowledgement packet in the direction of the second network unit via the intermediate network;
at least one packet exchanged during the three-way handshake procedure comprises a header of a second type comprising information causing the use of said intermediate communication path during the data packet transfer phase.

4. The method according to claim 3, **characterized in that** the header of the second type of the first synchronisation packet is created and inserted by the first network unit (504, 803) in said first synchronisation packet.

5. The method according to claim 3, **characterized in that** the header of the second type of the first synchronisation packet is created and inserted (1105) by the intermediate network component in said first synchronisation packet.

6. The method according to claim 5, **characterized in that** the header of the second type of the second synchronisation packet is deleted (1111) from said second synchronisation packet by the intermediate network component before being transmitted to the first network unit.

7. The method according to claim 6, **characterized in that** the header of the second type of the receipt-acknowledgement packet is created and inserted (1113) in the receipt-acknowledgement packet by the intermediate network component.

8. The method according to any one of claims 1 to 4, **characterized in that**, when the header of the first type is created (501, 801, 1300), the intermediate network component determines a random sequence number and inserts said random sequence number in the header of the first type, said random sequence number being used by the intermediate network component to identify (506, 512, 516, 804, 810, 812, 1303, 1307, 1309) packets exchanged between the source and the receiver via the intermediate network component in the context of the three-way handshake procedure.

9. The method according to claim 8 when it is dependent on claim 4, **characterized in that**, when the first synchronisation package is created, the random sequence number value determined by the intermediate network component is copied into a first field of the header of the second type, so that, when the intermediate network component subsequently receives a first synchronisation packet comprising a first field the value of which is equal to the value of said random sequence number, the intermediate network component determines (506, 804, 1303) that said first synchronisation packet relates to the procedure for creating the supplementary data packet subflow and deduces from this that the first synchronisation packet must be transmitted using the intermediate communication path.

10. The method according to claim 9, **characterized in that**, when the first synchronisation packet is created, a subflow identifier defined by the first network unit is attributed to the supplementary subflow and is inserted in a second field of the header of the second type, and **in that**, on reception, by the intermediate network component, of the first synchronisation packet comprising the first field the value of which is equal to the value of said random sequence number, the intermediate network component associates the subflow identifier, defined by the first network unit, inserted in the second field of the header of the second type, with the intermediate path so that each packet transmitted by the first network unit during the data packet transfer phase uses the intermediate communication path.

11. The method according to claim 10, **characterized in that**, when the first synchronisation packet is created, the intermediate subflow is associated with an address of the first network, the address having been used by the existing data packet subflow, and an identifier of the address of the first network unit is inserted in a third field of the header of the second type, and **in that**, when the first synchronisation packet is received by the intermediate network component, the intermediate network component associates the identifier of the address of the first network unit with the subflow identifier.

12. The method according to any one of claims 5 to 7, **characterized in that**, when the header of the first type is created (1101), the intermediate network component determines a first port number in a first set of port numbers associated with a communication path belonging to a transmission path used to transmit said packet in which the header of the first type is inserted and inserts information representing the first port number in the header of the first type, the information representing said first port number being used by the intermediate network component to identify (1105, 1113) packets exchanged between the source and the receiver via the intermediate network component in the context of the three-way handshake procedure.

13. The method according to claim 12, **characterized in that** said destination is the first network unit or the second network unit and **in that**, when the destination is the second network unit, the second network unit implements the following steps:
• creating (1103) a header of a third type, the header of the third type comprising information representing the first port number;
• obtaining (1103) a packet intended for the first network unit;
• inserting (1103) said header of the first type in said packet obtained; and
• transmitting (1103) said packet in the direction of the first network unit so that the first network unit communicates (1104) with the intermediate network component using a destination port corresponding to the first port number.

14. The method according to claim 13, **characterized in that** the first synchronisation packet is sent (1104) to a port of the intermediate network component corresponding to the first port number, reception of the first synchronisation packet on said port of the intermediate network component corresponding to the first port number enabling the intermediate network component to determine (1105) that said first synchronisation packet relates to the procedure for creating the supplementary data packet subflow and deduces from this that the first synchronisation packet must be transmitted using the intermediate communication path.

15. The method according to claim 14, **characterized in that**, when the header of the second type inserted in the first synchronisation packet is created (1105), the intermediate network component inserts in said header of the second type information representing a first set of local port numbers dependent on the first port number, each network unit in said plurality, through which the first synchronisation packet passes, defines (1106) a second set of local port numbers included in the set of port numbers represented by the information representing a set of local port numbers received in said header of the second type, and replaces said information representing a set of local port numbers contained in said header of the second type with information representing the second set of local port numbers.

16. The method according to any one of claims 13 to 15, **characterized in that** the receipt-acknowledgement packet is sent (1112) to a port of the intermediate network component corresponding to the first port number, receipt of the receipt-acknowledgement packet on said port of the intermediate network component corresponding to the first port number enabling the intermediate component to determine (1113) that said receipt-acknowledgement packet relates to the procedure for creating the supplementary data packet subflow and deduces from this that the receipt-acknowledgement packet must be transmitted using the intermediate communication path.

17. The method according to any one of the preceding claims, **characterized in that**, to close the supplementary subflow, the intermediate network component performs the following steps:
• obtaining (520, 820, 1301) a data packet the destination of which is the first or second network unit and compatible with the transmission protocol;
• creating (519, 819, 1300) a header of a fourth type, the header of the fourth type representing a request to close the supplementary data subflow,
• inserting (520, 820, 1301) said header of the fourth type in said packet;
• transmitting (520, 820, 1301) said packet in the direction of the destination so as to cause the initiation, by the first or second network unit, of a procedure to close the supplementary data subflow.

18. The method according to claim 17 when it is dependent on claims 8 to 11, **characterized in that**, when the header of the fourth type is created, a plurality of items of information are inserted in the header of the fourth type, the plurality of items of information comprising an identifier of an address associated with the supplementary data packet subflow, an identifier of the subflow associated with the supplementary data subflow, and a value indicating which network unit must initiate the procedure for closing the supplementary data packet subflow, this plurality of items of information being used so as to close the supplementary subflow at the first and second network units.

19. The method according to claim 17 when it is dependent on claims 12 to 16, **characterized in that**, when the header of the fourth type is created, a plurality of items of information are inserted in the header of the fourth type, the plurality of items of information comprising an identifier of an address associated with the supplementary data packet subflow, information representing the first port number and a value indicating which network unit must initiate the procedure for closing the supplementary data packet subflow, this plurality of items of information being used so as to close the supplementary subflow at the first and second network units.

20. The method according to any one of the preceding claims, **characterised in that** the set of connections comprises a single-path connection, and **in that** the intermediate network component relays a subflow of a multipath connection in a flow of a single-path connection or encapsulates a subflow of a multipath connection in a flow of a single-path connection, the first and third steps of the three-way handshake procedure and/or the second step of the three-way handshake procedure being implemented by an intermediate network component.

21. A device of the intermediate network component type able to create a supplementary data packet subflow as a supplement to a data packet subflow existing in a network connection, referred to as a multipath network connection, using a transport protocol suited to a multipath communication mode, the multipath network connection being used in a communication network comprising a plurality of network units, a first network unit in said plurality using a set of connections comprising said multipath network connection to communicate with a second network unit in said plurality via said device, **characterized in that** said device comprises the following means used following the opening of an intermediate communication path from said device and in the direction of the second network unit:
• means for obtaining (502, 802, 1102, 1301) a packet destined for the first or second network unit and compatible with said transport protocol;
• means for creating (501, 801, 1101, 1300) a header of a first type, the header of the first type representing a request to create said supplementary data packet subflow, the supplementary data packet subflow being intended to use the intermediate communication path in a data packet transfer phase following the creation of the supplementary data packet subflow;
• means for inserting (502, 802, 1102, 1301) said header of the first type in said packet;
• means for transmitting (502, 802, 1102, 1301) said packet in the direction of the destination of the packet so as to cause the initiation, via the first or second network unit, of a procedure of creating said supplementary data packet subflow in the context of said multipath network connection.

22. A communication system comprising at least one device of the intermediate network component type according to claim 21 and a plurality of network units comprising first and second network units able to communicate using a set of connections comprising a connection, referred to as a multipath network connection, using a transport protocol suited to a multipath communication mode, the first network unit comprising the following means used following the opening of an intermediate communication path from said device of the intermediate network component type and in the direction of the second network unit:
• means (504, 803, 1104, 1302) for creating and transmitting a first synchronisation packet in the direction of the second network unit via said device of the intermediate network component type;
• means for (514, 811, 1112, 1308) for creating and transmitting a receipt-acknowledgement packet in the direction of the second network unit via said device of the intermediate network component type in response to a second synchronisation packet coming from the second network unit;
the second network unit comprising the following means, used following the opening of said intermediate communication path:
• means (509, 809, 1109, 1305) for creating and transmitting a second synchronisation packet in the direction of the first network unit and via said device of the intermediate network component type, the second synchronisation packet being able to acknowledge receipt of the first synchronisation packet;
at least one packet comprising a header of a second type comprising information causing the use of said intermediate communication path during a data packet transfer phase in the context of the supplementary data packet subflow.

23. A computer program product containing instructions for implementation, by a device, of the method according to any one of claims 1 to 20 by a processor of the device.

24. Storage means storing a computer program containing instructions for implementation, by a device, of the method according to any one of claims 1 to 20 when said program is executed by a processor of the device.
